# EUROPÄISCHE PATENTSCHRIFT

(11) **EP 3 312 662 B1**
(45) Veröffentlichungstag und Bekanntmachung des Hinweises auf die Patenterteilung: **17.07.2019**
(21) Anmeldenummer: 16195142.1
(22) Anmeldetag: 21.10.2016
(51) Int. Cl.: G02C 7/02, B29D 11/00

(54) **BRILLENGLAS UND VERFAHREN ZU DESSEN HERSTELLUNG**
BRILLENGLAS UND VERFAHREN ZU DESSEN HERSTELLUNG
BRILLENGLAS UND VERFAHREN ZU DESSEN HERSTELLUNG

(43) Veröffentlichungstag der Anmeldung: 25.04.2018
(73) Patentinhaber: Carl Zeiss Vision International GmbH, 73430 Aalen (DE)
(72) Erfinder: GLÖGE, Thomas, 73614 Schorndorf (DE); GROMOTKA, Jeremias, 73433 Aalen (DE); VON BLANCKENHAGEN, Bernhard, 73433 Aalen (DE); MESCHENMOSER, Ralf, 73457 Essingen (DE); TOTZECK, Michael, 73525 Schwäbisch Gmünd (DE); HAIDL, Markus, 73431 Aalen (DE)
(74) Vertreter: Carl Zeiss AG - Patentabteilung

(56) Entgegenhaltungen:
- EP-A1- 0 028 974
- EP-A1- 0 028 975
- EP-A1- 1 918 760
- EP-A1- 2 437 084
- EP-A2- 0 182 503
- WO-A2-2009/041707
- DE-A1-102013 222 232
- US-A- 3 998 531
- US-A1- 2003 003 295
- US-A1- 2005 046 957
- US-A1- 2006 269 741
- US-A1- 2007 076 167
- US-A1- 2015 301 253
- US-A1- 2016 161 761

## Beschreibung

Die vorliegende Erfindung betrifft ein Brillenglas umfassend wenigstens die Komponenten A, B und C, wobei wenigstens die Komponente A ein Dünnstglas umfasst. Weiterhin betrifft die vorliegende Erfindung wenigstens ein Verfahren zur Herstellung eines derartigen Brillenglases. Des Weiteren betrifft die Erfindung die Verwendung eines Dünnstglases zur Herstellung eines Brillenglases umfassend wenigstens die Komponenten A, B und C.

Bei Brillengläsern unterscheidet man zwischen Brillengläsern ohne nominelle dioptrische Wirkung und Korrektions-Brillengläsern, also Brillengläsern mit dioptrischer Wirkung. Dioptrische Wirkung ist nach der DIN EN ISO 13666 der Sammelbegriff für die fokussierende und die prismatische Wirkung eines Brillenglases.

Bei Korrektions-Brillengläsern unterscheidet man weiterhin zwischen Einstärken-Brillengläsern und Mehrstärken-Brillengläsern. Ein Einstärken-Brillenglas ist ein Brillenglas, bei dem nur eine dioptrische Wirkung vorhanden ist. Ein Mehrstärken-Brillenglas ist ein Brillenglas, bei dem zwei oder mehr verschiedene Bereiche mit unterschiedlichen dioptrischen Wirkungen im Brillenglas vorhanden sind.

Welche Form das Brillenglas auf seiner Vorderfläche und/oder Rückfläche erhalten muss, um die gewünschte optische Korrektur zu erhalten, wird maßgeblich von dem Werkstoff, aus welchem das Brillenglas gefertigt wird, bestimmt. Wichtigster Parameter ist hierbei der Brechungsindex des eingesetzten Werkstoffs. Während in der Vergangenheit Brillengläser vorwiegend aus mineralischen Gläsern, insbesondere Krongläsern (Abbe-Zahl > 55) und Flintgläsern (Abbe-Zahl < 50) hergestellt wurden, sind mittlerweile Brillengläser aus einer Vielzahl an organischen Materialien erhältlich. Der Brechungsindex der für Brillengläser geeigneten mineralischen Gläser kann höher sein als der Brechungsindex der für Brillengläser verwendbaren organischen Materialien. Brillengläser basierend auf mineralischen Gläsern zeichnen sich insbesondere durch ihre hohe Kratzfestigkeit und gute Chemikalienbeständigkeit aus. Im Vergleich hierzu zeichnen sich Brillengläser basierend auf organischen Materialien insbesondere durch ihr geringeres spezifisches Gewicht und ihre hohe Bruchfestigkeit aus.

Brillengläser basierend auf mineralischen Gläsern werden regelmäßig durch maschinelle mechanisch abrasive Bearbeitung eines Brillenglasrohlings erzeugt. Bei einem Brillenglasrohling entspricht weder die Vorderfläche noch die Rückfläche bereits den endgültigen, optisch wirksamen Zielflächen. Die für die Anordnung auf der Objektseite bestimmte optische Fläche eines Brillenglases wird als Vorderfläche bezeichnet, die für die Anordnung auf der Augenseite bestimmte optische Fläche eines Brillenglases wird Rückfläche genannt. Die dazwischen liegende entweder unmittelbar eine Kante bildende oder mittelbar über eine Kantenfläche einendseitig an die Vorderfläche und andernendseitig an die Rückfläche angrenzende Fläche bezeichnet man als Zylinderrandfläche. Die vorstehend definierten Begriffe Vorderfläche, Rückfläche und Zylinderrandfläche werden im Folgenden für Brillenglas-Halbfabrikate und Brillenglas-Fertigfabrikate analog verwendet.

Brillengläser basierend auf organischen Materialien werden beispielsweise als Brillenglas-Halbfertigfabrikate mit sphärischen, rotationssymmetrisch asphärischen oder progressiven Vorderflächen in Massenfertigung in Urformen mit Vorder- und Rückflächenformschalen, die mittels eines Dichtrings einen Hohlraum bildend voneinander beabstandet sind, abgegossen, wie dies z.B. in JP 2008191186 A beschrieben ist. Die Rückfläche eines so hergestellten Brillenglas-Halbfabrikats kann beispielsweise maschinell mechanisch abrasiv unter Erhalt eines Brillenglas-Fertigfabrikats bearbeitet werden.

Brillenglas-Halbfertigfabrikate, auch als Halbfertigfabrikate, Halbfabrikate oder Halbfertigprodukte bezeichnet, sind Brillenglasrohlinge, deren Vorderfläche oder Rückfläche bereits der endgültigen, optisch wirksamen Zielfläche entspricht. Brillenglas-Fertigfabrikate, auch als Fertigfabrikate, Fertigprodukte oder fertige Brillengläser bezeichnet, sind Brillengläser, deren Vorder- und Rückfläche bereits die endgültige, optisch wirksame Zielfläche ist. Brillenglas-Fertigfabrikate können entweder beispielsweise als Brillenglas-Fertigfabrikate beispielsweise in Urformen mit Vorder- und Rückflächenformschalen, die mittels eines Dichtrings einen Hohlraum bildend voneinander beabstandet sind, abgegossen oder mittels eines Rx-Prozesses gefertigt werden. Brillenglas-Fertigfabrikate werden in der Regel noch formgerandet, d.h. durch Randbearbeitung in die endgültige, an die Brillenfassung angepasste Größe und Form gebracht. Unter Rx-Prozess wird die auftragsspezifische Rezeptfertigung entsprechend der Verschreibungsdaten für einen Brillenträger verstanden. Als Ausgangsmaterial dienen Brillenglas-Halbfabrikate.

EP 0 182 503 A2 offenbart ein ophthalmisches Kompositbrillenglas, welches objektseitig eine dünne Glasschicht mit einer Dicke von 0,5 mm bis 2,0 mm und augenseitig eine Kunststoffschicht umfasst. Die Glasschicht und die Kunststoffschicht sind durch einen hochelastischen Klebstoff miteinander verbunden. Die Rückfläche der Glasschicht hat hier eine andere Krümmung als die Vorderfläche der Kunststoffschicht. Die dadurch insbesondere am Rand entstehende Lücke wird von dem eingesetzten Klebstoff ausgefüllt.

Aufgabe der vorliegenden Erfindung war es, ein Brillenglas bereitzustellen, welches einen besonderen Schutz für Funktionsschichten des Brillenglases bietet. Bei einer Ausführungsform soll das Brillenglas außerdem die Vorteile von Brillengläsern basierend auf mineralischen Gläsern und die Vorteile von Brillengläsern basierend auf organischen Materialien in einem einzigen Brillenglas vereinen. Insbesondere soll bei dieser Ausführungsform ein Brillenglas mit hoher Kratzfestigkeit und gleichzeitig einem geringen spezifischen Gewicht zur Verfügung gestellt werden. Weiterhin soll ein einfaches Verfahren zur Herstellung von Brillengläsern mit geschützten Funktionsschichten bereitgestellt werden.

Diese Aufgabe wurde gelöst durch Bereitstellung eines Brillenglases umfassend, ausgehend von der objektseitigen Vorderfläche des Brillenglases zur gegenüberliegenden Rückfläche des Brillenglases, wenigstens
a) eine Komponente A umfassend ein Dünnstglas,
b) eine Komponente B umfassend wenigstens ein polymeres Material und/oder wenigstens ein mineralisches Glas,
c) eine Komponente C umfassend wenigstens eine Funktionsschicht F_{C} und/oder ein Dünnstglas, wobei das Dünnstglas der Komponente A und das Dünnstglas der Komponente C jeweils eine Glaskomposition ausgewählt aus der Gruppe bestehend aus Borosilikatglas, Aluminium-Borosilikatglas und alkalifreiem Borosilikatglas umfasst, wobei die Glaskomposition des Dünnstglases der Komponente A und des Dünnstglases der Komponente C gleich oder verschieden voneinander ist, das Dünnstglas der Komponente A und das Dünnstglas der Komponente C jeweils eine mittlere Dicke aus einem Bereich von 13 µm bis 760 µm aufweist, wobei die mittlere Dicke des Dünnstglases der Komponente A und des Dünnstglases der Komponente C gleich oder verschieden voneinander ist, die Rückfläche R_{DA} des Dünnstglases der Komponente A wenigstens eine Funktionsschicht F_{RA} und/oder die Vorderfläche V_{B} der Komponente B wenigstens eine Funktionsschicht F_{VB} umfasst, Komponente B ein Brillenglas-Fertigfabrikat umfasst, die Oberflächentopographie der Komponenten A, B und C jeweils plan, sphärisch, asphärisch, torisch oder atorisch ist, die Oberflächentopographie der jeweiligen Vorderfläche und der jeweiligen Rückfläche der Komponenten A und C gleich ist, die Oberflächentopographie der Komponente A gleich oder verschieden zu der Oberflächentopographie der Komponente C ist, die Oberflächentopographie der Komponenten A gleich zu der Oberflächentopographie der Vorderfläche der Komponente B und die Oberflächentopographie der Komponente C gleich zu der Oberflächentopographie der Rückfläche der Komponente B ist und das Brillenglas wenigstens eine dioptrische Wirkung und die Komponente B eine berechnete ortsabhängige Brechungsindexverteilung aufweist.

Bevorzugte Weiterbildungen des Brillenglases sind in den abhängigen Ansprüchen 2 bis 11 angegeben.

Des Weiteren wurde die Aufgabe gelöst durch Bereitstellung eines Verfahrens zur Herstellung eines Brillenglases umfassend, ausgehend von der objektseitigen Vorderfläche des Brillenglases zur gegenüberliegenden Rückfläche des Brillenglases, wenigstens die Komponenten A, B und C, wobei die Komponente A ein Dünnstglas, die Komponente B ein polymeres Material und/oder wenigstens ein mineralisches Glas, die Komponente C wenigstens eine Funktionsschicht F_{C} und/oder ein Dünnstglas umfasst und das Verfahren die folgenden Schritte umfasst:
i. Bereitstellen eines optional umgeformten Dünnstglases der Komponente A und optional Bereitstellen eines optional umgeformten Dünnstglases der Komponente C,
ii. Beschichten der Rückfläche R_{DA} des Dünnstglases der Komponente A mit wenigstens einer Funktionsschicht F_{RA},
iii. optional Beschichten der Vorderfläche V_{DC} des Dünnstglases der Komponente C mit wenigstens einer Funktionsschicht F_{VC},
iv. Bereitstellen eines Brillenglas-Fertigfabrikats der Komponente B umfassend ein polymeres Material oder ein mineralisches Glas, welche eine berechnete ortsabhängige Brechungsindexverteilung aufweist und wobei optional die Vorderfläche V_{B} des Brillenglas-Fertigfabrikats mit wenigstens einer Funktionsschicht F_{VB} und optional die Rückfläche R_{B} des Brillenglas-Fertigfabrikats mit wenigstens einer Funktionsschicht F_{RB} beschichtet ist,
v. Verbinden der beschichteten Rückfläche R_{DA} der Komponente A mit der optional beschichteten Vorderfläche V_{B} der Komponente B und a) Verbinden der optional beschichteten Rückfläche R_{B} mit der optional beschichteten Vorderfläche V_{DC} des Dünnstglases der Komponente C oder b) Beschichten der Rückfläche R_{B} der Komponente B mit wenigstens einer Funktionsschicht F_{C},
vi. optional Beschichten der Vorderfläche V_{DA} des Dünnstglases der Komponente A mit wenigstens einer Funktionsschicht F_{VA} und optional Beschichten der Rückfläche R_{DC} des Dünnstglases der Komponente C mit wenigstens einer Funktionsschicht F_{RC},
   Formranden des in Schritt v. bzw. vi. erhaltenen Brillenglases umfassend die Komponenten A, B und C.
   Vorderfläche V_{B} der Komponente B des in Schritt vii. erhaltenen Brillenglases umfassend die Komponenten B und C mit der Rückfläche R_{DA} eines Dünnstglases der Komponente A.
x. optional Beschichten der Vorderfläche V_{DA} des Dünnstglases der Komponente A mit wenigstens einer Funktionsschicht F_{VA} und optional Beschichten der Rückfläche R_{DC} des Dünnstglases der Komponente C mit wenigstens einer Funktionsschicht F_{RC}.
xi. optional Formranden des in Schritt ix. bzw. x. erhaltenen Brillenglases umfassend die Komponenten A, B und C.

Gegenstand der Erfindung ist weiterhin die Verwendung eines Dünnstglases zur Herstellung eines Brillenglases gemäß Anspruch 15.

Die erfindungsgemäßen Brillengläser umfassen an der objektseitigen Vorderfläche des Brillenglases wenigstens eine Komponente A umfassend wenigstens ein Dünnstglas. Auf der gegenüberliegenden, augenseitigen Rückfläche des Brillenglases kann Komponente C ebenfalls ein Dünnstglas umfassen, wobei das Dünnstglas der Komponente A und das Dünnstglas der Komponente C identisch oder verschieden voneinander sein kann. Die Dünnstgläser der beiden Komponenten A und C können beispielsweise identisch in Bezug auf die Glaskomposition, auf die mittlere Dicke oder auf die Form sein. Die Glaskomposition, die mittlere Dicke und/oder die Form des Dünnstglases der Komponente A kann aber auch verschieden zu der Glaskomposition, der mittleren Dicke und/oder der Form des Dünnstglases der Komponente C sein. Beispielsweise kann das Dünnstglas der Komponente A und das Dünnstglas der Komponente C auf einer identischen Glaskomposition basieren, die mittlere Dicke und/oder die Form der beiden Dünnstgläser können verschieden voneinander sein.

Das Dünnstglas der Komponente A bzw. der Komponente C kann auf diversen Glaskompositionen basieren. Die Komponente A und die Komponente C kann ein in Bezug auf die Glaskomposition identisches oder voneinander verschiedenes Dünnstglas umfassen. Bei der Glaskomposition für die Dünnstgläser kann es sich beispielsweise um Borosilikatglas, Aluminium-Borosilikatglas oder alkalifreies Borosilikatglas handeln. Bevorzugt basiert das Dünnstglas der Komponente A bzw. der Komponente C jeweils auf einem Borosilikatglas oder einem Aluminium-Borosilikatglas.

Das Dünnstglas der Komponente A bzw. der Komponente C weist jeweils bevorzugt eine mittlere Dicke aus einem Bereich von 10 µm bis 1000 µm, weiter bevorzugt aus einem Bereich von 13 µm bis 760 µm, weiter bevorzugt aus einem Bereich von 16 µm bis 510 µm, besonders bevorzugt aus einem Bereich von 18 µm bis 390 µm und ganz besonders bevorzugt aus einem Bereich von 19 µm bis 230 µm auf. Insbesondere bevorzugt weist das Dünnstglas der Komponente A bzw. das Dünnstglas der Komponente C jeweils eine mittlere Dicke aus einem Bereich von 21 µm bis 121 µm auf. Unter der mittleren Dicke des Dünnstglases der Komponente A bzw. der Komponente C wird jeweils das arithmetische Mittel verstanden, sofern nicht anders angeben.
Unterhalb einer mittleren Dicke von 10 µm ist das Dünnstglas der Komponente A bzw. der Komponente C mechanisch zu instabil, um in einem der nachstehend beschriebenen Verfahren zur Herstellung eines erfindungsgemäßen Brillenglases zum Einsatz kommen zu können. Oberhalb einer mittleren Dicke von 1000 µm kann das Dünnstglas der Komponente A bzw. der Komponente C zu erfindungsgemäßen Brillengläsern führen, welche eine zu große Randdicke oder eine zu große Mittendicke des Brillenglases aufweisen würden.
Die mittlere Dicke des Dünnstglases der Komponenten A bzw. C wird jeweils vorzugsweise mit dem Messgerät Filmetrics F10-HC (Firma Filmetrics Inc.) vermessen. Die mittlere Dicke des Dünnstglases der Komponenten A bzw. C wird jeweils vorzugsweise anhand des Dünnstglases in der Form, wie es tatsächlich zum Einsatz kommt, bestimmt. Die mittlere Dicke des Dünnstglases der Komponenten A bzw. C wird somit jeweils entweder anhand eines planen Dünnstglases oder anhand eines umgeformten Dünnstglases vor dem Zusammenfügen mit der Komponente B bestimmt. Alternativ kann die mittlere Dicke des Dünnstglases der Komponenten A bzw. C jeweils mittels einer rasterelektronenmikroskopischen Aufnahme anhand eines Querschliffs bestimmt werden. Die Bestimmung der jeweiligen mittleren Dicke mittels einer rasterelektronenmikroskopischen Aufnahme kann entweder anhand des Dünnstglases der Komponente A, anhand des Dünnstglases der Komponente C oder anhand des erfindungsgemäßen Brillenglases umfassend die Komponenten A, B und C erfolgen. Hierzu wird die Dicke des Dünnstglases der Komponente A bzw. der Komponente C jeweils an wenigstens 100 Stellen bestimmt und statistisch gemittelt. Bevorzugt erfolgt die Bestimmung der mittleren Dicke des Dünnstglases der Komponente A bzw. der Komponente C mittels einer rasterelektronischen Aufnahme anhand eines Querschliffs des erfindungsgemäßen Brillenglases. Sofern weitere Komponenten im erfindungsgemäßen Brillenglas zugegen sind, erfolgt die Bestimmung von deren jeweiliger mittlerer Dicke ebenfalls wie vorstehend beschrieben.

Bei einer Ausführungsform beträgt die relative Standardabweichung der Dickenverteilung des Dünnstglases der Komponente A bzw. C jeweils 0,1% bis 100%, bevorzugt 0,2% bis 81%, besonders bevorzugt 0,3% bis 66% und ganz besonders bevorzugt 0,4% bis 24%. Die relative Standardabweichung in [%] ist dabei der Quotient aus berechneter Standardabweichung und mittlerer Dicke.

Das Dünnstglas der Komponente A und der Komponente C kann jeweils die gleiche mittlere Dicke aufweisen. Die mittleren Dicken der Dünnstgläser der Komponenten A und C können auch voneinander verschieden sein. Bevorzugt sind die mittleren Dicken der Dünnstgläser der Komponenten A und C jeweils gleich.

Das Dünnstglas der Komponente A bzw. der Komponente C weist jeweils bevorzugt eine Oberflächenrauigkeit Ra von < 1 nm auf. Weiter bevorzugt liegt die Oberflächenrauigkeit Ra des Dünnstglases der Komponente A bzw. der Komponente C jeweils in einem Bereich von 0,1 nm bis 0,8 nm, besonders bevorzugt in einem Bereich von 0,3 nm bis 0,7 nm und ganz besonders bevorzugt in einem Bereich von 0,4 nm bis 0,6 nm. Vorstehend genannte Werte für die Oberflächenrauigkeit Ra beziehen sich jeweils auf die Vorderfläche und die Rückfläche des Dünnstglases der Komponente A bzw. C eines nicht umgeformten, planen Dünnstglases. Nach einer Umformung gelten vorstehend genannte Werte jeweils nur für diejenige Fläche des Dünnstglases, welche nicht mit dem Formkörper in Kontakt gebracht wurde. In Abhängigkeit vom zur Umformung eingesetzten Formkörper können vorstehend genannte Werte auch für die Fläche des Dünnstglases gelten, welche mit dem zur Umformung eingesetzten Formkörper in Kontakt war. Die Oberflächenrauigkeit Ra der Dünnstglases der Komponente A bzw. der Komponente C wird vorzugsweise mittels Weißlichtinterferometrie, vorzugsweise mit dem Gerät NewView 7100 (Firma Zygo Corporation), bestimmt.

Weist das Dünnstglas der Komponente A bzw. der Komponente C weitere oberflächliche Unebenheiten auf, so kann die flächenmäßige Analyse der jeweiligen Oberfläche weiterhin durch phasenmessende Deflektometrie, vorzugsweise mit dem Gerät SpecGage (Firma 3D-Shape GmbH), bestimmt werden.

Die Transformationstemperatur T_{G} des Dünnstglases der Komponente A bzw. des Dünnstglases der Komponente C liegt jeweils bevorzugt in einem Bereich von 400°C bis 800°C, weiter bevorzugt in einem Bereich von 430°C bis 770°C, besonders bevorzugt in einem Bereich von 490°C bis 740°C und ganz besonders bevorzugt in einem Bereich von 530°C bis 730°C. Die Transformationstemperatur T_{G} des Dünnstglases der Komponente A bzw. C kann jeweils mittels dynamisch-mechanischer Analyse, bevorzugt mit dem Messgerät DMA 8000 Dynamic Mechanical Analyzer (Firma Perkin Elmer Inc.), oder mittels dynamischer Differenzkalorimetrie, bevorzugt mit dem Messgerät DSC204CEL mit Controller TASC414/3A oder CC2001 (jeweils Firma Erich NETZSCH GmbH & Co. Holding KG), bestimmt. Bevorzugt wird die Transformationstemperatur T_{G} des Dünnstglases der Komponente A bzw. C jeweils mittels dynamischer Differenzkalorimetrie bestimmt.

Der Ausdehnungskoeffizient des Dünnstglases der Komponente A bzw. der Komponente C liegt jeweils bevorzugt in einem Bereich von 1,8·10⁻⁶K⁻¹ bis 9,1·10⁻⁶K⁻¹, weiter bevorzugt in einem Bereich von 2,1·10⁻⁶K⁻¹ bis 8,8·10⁻⁶K⁻¹, besonders bevorzugt in einem Bereich von 2,6·10⁻⁶K⁻¹ bis 8,2·10⁻⁶K⁻¹ und ganz besonders bevorzugt in einem Bereich von 3,0·10⁻⁶K⁻¹ bis 7,4·10⁻⁶K⁻¹, jeweils bezogen auf den Temperaturbereich von 20°C bis 300°C. Der Ausdehnungskoeffizient des Dünnstglases der Komponente A bzw. der Komponente C wird bevorzugt jeweils mittels Dilatometrie, bevorzugt mit dem Messgerät DIL 402 E/7 (Firma Erich NETZSCH GmbH & Co. Holding KG), erfasst.

Das Dünnstglas der Komponente A bzw. der Komponente C umfasst bevorzugt jeweils keine Farbmittel. Weiterhin bevorzugt liegt die Transmission des Dünnstglases der Komponente A bzw. der Komponente C im Wellenlängenbereich von 400 nm bis 800 nm jeweils bei ≥ 90%, besonders bevorzugt bei ≥ 92%. Die Transmission des Dünnstglases der Komponente A bzw. der Komponente C wird bevorzugt mittels eines UV/VIS Spektralphotometers, bevorzugt mit dem Messgerät LAMBDA 950 UV/Vis/NIR Spectrophotometer (Firma Perkin Elmer Inc.), bestimmt.

Das Dünnstglas der Komponente A bzw. der Komponente C weist jeweils bevorzugt einen Brechungsindex aus einem Bereich von n = 1,490 bis n = 1,950, weiter bevorzugt aus einem Bereich von n = 1,501 bis n = 1,799, besonders bevorzugt aus einem Bereich von n = 1,510 bis n = 1,755 und ganz besonders bevorzugt aus einem Bereich von n = 1,521 bis n= 1,747 auf, wobei der Brechungsindex für die Wellenlänge der Natrium-D-Linie angeben ist. Der Brechungsindex des jeweiligen Dünnstglases der Komponente A bzw. der Komponente C ist bevorzugt an die jeweils direkt angrenzende Funktionsschicht und/oder die jeweils direkt angrenzende Komponente, vorzugsweise Komponente B, angepasst. An den jeweiligen Grenzflächen Dünnstglas/ Funktionsschicht, Dünnstglas/ weitere Komponente des erfindungsgemäßen Brillenglases, vorzugsweise Komponente B oder Dünnstglas/ Klebemittel ist der Brechungsindexunterschied jeweils bevorzugt kleiner als 0,03, besonders bevorzugt kleiner als 0,01, unabhängig davon, ob es sich um das Dünnstglas der Komponente A, das Dünnstglas der Komponente C oder das Dünnstglas einer weiteren Komponente des erfindungsgemäßen Brillenglases handelt. Bei einer Ausführungsform der Erfindung weisen sämtliche Bestandteile des erfindungsgemäßen Brillenglases, also das Dünnstglas der Komponente A bzw. C, Komponente B, weitere optionale Komponenten des erfindungsgemäßen Brillenglases, das oder die optional verwendete(n) Klebemittel sowie sämtliche Funktionsschichten, welche innerhalb des erfindungsgemäßen Brillenglases, vorzugsweise zwischen den Komponenten A und C angeordnet sind, den gleichen Brechungsindex auf. Bei dieser Ausführungsform wird unter gleichem Brechungsindex ein Brechungsindexunterschied aus einem Bereich von 0,005 bis 0,015 toleriert. Der Brechungsindex des Dünnstglases der Komponente A und der Komponente C, der Komponente B sowie weiterer Komponenten des erfindungsgemäßen Brillenglases wird vorzugsweise refraktometrisch an den jeweiligen Bestandteilen des erfindungsgemäßen Brillenglases separat bestimmt. Als Messgerät kann beispielsweise das Gerät Anton Paar Abbemat MW (Firma Anton Paar GmbH) eingesetzt werden.

Das Dünnstglas der Komponente A bzw. der Komponente C weist jeweils bevorzugt eine Abbezahl aus einem Bereich von 20 bis 85, weiter bevorzugt aus einem Bereich von 23 bis 74, besonders bevorzugt aus einem Bereich von 29 bis 66 und ganz besonders bevorzugt aus einem Bereich von 33 bis 61 auf. Bei einer Ausführungsform der Erfindung weisen sämtliche Bestandteile des erfindungsgemäßen Brillenglases, also das Dünnstglas der Komponente A bzw. C, Komponente B, weitere optionale Komponenten des erfindungsgemäßen Brillenglases, das oder die optional verwendete(n) Klebemittel sowie sämtliche vorhandenen Funktionsschichten, welche innerhalb des erfindungsgemäßen Brillenglases, vorzugsweise zwischen den Komponenten A und C angeordnet sind, die gleiche Abbezahl auf. Bei dieser Ausführungsform wird unter gleicher Abbezahl ein Unterschied der Abbezahl aus einem Bereich von 0,1 bis 5, bevorzugt aus einem Bereich von 0,1 bis 2,1 toleriert. Je höher der Brechungsindex sämtlicher Bestandteile des erfindungsgemäßen Brillenglases ist, desto größere Unterschiede der Abbezahl werden toleriert.

Bei einer Ausfiihrungsform der Erfindung weist das Dünnstglas der Komponente A bzw. der Komponente C sowie das organische Material der Komponente B oder das mineralische Glas der Komponente B jeweils bei einem gegebenen Brechungsindex n eine möglichst hohe Abbezahl auf.

Bei einer Ausfiihrungsform der Erfindung weist das Dünnstglas der Komponente A bzw. der Komponente C jeweils eine Transformationstemperatur T_{G} aus einem Bereich von 421°C bis 781°C, bevorzugt aus einem Bereich von 501°C bis 766°C, sowie für den Temperaturbereich von 20°C bis 300°C jeweils einen Ausdehnungskoeffizienten aus einem Bereich von 2,9·10⁻⁶K⁻¹ bis 8,3·10⁻⁶K⁻¹, bevorzugt aus einem Bereich von 3,1·10⁻⁶K⁻¹ bis 7,3·10⁻⁶K⁻¹, auf. Bei dieser Ausfiihrungsform können die Transformationstemperatur T_{G} und/oder der Ausdehnungskoeffizient des Dünnstglases der Komponente A und des Dünnstglases der Komponente C jeweils gleich oder verschieden sein.

Bei einer weiteren Ausführungsform der Erfindung weist das Dünnstglas der Komponente A bzw. der Komponente C jeweils eine mittlere Dicke aus einem Bereich von 17 µm bis 190 µm, bevorzugt aus einem Bereich von 24 µm bis 166 µm, sowie eine Transformationstemperatur T_{G} aus einem Bereich von 510°C bis 730°C, bevorzugt aus einem Bereich von 555°C bis 721°C, auf. Bei dieser Ausführungsform können die mittlere Dicke und/oder die Transformationstemperatur T_{G} des Dünnstglases der Komponente A und des Dünnstglases der Komponente C jeweils gleich oder verschieden sein.

Bei einer bevorzugten Ausführungsform weisen die Dünnstgläser der Komponenten A bzw. C sowie weitere optional vorhandene Dünnstgläser des erfindungsgemäßen Brillenglases keine photochromen Eigenschaften auf.

Dünnstgläser sind beispielsweise kommerziell erhältlich unter den Bezeichnungen D 263® T eco, AF 32® eco (jeweils Fa. Schott AG) oder Corning Willow Glass (Fa. Corning Inc.).

Das Dünnstglas der Komponente A oder der Komponente C kann jeweils mit unterschiedlichen Formgebungen, beispielsweise plan oder in einer bestimmten Form vorliegen. Im Zusammenhang mit der Form des Dünnstglases wird unter "plan" verstanden, dass das Dünnstglas keine makroskopisch sichtbare Biegung oder Krümmung aufweist. Weisen die Dünnstgläser der Komponenten A und C eine nicht plane Oberfläche auf, kann eine gewünschte Oberflächentopographie, beispielsweise sphärisch oder torisch, durch Verformen eines planen Dünnstglases auf einer entsprechenden Negativform erreicht werden. Beispielsweise kann das Dünnstglas der Komponente A bzw. der Komponente C jeweils in Form einer sphärischen Linse mit einem bestimmten Krümmungsradius ausgestaltet sein. Die Form des Dünnstglases der Komponenten A bzw. C kann identisch oder verschieden voneinander sein. Zur Umformung eines planen Dünnstglases kann dieses zunächst, bevorzugt in Form eines Kreises, beispielsweise mittels eines Lasers, ausgeschnitten werden. Im Randbereich kann dieser ausgeschnittene Dünnstglaskreis anschließend abgeflammt werden, um eventuell entstandene Mikrorisse zu versiegeln. Um möglichst wenig Dünnstglasverschnitt zu erzeugen, wird der Ausschnitt des Dünnstglases so ausgewählt, dass nach dem Zusammenfügen der Komponenten A, B und C des erfindungsgemäßen Brillenglases möglichst wenig Dünnstglasüberschuss entfernt werden muss. Das ausgeschnittene Dünnstglas kann beispielsweise auf eine zur Umformung geeignete Formschale gelegt, gegebenenfalls mittels einer Halterung befestigt, und vorzugsweise zusammen mit der Formschale, gegebenenfalls zusammen mit der Halterung, bis zur Transformationstemperatur T_{G} der Glaskomposition oder bis zu einer Temperatur, welche vorzugsweise maximal 20°C über der Transformationstemperatur T_{G} der Glaskomposition liegt, erwärmt werden. Die Formschale kann beispielsweise konvex oder konkav ausgeformt sein. Beispielsweise wird das ausgeschnittene Dünnstglas mit Hilfe eines zur Formschale passenden Gegenstücks in diese hinein gedrückt oder der Dünnstglasausschnitt wird unter Anlegen von Vakuum und/oder einfach mittels Schwerkraft in die Formschale geformt. Bevorzugt ist eine Umformung des Dünnstglases unter Anlegen von Vakuum in eine Formschale. Das umgeformte Dünnstglas wird vorzugsweise komplett in oder über der Formschale abkühlen gelassen, bevor es von der Formschale getrennt wird. Die Umformung eines vorzugsweise planen Ausschnitts eines Dünnstglases erfolgt vorzugsweise in einer Schutzgasatmosphäre. Die Formschale kann hierbei als Negativform der bei der Umformung zu erzielenden Vorderfläche oder Rückfläche des Dünnstglases ausgestaltet sein. Beispielsweise kann die Formschale sphärisch, asphärisch rotationssymmetrisch, torisch, atorisch, als symmetrische Freiformfläche oder unsymmetrische Freiformfläche ausgeformt sein. Alternativ kann das Dünnstglas in nicht zugeschnittener Form, vorzugsweise planer Form, mit Hilfe eines Thermoformprozesses umgeformt werden. In Anwesenheit weiterer Komponenten des erfindungsgemäßen Brillenglases umfassend wenigstens ein Dünnstglas gelten vorstehende Ausführungen entsprechend.

Der Krümmungsradius eines Dünnstglases liegt bevorzugt in einem Bereich von 10 mm bis unendlich, bevorzugt in einem Bereich von 20 mm bis 1600 mm, weiter bevorzugt in einem Bereich von 35 mm bis 1535 mm, weiter bevorzugt in einem Bereich von 56 mm bis 600 mm, besonders bevorzugt in einem Bereich von 66 mm bis 481 mm und ganz besonders bevorzugt in einem Bereich von 75 mm bis 376 mm. Ein Krümmungsradius des Dünnstglases von unendlich entspricht hierbei einer planen Oberfläche. Bei nicht sphärischen Oberflächen des Dünnstglases beziehen sich die vorstehend angegebenen Krümmungsradien jeweils auf eine angenäherte sphärische Form.
Die zur Umformung einsetzbare Formschale umfasst vorzugsweise ein Material, welches sich spanend bearbeiten lässt, keine Strukturen im umgeformten Dünnstglas hervorruft und darüber hinaus mit dem Dünnstglas keine untrennbare Verbindung eingeht. Die Formschale kann beispielsweise aus Graphit, einer Metall(legierung) oder einer Keramik, wie beispielsweise in WO 2006/050891 A2 beschrieben, bestehen. Die Formschale kann weiterhin oberflächenmodifiziert sein, so dass eine Anhaftung des Dünnstglases weiter minimiert wird.

Die Vorderfläche des Dünnstglases V_{DA} der Komponente A ist diejenige Fläche des Dünnstglases, welche sich im erfindungsgemäßen Brillenglas objektseitig befindet. Die Vorderfläche des Dünnstglases V_{DC} der Komponente C ist diejenige Fläche des Dünnstglases, welche sich im erfindungsgemäßen Brillenglas objektseitig in Richtung der Komponente B bzw. in Richtung einer weiter objektseitig angeordneten Komponente des erfindungsgemäßen Brillenglases befindet. Die Rückfläche des Dünnstglases R_{DA} der Komponente A ist diejenige Fläche des Dünnstglases, welche im erfindungsgemäßen Brillenglas augenseitig in Richtung der Komponente B bzw. in Richtung einer weiter augenseitig angeordneten Komponente des erfindungsgemäßen Brillenglases angeordnet ist. Die Rückfläche des Dünnstglases R_{DC} der Komponente C ist diejenige Fläche des Dünnstglases, welche sich im erfindungsgemäßen Brillenglas augenseitig befindet. Sofern mehr als eine der Komponenten A, B und/oder C im erfindungsgemäßen Brillenglas zugegen ist, ist deren Vorderfläche jeweils als diejenige Fläche definiert, welche objektseitig angeordnet ist. Die Rückfläche ist dann entsprechend diejenige Fläche der jeweiligen Komponente, welche sich im erfindungsgemäßen Brillenglas augenseitig befindet.

Das Dünnstglas der Komponente A umfasst bevorzugt auf der Vorderfläche des Dünnstglases V_{DA} wenigstens eine Funktionsschicht F_{VA}. Die Funktionsschicht F_{VA} kann beispielsweise wenigstens eine Entspiegelungsschicht, wenigstens eine elektrisch leitfähige oder halbleitende Schicht, wenigstens eine Antibeschlagsschicht und/oder wenigstens eine Clean-Coat-Schicht umfassen. Bevorzugt umfasst die Funktionsschicht F_{VA} wenigstens eine Entspiegelungsschicht, besonders bevorzugt wenigstens eine Entspiegelungsschicht und wenigstens eine Clean-Coat-Schicht, wobei in letzterem Fall die Clean-Coat-Schicht die objektseitig äußerste Schicht des erfindungsgemäßen Brillenglases ist.

Das Dünnstglas der Komponente C umfasst bevorzugt auf der Rückfläche des Dünnstglases R_{DC} wenigstens eine Funktionsschicht F_{RC}. Die Funktionsschicht F_{RC} kann wie die Funktionsschicht F_{VA} beispielsweise eine Entspiegelungsschicht, wenigstens eine elektrisch leitfähige oder halbleitende Schicht, wenigstens eine Antibeschlagsschicht und/oder wenigstens eine Clean-Coat-Schicht umfassen. Bevorzugt umfasst die Funktionsschicht F_{RC} wenigstens eine Entspiegelungsschicht, besonders bevorzugt eine Entspiegelungsschicht und eine Clean-Coat-Schicht, wobei in letzterem Fall die Clean-Coat-Schicht die augenseitig äußerste Schicht des erfindungsgemäßen Brillenglases ist.

Die wenigstens eine Funktionsschicht F_{VA} der Vorderfläche V_{DA} des Dünnstglases der Komponente A und die wenigstens eine Funktionsschicht F_{RC} der Rückfläche R_{DC} des Dünnstglases der Komponente C können identisch oder verschieden voneinander sein. Bevorzugt sind die wenigstens eine Funktionsschicht F_{VA} und die wenigstens eine Funktionsschicht F_{RC} identisch.

Die Begriffe "Schicht" und "Beschichtung" werden im Rahmen dieser Erfindung austauschbar verwendet.

Umfasst die Funktionsschicht F_{VA} der Vorderfläche V_{DA} des Dünnstglases der Komponente A wenigstens eine Entspiegelungsschicht, so umfasst diese bevorzugt alternierende diskrete Metalloxid-, Metallhydroxid- und/oder Metalloxidhydratschichten aus oder mit Aluminium, Silizium, Zirkonium, Titan, Yttrium, Tantal, Neodym, Lanthan, Niob und/oder Praseodym. Bei einer Ausführungsform der Erfindung umfasst die Entspiegelungsschicht wenigstens eine Metalloxid-, Metallhydroxid- und/oder Metalloxidhydratschicht aus oder mit Silizium, wobei bevorzugt wenigstens eine Siliziumoxid-, Siliziumhydroxid- und/oder Siliziumoxidhydratschicht objektseitig die außenliegende Schicht der auf dem Dünnstglas der Komponente A vorliegenden Entspiegelungsschicht darstellt.

Umfasst die Funktionsschicht F_{RC} der Rückfläche R_{DC} des Dünnstglases der Komponente C wenigstens eine Entspiegelungsschicht, so umfasst diese bevorzugt alternierende diskrete Metalloxid-, Metallhydroxid- und/oder Metalloxidhydratschichten aus oder mit Aluminium, Silizium, Zirkonium, Titan, Yttrium, Tantal, Neodym, Lanthan, Niob und/oder Praseodym. Bei einer Ausführungsform der Erfindung umfasst die Entspiegelungsschicht wenigstens eine Metalloxid-, Metallhydroxid- und/oder Metalloxidhydratschicht aus oder mit Silizium, wobei bevorzugt wenigstens eine Siliziumoxid-, Siliziumhydroxid- und/oder Siliziumoxidhydratschicht augenseitig die außenliegende Schicht der auf der Komponente C vorliegenden Entspiegelungsschicht darstellt.

Bei einer weiteren Ausführungsform der Erfindung weist die wenigstens eine Entspiegelungsschicht des erfindungsgemäßen Brillenglases eine Gesamtschichtdicke aus einem Bereich von 97 nm bis 2000 nm, bevorzugt aus einem Bereich von 112 nm bis 1600 nm, weiter bevorzugt aus einem Bereich von 121 nm bis 1110 nm, besonders bevorzugt aus einem Bereich von 132 nm bis 760 nm und ganz besonders bevorzugt aus einem Bereich von 139 nm bis 496 nm auf. Die Entspiegelungsschicht umfasst hierbei bevorzugt eine Metalloxid-, Metallhydroxid- und/oder Metalloxidhydratschicht aus oder mit Silizium, welche bevorzugt die äußerste Schicht der Entspiegelungsschicht ausbildet. Unter äußerster Schicht wird in diesem Zusammenhang diejenige Schicht der Entspiegelungsschicht verstanden, welche sich im erfindungsgemäßen Brillenglas am weitesten augenseitig bzw. am weitesten objektseitig befindet.

Bei einer weiteren Ausfiihrungsform der Erfindung umfasst die Entspiegelungsschicht des erfindungsgemäßen Brillenglases ausgehend von der Vorderfläche V_{DA} des Dünnstglases der Komponente A bzw. ausgehend von der Rückfläche R_{DC} des Dünnstglases der Komponente C jeweils folgende Schichtenfolge:
a) Metalloxid, Metallhydroxid und/oder Metalloxidhydratschicht aus oder mit Titan,
b) Metalloxid, Metallhydroxid und/oder Metalloxidhydratschicht aus oder mit Silizium,
c) Metalloxid, Metallhydroxid und/oder Metalloxidhydratschicht aus oder mit Titan,
d) Metalloxid, Metallhydroxid und/oder Metalloxidhydratschicht aus oder mit Silizium,
e) Metalloxid, Metallhydroxid und/oder Metalloxidhydratschicht aus oder mit Titan,
f) Metalloxid, Metallhydroxid und/oder Metalloxidhydratschicht aus oder mit Silizium,
g) Metalloxid, Metallhydroxid und/oder Metalloxidhydratschicht aus oder mit Zirkonium,
h) Metalloxid, Metallhydroxid und/oder Metalloxidhydratschicht aus oder mit Titan,
i) Metalloxid, Metallhydroxid und/oder Metalloxidhydratschicht aus oder mit Zirkonium,
j) Metalloxid, Metallhydroxid und/oder Metalloxidhydratschicht aus oder mit Titan.

Bei einer weiteren Ausfiihrungsform der Erfindung umfasst die wenigstens eine Entspieglungsschicht des erfindungsgemäßen Brillenglases die in EP 2 437 084 A1, in den Figuren 3 und 5, jeweils die zwischen der superhydrohoben Schicht und der Hartlackschicht aufgezeigte Schichtenfolge und Schichtdicke. Bevorzugt ist im Rahmen dieser Erfindung die dort jeweils an die Hartlackschicht angrenzende Schicht augenseitig und die jeweils an die superhydrophobe Schicht angrenzende Schicht objektseitig im erfindungsgemäßen Brillenglas angeordnet.

Die Herstellung der wenigstens einen Entspiegelungsschicht des erfindungsgemäßen Brillenglases erfolgt vorzugsweise mittels PVD-Verfahren.

Umfasst die Funktionsschicht F_{VA} der Vorderfläche V_{DA} des Dünnstglases der Komponente A und/oder die Funktionsschicht F_{RC} der Rückfläche R_{DC} des Dünnstglases der Komponente C jeweils wenigstens eine elektrisch leitfähige oder halbleitende Schicht, kann diese beispielsweise eine Schicht aus oder mit Indium-Zinn-Oxid (((In₂O₃)_{0.9} (SnO₂)_{0.1}; ITO), Fluor-Zinn-Oxid (SnO₂:F; FTO), Aluminium-Zink-Oxid (ZnO:Al; AZO) und/oder Antimon-Zinn-Oxid (SnO₂:Sb; ATO) umfassen. Bevorzugt umfasst die elektrisch leitfähige oder halbleitende Schicht eine Schicht aus oder mit ITO bzw. aus oder mit FTO.
Eine objektseitig oder augenseitig als äußerste Funktionsschicht des erfindungsgemäßen Brillenglases angeordnete elektrisch leitfähige oder halbleitende Schicht vermindert oder vermeidet die statische Aufladung des erfindungsgemäßen Brillenglases. Dies wiederum erleichtert die Reinigung des erfindungsgemäßen Brillenglases. Bei einer Ausführungsform der Erfindung kann die elektrisch leitfähige oder halbleitende Schicht eine Schicht der Entspiegelungsschicht sein.

Umfasst die Funktionsschicht F_{VA} der Vorderfläche V_{DA} des Dünnstglases der Komponente A und/oder die Funktionsschicht F_{RC} der Rückfläche R_{DA} des Dünnstglases der Komponente C jeweils wenigstens eine Antibeschlagsschicht, umfasst diese bevorzugt ein Silanderivat gemäß EP 2 664 659 A1, besonders bevorzugt gemäß Anspruch 4 der EP 2 664 659 A1. Alternativ kann die Antibeschlagsschicht auch gemäß dem in DE 10 2015 209 794 beschriebenen Verfahren, insbesondere gemäß des in Anspruch 1 der DE 10 2015 209 794 beschriebenen Verfahrens, hergestellt werden. Die Antibeschlagsschicht kann direkt auf die Vorderfläche V_{DA} des Dünnstglases der Komponente A oder auf einer auf der Vorderfläche V_{DA} vorhandenen Entspiegelungsschicht aufgebracht werden. Wird die Antibeschlagsschicht auf einer Entspiegelungsschicht der Komponente A aufgebracht, umfasst die objektseitig außenliegende Schicht der Entspiegelungsschicht bevorzugt eine Metalloxid-, Metallhydroxid- und/oder Metalloxidhydratschicht aus oder mit Silizium. Die Antibeschlagsschicht kann direkt auf die Rückfläche R_{DC} des Dünnstglases der Komponente C oder auf einer auf der Rückfläche R_{DC} vorhandenen Entspiegelungsschicht aufgebracht werden. Wird die Antibeschlagsschicht auf einer Entspiegelungsschicht der Komponente C aufgebracht, umfasst die augenseitig außenliegende Schicht der Entspiegelungsschicht bevorzugt eine Metalloxid-, Metallhydroxid- und/oder Metalloxidhydratschicht aus oder mit Silizium.

Umfasst die Funktionsschicht F_{VA} der Vorderfläche V_{DA} des Dünnstglases der Komponente A und/oder die Funktionsschicht F_{RC} der Rückfläche R_{DC} des Dünnstglases der Komponente C jeweils wenigstens eine Clean-Coat-Schicht, umfasst diese vorzugsweise ein Material mit oleophoben und hydrophoben Eigenschaften, wie beispielsweise in EP 1 392 613 A1 offenbart, auf dem Wasser einen Kontaktwinkel von mehr als 90°, bevorzugt von mehr als 100° und besonders bevorzugt mehr als 110° einnimmt. Die Clean-Coat-Schicht umfasst bevorzugt eine fluororganische Schicht mit kovalenter Anbindung an das Substrat gemäß DE 198 48 591 A1, Anspruch 1, oder eine Schicht auf Basis von Perfluorpolyethern.

Bei einer Ausführungsform der Erfindung ist die Vorderfläche V_{DA} des Dünnstglases der Komponente A ausgehend von der Vorderfläche V_{DA} in Richtung des Objekts bzw. die Rückfläche R_{DC} des Dünnstglases der Komponente C ausgehend von der Rückfläche R_{DC} jeweils mit folgenden Funktionsschichten F_{VA} bzw. F_{RC} belegt:
a) optional wenigstens eine elektrisch leitfähige oder halbleitende Schicht,
b) wenigstens eine Entspiegelungsschicht,
c) wenigstens eine Antibeschlagsschicht oder wenigstens eine Clean-Coat-Schicht.
Bei dieser Ausführungsform kann die optional vorhandene wenigstens eine elektrisch leitfähige oder halbleitende Schicht auch als Bestandteil der wenigstens einen Entspiegelungsschicht vorliegen, d.h. wenigstens eine der zur Entspiegelungsschicht gehörenden Schichten kann auf der Vorderfläche V_{DA} des Dünnstglases der Komponente A vorliegen, objektseitig gefolgt von der elektrisch leitfähigen oder halbleitenden Schicht, den restlichen zur Entspiegelungsschicht gehörenden Schichten sowie weiter objektseitig gefolgt von der Antibeschlagsschicht oder der Clean-Coat-Schicht.

Das Dünnstglas der Komponente A umfasst bevorzugt auf der Rückfläche des Dünnstglases R_{DA}, d.h. der Fläche des Dünnstglases, welche im erfindungsgemäßen Brillenglas in Richtung der Komponente B bzw. in Richtung einer weiter objektseitig angeordneten Komponente des erfindungsgemäßen Brillenglases gerichtet ist, wenigstens eine Funktionsschicht F_{RA}. Die Funktionsschicht F_{RA} kann beispielsweise wenigstens eine farbgebende Schicht, wenigstens eine photochrome Schicht, wenigstens eine polarisierende Schicht und/oder wenigstens eine Verspiegelungsschicht umfassen.

Bei einer Ausführungsform der Erfindung kann die wenigstens eine Funktionsschicht F_{RA} der wenigstens einen Funktionsschicht F_{VB} entsprechen, wobei in Anwesenheit mehrerer Funktionsschichten F_{RA} bzw. F_{VB} die bevorzugte Schichtenfolge zwischen den Komponenten A und B des erfindungsgemäßen Brillenglases beachtet werden muss.

Umfasst die Funktionsschicht F_{RA} der Rückfläche R_{DA} des Dünnstglases der Komponente A wenigstens eine farbgebende Schicht, umfasst diese bevorzugt eine färbbare Schicht gemäß US 4,355,135 A, insbesondere gemäß Anspruch 1 der US 4,355,135 A, gemäß US 4,294,950 A, insbesondere gemäß einem der Ansprüche 1 oder 6 der US 4,294,950 A oder gemäß US 4,211,823 A, insbesondere gemäß einem der Ansprüche 1 oder 2 der US 4,211,823 A. Besonders bevorzugt umfasst die farbgebende Schicht eine färbbare Schicht gemäß US 4,355,135 A. Das zur Einfärbung einsetzbare Farbmittel kann beispielsweise aus der Gruppe bestehend aus C.I. Disperse Yellow 5, C.I. Disperse Yellow 13, C.I. Disperse Yellow 33, C.I. Disperse Yellow 42, C.I. Disperse Yellow 51, C.I. Disperse Yellow 54, C.I. Disperse Yellow 64, C.I. Disperse Yellow 71, C.I. Disperse Yellow 86, C.I. Disperse Yellow 114, C.I. Disperse Yellow 201, C.I. Disperse Yellow 211, C.I. Disperse Orange 30, C.I. Disperse Orange 73, C.I. Disperse Red 4, C.I. Disperse Red 11, C.I. Disperse Red 15, C.I. Disperse Red 55, C.I. Disperse Red 58, C.I. Disperse Red 60, C.I. Disperse Red 73, C.I. Disperse Red 86, C.I. Disperse Red 91, C.I. Disperse Red 92, C.I. Disperse Red 127, C.I. Disperse Red 152, C.I. Disperse Red 189, C.I. Disperse Red 229, C.I. Disperse Red 279, C.I. Disperse Red 302, C.I. Disperse Red 302:1, C.I. Disperse Red 323, C.I. Disperse Blue 27, C.I. Disperse Blue 54, C.I. Disperse Blue 56, C.I. Disperse Blue 73, C.I. Disperse Blue 280, C.I. Disperse Violet 26, C.I. Disperse Violet 33, C.I. Solvent Yellow 179, C.I. Solvent Violet 36, C.I. Pigment Blue 15, C.I. Pigment Blue 80, C.I. Pigment Green 7, C.I. Pigment Orange 36, C.I. Pigment Orange 36, C.I. Pigment Yellow 13, C.I. Pigment Violet 23, C.I. Pigment Violet 37, C.I. Pigment Black 1, C.I. Pigment Black 6 und C.I. Pigment Black 7 ausgewählt sein.
Alternativ hierzu kann die farbgebende Schicht auch mittels einer Farbmittel umfassenden Drucktinte, insbesondere 3D-Drucktinte, aufgebracht werden.

Umfasst die Funktionsschicht F_{RA} wenigstens eine photochrome Schicht, umfasst diese bevorzugt eine Schicht gemäß US 2006/0269741 A1, insbesondere gemäß US 2006/0269741 A1, Anspruch 6, oder eine Schicht gemäß US 2004/0220292 A1, insbesondere gemäß US 2004/0220292 A1, Anspruch 1. Die photochrome Schicht weist bevorzugt eine mittlere Dicke aus einem Bereich von 5 µm bis 200 µm, weiter bevorzugt aus einem Bereich von 9 µm bis 166 µm, besonders bevorzugt aus einem Bereich von 17 µm bis 121 µm und ganz besonders bevorzugt aus einem Bereich von 21 µm bis 81 µm auf.

Umfasst die Funktionsschicht F_{RA} wenigstens eine polarisierende Schicht, umfasst diese vorzugsweise entweder eine Polarisationsfolie oder eine Schicht mit polarisierenden Eigenschaften.
Als Polarisationsfolie kann eine Folie aus beispielsweise Polyvinylalkohol oder Polyethylenterephthalat eingesetzt werden, welche dichroitische Farbmittel umfasst. Die Polarisationsfolie kann einen einschichtigen oder mehrschichtigen Folienaufbau aufweisen. Bei einer Ausführungsform der Erfindung kann die Polarisationsfolie einen mehrschichtigen Aufbau aufweisen, welcher wenigstens eine Folienschicht mit dichroitischen Farbmitteln, wenigstens eine stabilisierende Folienschicht und wenigstens eine Folienschicht mit dichroitischen Farbmitteln oder ohne dichroitische Farbmittel umfasst. Die dichroitische Farbmittel umfassende Folienschicht kann bei dieser Ausführungsform ebenso wie die Folienschicht ohne dichroitische Farbmittel jeweils beispielsweise eine Folienschicht aus Polyvinylalkohol, Polyvinylformal, Polyvinylbutyral oder Polyvinylacetat umfassen. Alternativ zu dichroitischen Farbmitteln, wie beispielsweise C.I. Direct Blue 67, C.I. Direct Blue 90, C.I. Direct Blue 200, C.I. Direct Green 59, C.I. Direct Violet 48, C.I. Direct Red 39, C.I. Direct Red 81, C.I. Direct Red 83, C.I. Direct Red 89, C.I. Direct Orange 39, C.I. Direct Orange 72, C.I. Direct Yellow 34, C.I. Direct Green 26, C.I. Direct Green 27, C.I. Direct Green 28, C.I. Direct Green 51 und/oder C.I. Direct Black 170 kann auch Iod eingesetzt werden. Die stabilisierende Folienschicht kann bei dieser Ausführungsform beispielsweise Polyethylenterephthalat, Polymethacrylat, Polymethylmethacrylat, Polycarbonat, Celluloseacetatbutyrat und/oder Triacetylcellulose umfassen. Bei einer weiteren Ausführungsform der Erfindung kann die Polarisationsfolie passgenau zur Rückfläche des Dünnstglases der Komponente A vorgeformt vorliegen. Bevorzugt wird die Polarisationsfolie unter Anlegen von Vakuum unter Zuhilfenahme einer Metallform vorgeformt.
Eine Schicht mit polarisierenden Eigenschaften ist beispielsweise in EP 1 965 235 A1, EP 0 217 502 A1, EP 1 674 898 A1, US 2006/0066947 A1, WO 2005/050265 A1, WO 2009/029198 A1, WO 2009/156784 A1 oder WO 2015/160612 A1 offenbart. In vorstehend genannten Anmeldungen ist die Schicht mit polarisierenden Eigenschaften jeweils Bestandteil einer dort beschriebenen Schichtenfolge. Im Rahmen dieser Erfindung wird vorzugsweise nur die in den genannten Anmeldungen beschriebene Schicht mit polarisierenden Eigenschaften als polarisierende Schicht eingesetzt. Bei einer Ausfiihrungsform der Erfindung kann das Dünnstglas der Komponente A beispielsweise mittels einer Formschale umgeformt werden, welche auf derjenigen Oberfläche des Dünnstglases, welche während des Umformvorgangs mit der Oberfläche der Formschale in Kontakt gekommen ist, eine regelmäßige, vorzugsweise lineare Oberflächenstrukturierung hinterlässt. Diese Oberflächenstrukturierung kann dahingehend ausgenutzt werden, dass die zur Herstellung der Schicht mit polarisierenden Eigenschaften einsetzbaren dichroitischen Farbmittel diese Oberflächenstrukturierung ausfüllen und somit im Unterschied zu vorstehend zitierten Anmeldung der dort notwendige Schritt der Mikrorissbildung bzw. die zur Oberflächenstrukturierung notwendige Beschichtung nicht mehr notwendig ist.
Bei einer bevorzugten Ausführungsform wird umfasst die Funktionsschicht F_{RA} als polarisierende Schicht eine Polarisationsfolie, vorzugsweise eine Polarisationsfolie mit einem mehrschichtigen Folienaufbau.

Umfasst die Funktionsschicht F_{RA} wenigstens eine Verspiegelungsschicht, umfasst diese vorzugsweise alternierende dielektrische Schichten im Sinne eines Bragg-Spiegels und/oder wenigstens eine semitransparente Metallschicht. Bei der Verspiegelungsschicht handelt es sich bevorzugt um eine semitransparente Metallschicht. Die wenigstens eine semitransparente Metallschicht kann beispielsweise eine Aluminiumschicht, Chromschicht, Goldschicht und/oder eine Silberschicht umfassen. Die Schichtdicke der semitransparenten Metallschicht liegt bevorzugt in einem Bereich von 4 nm bis 48 nm, besonders bevorzugt in einem Bereich von 8 nm bis 41 nm und ganz besonders bevorzugt in einem Bereich von 17 nm bis 33 nm. Die wenigstens eine semitransparente Metallschicht wird vorzugsweise mittels eines PVD-Verfahrens auf die Rückfläche des Dünnstglases R_{DA} der Komponente A aufgebracht.

Bei einer Ausführungsform der Erfindung umfasst die Rückfläche des Dünnstglases R_{DA} der Komponente A eine Verspiegelungsschicht als Funktionsschicht F_{RA} und die Vorderfläche des Dünnstglases V_{DA} der Komponente A keine Entspiegelungsschicht. Bei dieser Ausführungsform kann das erfindungsgemäße Brillenglas auf der Rückfläche des Dünnstglases R_{DC} der Komponente C bzw. augenseitig an die Funktionsschicht F_{C} der Komponente C angrenzend eine Entspiegelungsschicht umfassen. Auf diese Weise kann sichergestellt werden, dass weniger störende Reflexe von der augenseitigen Rückfläche des erfindungsgemäßen Brillenglases in das Auge gelangen.

Bei einer bevorzugten Ausführungsform der Erfindung umfasst die Rückfläche des Dünnstglases R_{DA} der Komponente A genau einen Typ einer Funktionsschicht F_{RA}, wobei die Funktionsschicht F_{RA} aus der Gruppe, bestehend aus farbgebender Schicht, photochromer Schicht, polarisierender Schicht und Verspiegelungsschicht, ausgewählt sein kann.

Bei einer weiteren Ausführungsform der Erfindung umfasst die Rückfläche des Dünnstglases R_{DA} der Komponente A mehrere Typen einer Funktionsschicht F_{RA}, wobei die Funktionsschicht F_{RA} aus der Gruppe, bestehend aus farbgebender Schicht, photochromer Schicht, polarisierender Schicht und Verspiegelungsschicht, ausgewählt sein kann. Bei dieser Ausführungsform ist es bevorzugt, wenn im erfindungsgemäßen Brillenglas, ausgehend von der objektseitigen Vorderfläche zur gegenüberliegenden augenseitigen Rückfläche, eine der nachstehenden Kombinationen der Funktionsschicht F_{RA} in der angegebenen Reihenfolge zwischen den Komponenten A und B vorliegen: Komponente A / photochrome Schicht / polarisierende Schicht / farbgebende Schicht / Komponente B, Komponente A / photochrome Schicht / farbgebende Schicht / polarisierende Schicht / Komponente B, Komponente A / photochrome Schicht / polarisierende Schicht / Verspiegelungsschicht / Komponente B,
Komponente A / photochrome Schicht / Verspiegelungsschicht / polarisierende Schicht / Komponente B,
Komponente A / photochrome Schicht / Verspiegelungsschicht / Komponente B,
Komponente A / Verspiegelungsschicht / polarisierende Schicht / farbgebende Schicht / Komponente B,
Komponente A / polarisierende Schicht / farbgebende Schicht / Komponente B,
Komponente A / Verspiegelungsschicht / polarisierende Schicht / Komponente B oder
Komponente A / Verspiegelungsschicht / farbgebende Schicht / Komponente B.

Bei einer Ausführungsform der Erfindung umfasst das erfindungsgemäße Brillenglas die Komponenten A, B und C, wobei das Dünnstglas der Komponente A auf der Rückfläche des Dünnstglases R_{DA} keine Funktionsschicht F_{RA} aufweist. In diesem Fall können keine Schichten zwischen den Komponenten A und B im erfindungsgemäßen Brillenglas angeordnet sein und somit die Komponenten A und B direkt stoffschlüssig und/oder formschlüssig miteinander verbunden sein. Alternativ hierzu kann es sich bei der Komponente B um ein Brillenglas-Halbfabrikat handeln, dessen Vorderfläche mit wenigstens einer Funktionsschicht F_{VB} beschichtet ist, wobei die objektseitig äußerste Funktionsschicht F_{VB} der Komponente B dann stoffschlüssig und/oder formschlüssig mit der Rückfläche des Dünnstglases R_{DA} verbindbar ist.

Werden die einzelnen Komponenten getrennt voneinander prozessiert und vorbereitet, so kann im Vorhinein entschieden werden, welche Art von Schicht bevorzugt auf A, B oder C aufgebracht wird, um optimale Prozessbedingungen zu gewährleisten. So kann zum Beispiel die Komponente A und / oder C, sofern C ein Dünnstglas ist, mit den Bedampfungsparametern im PVD-Prozess für die Antireflexbeschichtung auf Mineralgläsern bearbeitet werden. Diese Parameter, die typischerweise die Anwendung von Temperaturen von größer 200°C bis 800°C, wie beispielsweise in der WO 98/45113 A1 oder der DE 10 2007 025 151 A beschrieben, umfassen, sind nicht mit den polymeren Materialien der Komponente B verträglich, so dass das erfindungsgemäße Brillenglas, dass die Komponenten A, B und C umfasst, nicht auf diesem Weg bearbeitet werden kann.

Im Rahmen dieser Erfindung werden unter "stoffschlüssigen Verbindungen" Verbindungen verstanden, welche die jeweiligen Komponenten des erfindungsgemäßen Brillenglases, vorzugsweise die Komponenten A und B bzw. die Komponenten B und C bzw. die Komponenten A und C zusammenhalten. Die Verbindung der einzelnen Komponenten kann hierbei direkt erfolgen, d.h. keine der beiden zu verbindenden Komponenten weist an derjenigen Oberfläche, welche mit der anderen Komponente verbunden werden soll eine Funktionsschicht auf. Alternativ kann wenigstens eine der Komponenten mit wenigstens einer Funktionsschicht belegt sein. In letzterem Fall erfolgt die stoffschlüssige Verbindung über die jeweils äußerste Funktionsschicht, welche der Oberfläche der anzubindenden Komponente bzw. deren äußerster Funktionsschicht zugewandt ist.
Im Rahmen dieser Erfindung werden unter "formschlüssigen Verbindungen" Verbindungen verstanden, bei denen die einzelnen Komponenten des erfindungsgemäßen Brillenglases, vorzugsweise die Komponenten A und B bzw. die Komponenten B und C bzw. die Komponenten A und C, passgenau zusammengefügt werden können. Zwischen den Komponenten A und C angeordnete Funktionsschichten weisen in der Regel die gleiche Oberflächentopographie wie die jeweils darunter liegende Oberfläche auf, so dass funktionsbeschichtete Komponenten formschlüssig verbindbar sind. Geringfügige Abweichungen in der Oberflächentopographie der beiden zusammenzufügenden Oberflächen können beispielsweise mittels eines Klebemittels verfüllt werden. Um die einzelnen Komponenten des erfindungsgemäßen Brillenglases formschlüssig miteinander verbinden zu können, sollten die Krümmungsradien der jeweils miteinander zu verbindenden Komponenten bevorzugt weniger als 1 mm, weiter bevorzugt in einem Bereich von 0,03 mm bis ≤ 0,8 mm, besonders bevorzugt in einem Bereich von 0,04 mm bis ≤ 0,7 mm und ganz besonders bevorzugt in einem Bereich von 0,05 mm bis ≤ 0,6 mm voneinander abweichen.
Sowohl stoffschlüssige als auch formschlüssige Verbindungen können beispielsweise durch Wärmebeaufschlagung und/oder durch Ansprengen und/oder mittels eines Klebemittels erreicht werden.

Bei einer Ausführungsform der Erfindung umfasst das Dünnstglas der Komponente A auf der Vorderfläche des Dünnstglases V_{DA} keine Funktionsschicht F_{VA}.

Bei einer weiteren Ausführungsform der Erfindung umfasst das Dünnstglas der Komponente A auf der Vorderfläche des Dünnstglases V_{DA} wenigstens eine Funktionsschicht F_{VA} und auf der Rückfläche des Dünnstglases R_{DA} keine Funktionsschicht F_{RA}. Bei dieser Ausführungsform handelt es sich bei der wenigstens einen Funktionsschicht F_{VA} bevorzugt um eine Entspiegelungsschicht oder um eine Entspiegelungsschicht sowie eine Clean-Coat-Schicht, wobei in letzterem Fall die Clean-Coat-Schicht die objektseitig außenliegende Schicht ist.

Bei einer bevorzugten Ausführungsform umfasst das Dünnstglas der Komponente A auf der Vorderfläche des Dünnstglases V_{DA} wenigstens eine Funktionsschicht F_{VA} und auf der Rückfläche des Dünnstglases R_{DA} wenigstens eine Funktionsschicht F_{RA}. Bei dieser Ausführungsform umfasst die Funktionsschicht F_{VA} bevorzugt eine Entspiegelungsschicht und die Funktionsschicht F_{RA} bevorzugt eine photochrome Schicht.

Die Beschichtung des Dünnstglases der Komponente A mit wenigstens einer Funktionsschicht F_{VA} auf der Vorderfläche des Dünnstglases V_{DA} kann entweder vor dem Zusammenbringen der Komponente A mit den restlichen Komponenten des erfindungsgemäßen Brillenglases, vorzugsweise der Komponente B bzw. den Komponenten B und C, oder danach erfolgen. Bevorzugt wird die Vorderfläche des Dünnstglases V_{DA} des erfindungsgemäßen Brillenglases, d.h. des Brillenglases umfassend vorzugsweise wenigstens die Komponenten A, B und C, mit wenigstens einer Funktionsschicht F_{VA} beschichtet.

Die Beschichtung der Vorderfläche und/oder der Rückfläche des Dünnstglases der Komponente A kann in Abhängigkeit von der jeweils aufzubringenden Beschichtung vor oder nach der gegebenenfalls gewünschten Umformung des Dünnstglases erfolgen. Bevorzugt werden organische Schichten, wie beispielsweise eine photochrome Schicht oder eine Antibeschlagschicht, oder eine Polarisationsfolie nach der Umformung des Dünnstglases aufgebracht, während anorganische Schichten, wie beispielsweise eine Entspiegelungsschicht oder eine Verspiegelungsschicht, vor oder nach der Umformung des Dünnstglases aufgebracht werden können. Bevorzugt werden anorganische Funktionsschichten F_{VA} und/oder F_{RA} nach der Umformung des Dünnstglases der Komponente A auf dieses aufgebracht. Vorstehende Ausführungen gelten entsprechend für das optional vorhandene Dünnstglas der Komponente C.

Das Dünnstglas der Komponente C kann auf der Vorderfläche des Dünnstglases V_{DC} wenigstens eine Funktionsschicht Fvc umfassen. Die Funktionsschicht Fvc kann beispielsweise eine farbgebende Schicht umfassen. Weiterhin umfasst das Dünnstglas der Komponente C auf der Rückfläche des Dünnstglases R_{DC} bevorzugt wenigstens eine Funktionsschicht F_{RC}. Bei der Funktionsschicht F_{RC} kann es sich um wenigstens eine Entspiegelungsschicht, wenigstens eine Antibeschlagsschicht oder wenigstens eine Clean-Coat-Schicht handeln. Bevorzugt umfasst die Funktionsschicht F_{RC} wenigstens eine Entspiegelungsschicht und wenigstens eine Clean-Coat-Schicht, wobei die Clean-Coat-Schicht die äußerste augenseitige Schicht des erfindungsgemäßen Brillenglases ist. Vorstehende Schichten wurden bereits im Zusammenhang mit dem Dünnstglas der Komponente A detailliert beschrieben.

Die Beschichtung der Vorderfläche und/oder der Rückfläche des Dünnstglases der Komponente A bzw. der Komponente C kann jeweils mittels eines PVD-Verfahrens und/oder eines Schleuderbeschichtungsverfahrens erfolgen. Die anschließende Aushärtung der im Schleuderbeschichtungsverfahren erhaltenen Beschichtung kann entweder thermisch oder strahlungshärtend erfolgen. Bevorzugt erfolgt die Aushärtung dieser Beschichtung strahlungshärtend.

Umfassen die erfindungsgemäßen Brillengläser aneinandergrenzende Funktionsschichten, ist es für den Fachmann selbstverständlich, dass diese zueinander kompatibel sein müssen, um beispielsweise eine Separation des erfindungsgemäßen Brillenglases zu unterbinden.

Die Komponente C des erfindungsgemäßen Brillenglases kann zusätzlich oder alternativ zu einem Dünnstglas wenigstens eine Funktionsschicht F_{C} umfassen. In Abwesenheit eines Dünnstglases ist die Funktionsschicht F_{C} der Komponente C bevorzugt aus der Gruppe bestehend aus wenigstens einer Hartlackschicht, vorzugsweise einer Zusammensetzung für die Herstellung einer Beschichtung mit hoher Haftfestigkeit und hoher Kratzbeständigkeit, wie beispielsweise in EP 2 578 649 A1, insbesondere in EP 2 578 649 A1, Anspruch 1, beschrieben, wenigstens einer Entspieglungsschicht, wenigstens einer Antibeschlagsschicht, wenigstens einer Clean-Coat-Schicht und wenigstens einer elektrisch leitfähigen oder halbleitenden Schicht, ausgewählt. Ausgehend von der Rückfläche R_{B} des Brillenglas-Fertigfabrikats der Komponente B ist in Anwesenheit mehrerer Funktionsschichten F_{C} die Beschichtungsreihenfolge in Richtung Auge wie folgt:
a) optional wenigstens einer elektrisch leitfähigen oder halbleitenden Schicht,
b) wenigstens eine Entspiegelungsschicht,
c) wenigstens eine Antibeschlagsschicht oder wenigstens eine Clean-Coat-Schicht.
Die optional als Funktionsschicht F_{C} vorhandene elektrisch leitfähige oder halbleitende Schicht kann hierbei ein Bestandteil der Entspiegelungsschicht sein.

Bei einer Ausführungsform der Erfindung umfassen die Brillengläser keine Komponente B, sondern nur die Komponenten A und C. Bei dieser Ausführungsform umfassen die Brillengläser als Komponente A und C bevorzugt jeweils ein Dünnstglas, wobei das Dünnstglas der Komponente A und das Dünnstglas der Komponente C in Bezug auf die Glaskomposition und die Form vorzugsweise identisch ist. Die Vorderfläche des Dünnstglases V_{DA} der Komponente A ist auch bei dieser Ausführungsform bevorzugt mit wenigstens einer Funktionsschicht F_{VA}, die Rückfläche des Dünnstglases R_{DA} der Komponente A optional mit wenigstens einer Funktionsschicht F_{RA} beschichtet. Die Vorderfläche des Dünnstglases V_{DC} der Komponente C ist optional mit wenigstens einer Funktionsschicht Fvc, die Rückfläche des Dünnstglases R_{DC} der Komponente C bevorzugt mit wenigstens einer Funktionsschicht F_{RC} beschichtet. Die Funktionsschicht F_{RA} der Rückfläche des Dünnstglases R_{DA} der Komponente A bzw. die Funktionsschicht F_{VC} der Vorderfläche des Dünnstglases V_{DC} der Komponente C kann aus der Gruppe bestehend aus wenigstens einer farbgebenden Schicht, wenigstens einer photochromen Schicht, wenigstens einer polarisierenden Schicht und/oder wenigstens einer Verspiegelungsschicht ausgewählt sein. Bei dieser Ausführungsform müssen nicht alle zwischen den Komponenten A und C im Brillenglas angeordneten Funktionsschichten als wenigstens eine Funktionsschicht F_{RA} der Rückfläche R_{DA} der Komponente A bzw. als wenigstens eine Funktionsschicht Fvc der Vorderfläche V_{DC} der Komponente C vorliegen. Die Rückfläche R_{DA} des Dünnstglases der Komponente A und die Vorderfläche F_{VC} des Dünnstglases der Komponente C kann beispielsweise jeweils einen Teil der im Brillenglas umfassend die Komponenten A und C vorhandenen Funktionsschichten aufweisen. Beispielsweise kann die Funktionsschicht F_{RA} eine photochrome Schicht und die Funktionsschicht F_{VC} eine polarisierende Schicht umfassen. Bei der wenigstens einen Funktionsschicht F_{VA} der Vorderfläche des Dünnstglases V_{DA} der Komponente A bzw. der wenigstens einen Funktionsschicht F_{RC} der Rückfläche des Dünnstglases R_{DC} der Komponente C kann es sich um wenigstens eine Entspiegelungsschicht, wenigstens eine Antibeschlagschicht, wenigstens eine elektrisch leitfähige oder halbleitende Schicht und/oder wenigstens eine Clean-Coat-Schicht handeln. Bevorzugt ist bei dieser Ausführungsform, dass die Funktionsschicht F_{VA} der Vorderfläche des Dünnstglases V_{DA} der Komponente A und die Funktionsschicht F_{RC} der Rückfläche des Dünnstglases R_{DC} der Komponente C jeweils eine Entspiegelungsschicht und als jeweils äußerste Schicht objektseitig bzw. augenseitig eine Clean-Coat-Schicht umfasst. Die Komponenten A und C sind bei dieser Ausführungsform vorzugsweise stoffschlüssig und formschlüssig miteinander verbunden. Um eine Erhöhung der mechanischen Stabilität zu gewährleisten und/oder unterschiedliche Krümmungsradien der Dünnstgläser der Komponenten A und C zu berücksichtigen, kann bei dieser Ausführungsform ein Klebemittel zwischen den Komponenten A und C zugegeben sein. Im Hinblick auf die unterschiedlichen Krümmungsradien der Komponenten A und C gelten die vorstehend genannten Ausführungen, d.h. die Krümmungsradien sollten weniger als 1 mm, weiter bevorzugt in einem Bereich von 0,03 mm bis ≤ 0,8 mm, besonders bevorzugt in einem Bereich von 0,04 mm bis ≤ 0,7 mm und ganz besonders bevorzugt in einem Bereich von 0,05 mm bis ≤ 0,6 mm voneinander abweichen. Weiterhin können unterschiedliche Oberflächentopographien der Dünnstgläser der Komponenten A und C bzw. der darauf optional vorhandenen Funktionsschichten F_{RA} bzw. Fvc mittels eines Klebemittels verfüllt werden. Die Oberflächentopographie der Funktionsschichten F_{RA} bzw. Fvc ist vorzugsweise an die Oberflächentopographie der Rückfläche des Dünnstglases R_{DA} der Komponente A bzw. der Vorderfläche des Dünnstglases V_{DC} der Komponente C angepasst.

Die Komponente B des erfindungsgemäßen Brillenglases umfasst wenigstens ein polymeres Material und/oder wenigstens ein mineralisches Glas.

Bei einer Ausführungsform der Erfindung umfasst die Komponente B wenigstens ein polymeres Material oder wenigstens ein mineralisches Glas, wobei das polymere Material bzw. das mineralische Glas jeweils als Brillenglas-Halbfabrikat oder als Brillenglas-Fertigfabrikat vorliegen können. Bei einer weiteren Ausführungsform kann das polymere Material der Komponente B eine Kunststofffolie umfassen. Brillenglas-Halbfabrikate bzw. Brillenglas-Fertigfabrikate können beispielsweise auf den in nachstehender Tabelle 1 genannten Grundmaterialien basieren.

**Tabelle 1: Beispiele für Grundmaterialien für Brillenglas-Halbfabrikate bzw. Brillenglas-Fertigfabrikate**

| Handelsname | Grundmaterial | Mittlerer Brechungsindex n* | Abbe-Zahl v* |
|---|---|---|---|
| CR 39, CR 330, CR 607, CR 630 RAV 700, 7NG, 7AT, 710, 713, 720 | Polyallyldiglycolcarbonat ((P)ADC) | 1,500 | 56 |
| RAVolution | Polyharnstoff / Polyurethan | 1,500 | 54 |
| Trivex | Polyharnstoff / Polyurethan | 1,530 | 45 |
| Panlite, Lexan | Polycarbonat (PC) | 1,590 | 29 |
| MR 6 | Polythiourethan | 1,598 | |
| MR 8 | Polythiourethan | 1,598 | 41 |
| MR 7 | Polythiourethan | 1,664 | 32 |
| MR 10 | Polythiourethan | 1,666 | 32 |
| MR 174 | Polyepisulfid | 1,738 | 32 |
| MGC 1.76 | Polyepisulfid | 1,76 | 30 |
| | Mineral 1.5 | 1,525 | 58 |
| | Mineral 1.6 | 1,604 | 44 |

| | | | |
|---|---|---|---|
| * Bezogen auf Natrium D-Linie | | | |

Zur Herstellung eines erfindungsgemäßen Brillenglases umfassend die Komponenten A, B und C wird bei dieser Ausführungsform die Rückfläche des Dünnstglases R_{DA} der Komponente A mit der Vorderfläche V_{B} der Komponente B zusammengefügt. Die Rückfläche R_{B} der Komponente B wird, für den Fall, dass Komponente C ein Dünnstglas umfasst, mit der Vorderfläche des Dünnstglases V_{DC} der Komponente C zusammengefügt. Alternativ wird die Rückfläche R_{B} der Komponente B, für den Fall, dass Komponente C wenigstens eine Funktionsschicht F_{C} umfasst, mit dieser beschichtet. In Abwesenheit der Komponente B wird die Rückfläche des Dünnstglases R_{DA} der Komponente A mit der Vorderfläche des Dünnstglases V_{DC} der Komponente C zusammengefügt.
Das Zusammenfügen der einzelnen Komponenten des erfindungsgemäßen Brillenglases erfolgt beispielsweise mittels eines Klebemittels oder eines Bonding-Verfahrens. Bevorzugt erfolgt das Zusammenfügen der einzelnen Komponenten des erfindungsgemäßen Brillenglases mittels eines Klebemittels. Das Klebemittel kann hierbei beispielsweise als Primer oder Ausgleichsmaterial für die die unterschiedliche Wärmeausdehnung der einzelnen Komponenten dienen. Weiterhin kann über die Auswahl des Klebemittels eine Angleichung eines gegebenenfalls vorhandenen Brechungsindexunterschieds Δn_{D} der einzelnen Komponenten zueinander erzielt werden. Vorzugsweise erfolgt hierbei nicht nur die Angleichung des Brechungsindex n_{D}, sondern auch die Angleichung der Abbe-Zahl, so dass die Änderung des Brechungsindex der einzelnen Komponenten über das sichtbare Spektrum hinweg gleich ist. Das im erfindungsgemäßen Brillenglas einsetzbare Klebemittel kann beispielsweise der DE 10 2012 210 185 A1, der WO 2009/056196 A1 oder der WO 2015/121341 A1 entnommen werden. Bevorzugt werden die einzelnen Komponenten des erfindungsgemäßen Brillenglases mittels eines Klebemittels basierend auf einer aminkatalysierten Thiolhärtung von Epoxidharzen analog WO 2015/121341 A1, insbesondere analog Anspruch 1 der WO 2015/121341 A1, bei einer Temperatur aus einem Bereich von 20°C bis 80°C, bevorzugt aus einem Bereich von 40°C bis 70°C und besonders bevorzugt aus einem Bereich von 45°C bis 65°C miteinander verbunden.

Bei einer Ausführungsform der Erfindung weisen die Komponenten A, B, und C, für den Fall, dass es sich bei Komponente C um ein Dünnstglas handelt, vor dem Zusammenfügen mittels eines Klebemittels die identischen Durchmesser auf.

Die Oberflächentopographie einer Funktionsschicht ist vorzugsweise der Oberflächentopographie der jeweils damit beschichteten Vorderfläche oder Rückfläche einer der Komponenten des erfindungsgemäßen Brillenglases angepasst. Unter angepasst ist hierbei zu verstehen, dass die beiden Oberflächentopographien im Wesentlichen gleich sind bzw. die Unterschiede so gering sind, dass sie mit einem der vorstehend aufgeführten Klebemittel verfüllt werden können.

Für den Fachmann ist es in diesem Zusammenhang weiterhin selbstverständlich, dass die jeweils an den Grenzflächen zwischen den Komponenten A und B bzw. B und C des erfindungsgemäßen Brillenglases optional vorhandene(n) Funktionsschicht(en) bei der Auswahl eines geeigneten Klebemittels mit berücksichtigt werden sollte(n).

Wird zur Herstellung eines die Komponenten A, B und C umfassenden Brillenglases als Komponente B ein Brillenglas-Halbfabrikat herangezogen, ist die optisch wirksame Zielfläche des Brillenglas-Halbfabrikats vorzugsweise stoffschlüssig und formschlüssig entweder mit der Rückfläche des Dünnstglases der Komponente A oder gegebenenfalls mit der Vorderfläche des Dünnstglases der Komponente C verbindbar. Mögliche Oberflächentopographien einer optisch wirksamen Zielfläche der Vorderfläche V_{B} bzw. der Rückfläche R_{B} der Komponente B sowie die hierzu jeweils passenden Oberflächentopographien der Dünnstgläser der Komponenten A und C, sofern Komponente C ein Dünnstglas umfasst, sind Tabelle 2 zu entnehmen. Bei dieser Ausführungsform kann die der optisch wirksamen Zielfläche des Brillenglas-Halbfabrikats gegenüberliegende Fläche zunächst ebenfalls in eine optisch wirksame Zielfläche überführt werden und die resultierende Komponente B kann mit dem Dünnstglas der Komponente A und optional der Komponente C, jeweils vorzugsweise stoffschlüssig und/oder formschlüssig, verbunden werden. Anstelle des Dünnstglases der Komponente C kann die Rückfläche der Komponente B auch mit einer Funktionsschicht F_{C} beschichtet werden. Vorzugsweise ist bei der Verwendung eines Brillenglas-Halbfabrikats die Vorderfläche V_{B} der Komponente B die optisch wirksame Zielfläche. Eine alternative Herstellungsmöglichkeit des erfindungsgemäßen Brillenglases mittels eines Brillenglas-Halbfabrikats umfasst die vorzugsweise stoffschlüssige und/oder formschlüssige Verbindung der optisch wirksamen Zielfläche des Brillenglas-Halbfabrikats mit einem der Dünnstgläser der Komponenten A oder C. Bevorzugt wird hierbei die optisch wirksame Vorderfläche V_{B} des Brillenglas-Halbfabrikats der Komponente B mit der Rückfläche R_{DA} des Dünnstglases der Komponente A stoffschlüssig und formschlüssig verbunden. Dieser Verbund erlaubt für die Bearbeitung der Rückfläche R_{B} eine geringe Mindestdicke der Komponente B ohne deren Stabilität zu beinträchtigen. Nach beendeter Rückflächenbearbeitung kann diese entweder mit der Vorderfläche des Dünnstglases V_{DC} der Komponente C vorzugsweise stoffschlüssig und/oder formschlüssig verbunden werden oder mit einer Funktionsschicht F_{C} beschichtet werden. Die vorzugsweise stoffschlüssige und/oder formschlüssige Verbindung kann mittels eines Klebmittels, mittels eines Bonding-Verfahrens oder mittels Ansprengen erfolgen. Bevorzugt ist die Verbindung der einzelnen Komponenten mittels eines Klebemittels. Geringfügige Unterschiede in der Oberflächentopographie und/oder eine unterschiedliche Wärmeausdehnung können mittels eines Klebemittels verfüllt bzw. ausgeglichen werden. Vorzugsweise erfolgt die Herstellung eines erfindungsgemäßen Brillenglases mit Hilfe eines Brillenglas-Halbfabrikats über das zuletzt vorgestellte Verfahren. Selbstredend können die einzelnen Komponenten des erfindungsgemäßen Brillenglases vor dem Zusammenfügen mit wenigstens einer der bereits detailliert beschriebenen Funktionsschichten belegt sein. Die separate Beschichtung bzw. separate Vorbereitung der einzelnen Komponenten hat den Vorteil, dass die Prozessbedingungen auf die jeweilige Komponente optimal zugeschnitten werden können. Umfasst das erfindungsgemäße Brillenglas weitere Komponente, so gelten vorstehende Ausführungen in Bezug auf die Komponenten A, B und C entsprechend.

In nachstehender Tabelle 2 wird beispielhaft ein Überblick der möglichen Oberflächentopographien der Vorderflächen bzw. der Rückflächen der Komponenten A, B und C des erfindungsgemäßen Brillenglases gegeben, sofern Komponente C ein Dünnstglas und Komponente B ein Brillenglas-Fertigfabrikat umfasst. In Tabelle 2 wird nicht zwischen Vorderfläche und Rückfläche des jeweiligen Dünnstglases der Komponente A bzw. C unterschieden, da die durch einen gegebenenfalls vorausgegangenen Umformungsprozess hervorgerufenen Unterschiede in der Oberflächentopographie vorzugweise vernachlässigbar sind. Weiterhin werden bei dem beispielhaften Überblick von Oberflächentopographien optional vorhandene Funktionsschichten nicht separat erwähnt, da die einzelnen Funktionsschichten vorzugsweise an die Oberflächentopographie der jeweils damit beschichteten Komponente angepasst und somit vorzugsweise in diesem Zusammenhang ebenfalls vernachlässigbar sind.

**Tabelle 2: Mögliche Oberflächentopographien der Komponenten A, B und C**

| Komponente A | Komponente B, Vorderfläche V_{B} | Komponente B, Rückfläche R_{B} | Komponente C |
|---|---|---|---|
| sphärisch¹⁾ | sphärisch | sphärisch | sphärisch |
| sphärisch | sphärisch | plan | plan |
| plan | plan | sphärisch | sphärisch |
| plan | plan | plan | plan |
| asphärisch¹⁾ | asphärisch | asphärisch | asphärisch |
| asphärisch | asphärisch | plan | plan |
| plan | plan | asphärisch | asphärisch |
| sphärisch | sphärisch | asphärisch | asphärisch |
| asphärisch | asphärisch | sphärisch | sphärisch |
| sphärisch | sphärisch | torisch¹⁾ | torisch |
| torisch | torisch | sphärisch | sphärisch |
| torisch | torisch | torisch | torisch |
| asphärisch | asphärisch | torisch | torisch |
| torisch | torisch | asphärisch | asphärisch |
| torisch | torisch | plan | plan |
| plan | plan | torisch | torisch |
| sphärisch | sphärisch | atorisch¹⁾ | atorisch |
| atorisch | atorisch | sphärisch | sphärisch |
| atorisch | atorisch | atorisch | atorisch |
| asphärisch | asphärisch | atorisch | atorisch |
| atorisch | atorisch | asphärisch | asphärisch |
| atorisch | atorisch | plan | plan |
| plan | plan | atorisch | atorisch |
| torisch | torisch | atorisch | atorisch |
| atorisch | atorisch | torisch | torisch |

| | | | |
|---|---|---|---|
| ¹⁾ Eine sphärische, asphärische, torische oder atorische Oberflächentopographie kann jeweils konvex oder konkav ausgestaltet sein. Beim Zusammenfügen der einzelnen Komponenten des erfindungsgemäßen Brillenglases werden vorzugsweise jeweils ausschließlich konkave oder jeweils ausschließlich konvexe Komponenten verwendet. | | | |

Bei einer Ausführungsform der Erfindung kann, wie aus oben stehender Tabelle 2 ersichtlich, für den Fall, dass Komponente C ein Dünnstglas und Komponente B ein Brillenglas-Fertigfabrikat umfasst, die Oberflächentopographie an der jeweiligen Grenzfläche der Komponenten A zu B bzw. B zu C passend zueinander sein, so dass die einzelnen Komponenten des erfindungsgemäßen Brillenglases vorzugsweise stoffschlüssig und/oder formschlüssig miteinander verbindbar sind. Zueinander passend meint hier, dass die jeweiligen Grenzflächen passgenau zusammengefügt oder dass geringfügige Unterschiede in der Oberflächentopographie mittels eines Klebemittels verfüllt werden können. Die Oberflächentopographie des Dünnstglases der Komponenten A und C kann gleich oder verschieden voneinander sein.

Bei einer Ausführungsform der Erfindung können die Vorderflächen und die Rückflächen der Komponenten A, B und C des erfindungsgemäßen Brillenglases jeweils eine identische Oberflächentopographie aufweisen, wie beispielhaft in Tabelle 2 aufgeführt. Sind die Vorderflächen und die Rückflächen der Komponenten A, B und C beispielsweise jeweils sphärisch geformt, können diese jeweils identische Krümmungsradien und Durchmesser aufweisen, so dass die Komponenten A und B und die Komponenten B und C jeweils stoffschlüssig und formschlüssig, beispielsweise mittels eines Klebemittels, eines Bonding-Verfahrens oder durch Ansprengen, zusammengefügt werden können. Bevorzugt ist das Zusammenfügen der einzelnen Komponenten des erfindungsgemäßen Brillenglases mittels eines Klebemittels, besonders bevorzugt mittels eines Klebemittels basierend auf einer aminkatalysierten Thiolhärtung von Epoxidharzen gemäß WO 2015/121341 A1. Sind die Vorderflächen und die Rückflächen der Komponenten A, B und C jeweils sphärisch geformt, weisen aber an der Grenzfläche zwischen den Komponenten A und B und/oder an der Grenzfläche zwischen den Komponenten B und C keine identischen Krümmungsradien auf, so werden die durch die Krümmungsunterschiede beim Zusammenfügen der einzelnen Komponenten entstehenden Hohlräume vorzugsweise mittels eines Klebemittels verfüllt. Auch zum Verfüllen von Hohlräumen wird bevorzugt ein Klebemittel basierend auf einer aminkatalysierten Thiolhärtung von Epoxidharzen gemäß WO 2015/121341 A1 eingesetzt. Bevorzugt weichen nicht identische Krümmungsradien der einzelnen Komponenten weniger als 1 mm, weiter bevorzugt in einem Bereich von 0,03 mm bis ≤ 0,8 mm, besonders bevorzugt in einem Bereich von 0,04 mm bis ≤ 0,7 mm und ganz besonders bevorzugt in einem Bereich von 0,05 mm bis ≤ 0,6 mm voneinander ab. Geringfügige Abweichungen der Krümmungsradien können dahingehend ausgenutzt werden, dass gegebenenfalls auftretende Lufteinschlüsse im Klebemittel während des Zusammenfügens durch einfaches Anpressen des Dünnstglases der Komponente A und/oder C in Richtung Zylinderrandfläche des Brillenglas-Halbfabrikats bzw. des Brillenglas-Fertigfabrikats der Komponente B entfernt werden können. Sind die Grenzflächen der Komponenten A, B und C jeweils plan geformt, können diese ebenfalls beispielsweise mittels eines Klebemittels oder eines Bonding-Verfahrens stoffschlüssig und formschlüssig zusammengefügt werden.

Bei einer weiteren Ausführungsform der Erfindung können die erfindungsgemäßen Brillengläser entweder keine oder wenigstens eine dioptrische Wirkung aufweisen, welche im Brillenglas-Fertigfabrikat, gegebenenfalls unter Berücksichtigung des Dünnstglases der Komponente A bzw. der Dünnstgläser der Komponenten A und C, realisiert ist. Erfindungsgemäße Brillengläser mit vorstehend beschriebenen Oberflächentopographien und gleichzeitig wenigstens einer dioptrischen Wirkung, d.h. als Einstärken-Brillenglas oder als Mehrstärken-Brillenglas können beispielsweise auch mittels einer Komponente B, welche eine berechnete ortsabhängige Brechungsindexverteilung aufweist, realisiert werden.

Bei einer Ausführungsform der Erfindung können wenigstens die Komponenten A, B und C, sofern es sich bei der Komponente C um ein Dünnstglas handelt, des erfindungsgemäßen Brillenglases mittels eines Bonding-Verfahrens zusammengefügt werden. Das Bonding-Verfahren kann alternativ oder zusätzlich zu einem Klebemittel oder zum Ansprengen zum Zusammenfügen der einzelnen Komponenten des erfindungsgemäßen Brillenglases herangezogen werden. Das Bonding-Verfahren kann sowohl in Zusammenhang mit Brillenglas-Halbfabrikaten und Brillenglas-Fertigfabrikaten als Komponente B zum Einsatz kommen. Alternativ können auch mehrere Verfahren zum Zusammenfügen eines erfindungsgemäßen Brillenglases zum Einsatz kommen. Beispielsweise können die Komponenten A und B mittels eines Bonding-Verfahrens und Komponenten B und C mittels eines Klebemittels zusammengefügt werden. Beim Bonding-Verfahren wird wenigstens eine Seite des Brillenglas-Fertigfabrikats bzw. die optisch wirksame Zielfläche des Brillenglas-Halbfabrikats zur Formgebung des Dünnstglases, welches mit eben dieser formgebenden Fläche verbunden werden soll, herangezogen. Hierzu wird das Dünnstglas der Komponente A bzw. das Dünnstglas der Komponente C bevorzugt bis zur Transformationstemperatur T_{G} des jeweiligen Dünnstglases, bevorzugt unter einer Schutzgasatmosphäre, erwärmt und mit der jeweils zu verbindenden Vorderfläche bzw. Rückfläche der Komponente B in Kontakt gebracht, beispielsweise durch Hineindrücken der Vorderfläche oder der Rückfläche der Komponente B in das erwärmte Dünnstglas. Komponente B dient hier zum einen als Formschale zur Umformung des Dünnstglases, zum anderen entfällt beim Bonding-Verfahren der Einsatz eines Klebemittels. Beim Einsatz des Bonding-Verfahrens ist es für den Fachmann selbstredend, dass die Prozessbedingungen für Brillenglas-Halbfabrikate oder Brillenglas-Fertigfabrikate der Komponente B basierend auf mineralischem Glas und Brillenglas-Halbfabrikate oder Brillenglas-Fertigfabrikate der Komponente B basierend auf organischen Materialien entsprechend angepasst werden müssen. Brillenglas-Halbfabrikate oder Brillenglas-Fertigfabrikate der Komponente B basierend auf mineralischem Glas können eine höhere Transformationstemperatur T_{G} als das zu bondende Dünnstglas der Komponenten A und optional C aufweisen, so dass hier beim Bonding-Verfahren weniger auf die Temperaturbeständigkeit der wenigstens einen optisch wirksamen Zielfläche der Komponente B selbst als auf eine auf der Komponente B aufgebrachte optional wenigstens eine Funktionsschicht geachtet werden muss und somit die Verfahrensbedingungen entsprechend angepasst werden müssen. Brillenglas-Halbfabrikate oder Brillenglas-Fertigfabrikate der Komponente B basierend auf organischen Materialien weisen in der Regel eine deutlich niedrigere Transformationstemperatur T_{G} als das zu bondende Dünnstglas der Komponente und optional der Komponente C. In diesem Fall muss das Bonding-Verfahren sowohl an die Temperaturbeständigkeit der Komponente B als auch an die Temperaturbeständigkeit einer optional auf der Komponente B vorhandenen Beschichtung angepasst werden. Dies kann beispielsweise dadurch erreicht werden, dass die Temperaturbelastung der Komponente B möglichst gering gehalten wird, indem Komponente B möglichst kurz, bevorzugt weniger als 5 Sekunden, besonders bevorzugt weniger als 2 Sekunden, einem zur Erwärmung des Dünnstglases dienenden Bereich, beispielweise einem Ofen, ausgesetzt ist. Diese kurzzeitige Temperaturbelastung der Komponente B bewirkt keine Veränderung der optisch wirksamen Zielfläche, da die Wärmekapazität des Dünnstglases in Anbetracht dessen geringer Masse gering gegenüber der Masse der Komponente B ist. Temperaturempfindliche Funktionsschichten der Komponente B können beispielsweise mit einer temperaturbeständigeren Schutzschicht geschützt werden. Hierbei kann es sich beispielsweise um eine Beschichtungszusammensetzung, wie z.B. in EP 2 578 649 A1, insbesondere in EP 2 578 649 A1, Anspruch 1, offenbart, oder um eine Metalloxid-, Metallhydroxid- und/oder Metalloxidhydratschicht, handeln. Die Schutzschicht kann weiterhin als Primer zum Ausgleich der Ausdehnungsunterschiede dienen.

Vorstehende Ausführungen zum Zusammenfügen der Komponenten A, B und C, mit einem Brillenglas-Fertigfabrikat als Komponente, können auf die Gegenwart weiterer Komponenten im erfindungsgemäßen Brillenglas entsprechend übertragen werden.

Bei einer weiteren Ausführungsform können die Dünnstgläser der Komponenten A und C mit einem Brillenglas-Fertigfabrikat durch einfaches Annähern angesprengt werden. Auf diese Weise kann ein stabiler Verbund ohne Klebemittel oder vorhergehende Erwärmung erzielt werden. Voraussetzung hierfür ist, dass die Dünnstgläser der Komponenten A und C sowie das Brillenglas-Fertigfabrikat der Komponente B einen identischen Krümmungsradius aufweisen. Bei einem identischen Krümmungsradius werden in diesem Zusammenhang Abweichungen im Submilllimeterbereich toleriert.

Bei einer Ausführungsform der Erfindung kann das Brillenglas-Halbfabrikat oder das Brillenglas-Fertigfabrikat der Komponente B eingefärbt (vgl. beschriebene Farbstoffe in Kapitel über einfärbbare Schicht) oder nicht eingefärbt vorliegen. Weiterhin kann das Brillenglas-Halbfabrikat oder das Brillenglas-Fertigfabrikat der Komponente B beispielsweise eine polarisierende Folie umfassen.

Bei einer bevorzugten Ausführungsform der Erfindung ist das Brillenglas-Halbfabrikat oder das Brillenglas-Fertigfabrikat der Komponente B nicht eingefärbt.

Bei einer weiteren bevorzugten Ausführungsform umfasst das Brillenglas-Halbfabrikat der Komponente B auf der optisch wirksamen Zielfläche wenigstens eine Funktionsschicht und das Brillenglas-Fertigfabrikat der Komponente B umfasst auf der Vorderfläche V_{B} wenigstens eine Funktionsschicht F_{VB} und auf der Rückfläche R_{B} wenigstens eine Funktionsschicht F_{RB}. In Abhängigkeit von der optisch wirksamen Zielfläche des Brillenglas-Halbfabrikats kann es sich bei der jeweiligen Funktionsschicht um die nachstehend für das Brillenglas-Fertigfabrikat angegebenen Schichten handeln. Als wenigstens eine Funktionsschicht F_{VB} können diejenigen Funktionsschichten F_{RA}, welche auf der Rückfläche R_{DA} des Dünnstglases der Komponente A eingesetzt werden können, verwendet werden, d.h. die Funktionsschicht F_{VB} kann aus der Gruppe, bestehend aus farbgebender Schicht, photochromer Schicht, polarisierender Schicht und Verspiegelungsschicht, ausgewählt werden. Die Funktionsschichten F_{RA} wurden bereits vorstehend detailliert beschrieben. Auch in Bezug auf die bevorzugte Schichtenfolge zwischen den Komponenten A und B des erfindungsgemäßen Brillenglases gilt das bereits oben stehend gesagte. Ist die Vorderfläche V_{B} des Brillenglas-Halbfabrikats bzw. des Brillenglas-Fertigfabrikats mit wenigstens einer Funktionsschicht F_{VB} beschichtet, ist es eine mögliche Ausführungsform, dass die Rückfläche R_{DA} des Dünnstglases der Komponente A keine Funktionsschicht F_{RA} aufweist oder die Vorderfläche V_{B} und die Rückfläche R_{DA} können jeweils einen Teil der im erfindungsgemäßen Brillenglas zwischen den Komponenten A und B vorliegenden Funktionsschichten aufweisen. Basiert das Brillenglas-Halbfabrikat bzw. das Brillenglas-Fertigfabrikat der Komponente B auf einem organischen Material, birgt eine Beschichtung der Rückfläche R_{DA} des Dünnstglases der Komponente B insbesondere den Vorteil, dass die Beschichtungsbedingungen für das Dünnstglas optimiert werden können, ohne dass das temperaturempfindlichere organische Material berücksichtigt werden muss. Die Beschichtung der Vorderfläche V_{B} des Brillenglas-Halbfabrikats oder des Brillenglas-Fertigfabrikats der Komponente B mit wenigstens einer Funktionsschicht F_{VB} hat dagegen den Vorteil, dass herkömmliche Standard-Beschichtungsprozesse für Brillengläser basierend auf polymeren Materialien. in herkömmlichen Standard-Beschichtungsanlagen eingesetzt werden können, ohne dass spezielle Vorkehrungen für das bruchempfindlichere Dünnstglas der Komponente A getroffen werden müssen. Als wenigstens eine Funktionsschicht F_{RB} der Rückfläche R_{B} des Brillenglas-Fertigfabrikats der Komponente B kann ebenso wie als Funktionsschicht F_{VC} zur Beschichtung der Vorderfläche V_{DC} des Dünnstglases der Komponente C eine farbgebende Schicht eingesetzt werden. Auch bei der zwischen den Komponenten B und C im erfindungsgemäßen Brillenglas vorliegenden wenigstens einen Funktionsschicht kann entweder die Rückfläche R_{B} des Brillenglas-Fertigfabrikats der Komponente B oder die Vorderfläche V_{DC} des Dünnstglases der Komponente C beschichtet werden. Die vorstehend im Zusammenhang mit der Beschichtung zwischen den Komponente A und C des erfindungsgemäßen Brillenglases angestellten Überlegungen finden auch hier Anwendung für die Auswahl der zu beschichtenden Komponente. Sofern das erfindungsgemäße Brillenglas kein Dünnstglas als Komponente C umfasst, kann die Rückfläche R_{B} des Brillenglas-Fertigfabrikats alternativ auch mit wenigstens einer Funktionsschicht F_{C} als Komponente C beschichtet werden. Die Funktionsschicht F_{C} der Komponente C kann beispielsweise aus der Gruppe bestehend aus wenigstens einer Zusammensetzung für die Herstellung einer Beschichtung mit hoher Haftfestigkeit und hoher Kratzbeständigkeit, wie beispielsweise in EP 2 578 649 A1, insbesondere in EP 2 578 649 A1, Anspruch 1, beschrieben, wenigstens eine Entspiegelungsschicht, wenigstens eine Antibeschlagsschicht, wenigstens eine Clean-Coat-Schicht und wenigstens eine elektrisch leitfähige oder halbleitende Schicht, ausgewählt sein. Ausgehend von der Rückfläche R_{B} des Brillenglas-Fertigfabrikats der Komponente B ist in Anwesenheit mehrerer Schichten die Beschichtungsreihenfolge in Richtung Auge wie folgt:
a) optional wenigstens eine elektrisch leitfähige oder halbleitende Schicht,
b) wenigstens eine Entspiegelungsschicht,
c) wenigstens eine Antibeschlagsschicht oder wenigstens eine Clean-Coat-Schicht.
Die optional als Funktionsschicht F_{C} vorhandene elektrisch leitfähige oder halbleitende Schicht kann ein Bestandteil der Entspiegelungsschicht sein.

Bei einer bevorzugten Ausführungsform der Erfindung wird bei der Herstellung eines erfindungsgemäßen Brillenglases umfassend wenigstens die Komponenten A, B und C unter Verwendung eines Brillenglas-Halbfabrikats oder eines Brillenglas-Fertigfabrikats als Komponente B dieses auf der Vorderfläche V_{B} und/oder auf der Rückfläche R_{B} beschichtet. Diese Komponente B wird anschließend mit einem auf der Rückfläche R_{DA} nicht beschichteten Dünnstglas der Komponente A und optional mit einem auf der Vorderfläche V_{DA} nicht beschichteten Dünnstglas der Komponente C zusammengefügt. Alternativ kann die Rückfläche R_{B} des Brillenglas-Halbfabrikats, wenn optisch wirksam, oder die Rückfläche R_{B} des Brillenglas-Fertigfabrikats mit wenigstens einer Funktionsschicht F_{C} beschichtet werden. Als Funktionsschicht F_{C} kommen hierbei bevorzugt die vorstehend beschriebenen Schichten in der dort angegebenen Reihenfolge in Frage. Handelt es sich bei den Komponenten A und C des erfindungsgemäßen Brillenglases jeweils um ein Dünnstglas, so kann die Vorderfläche V_{DA} des Dünnstglases der Komponente A sowie die Rückfläche R_{DC} des Dünnstglases der Komponente C jeweils mit wenigstens einer Funktionsschicht F_{VA} bzw. F_{RC} belegt werden. Die Funktionsschicht F_{VA} bzw. die Funktionsschicht F_{RC} kann jeweils aus der Gruppe bestehend aus wenigstens einer Entspiegelungsschicht, wenigstens einer Antibeschlagsschicht, wenigstens einer elektrisch leitfähigen oder halbleitenden Schicht und wenigstens einer Clean-Coat-Schicht sein. Ausgehend von der Vorderfläche V_{DA} des Dünnstglases der Komponente A in Richtung Objekt bzw. ausgehend von der Rückfläche R_{DC} des Dünnstglases der Komponente C in Richtung Auge ist die Beschichtungsreihenfolge bevorzugt jeweils wie folgt:
a) optional wenigstens eine elektrisch leitfähige oder halbleitende Schicht,
b) wenigstens eine Entspiegelungsschicht,
c) wenigstens eine Antibeschlagsschicht oder wenigstens eine Clean-Coat-Schicht.

Die optional vorhandene elektrisch leitfähige oder halbleitende Schicht kann als Bestandteil der Entspiegelungsschicht vorliegen. Die wenigstens eine Funktionsschicht F_{VA} und die wenigstens eine Funktionsschicht F_{RC} können jeweils identisch sein, müssen dies aber nicht, d.h. die Vorderfläche V_{DA} des Dünnstglases der Komponente A und die Rückfläche R_{DC} des Dünnstglases der Komponente C können mit unterschiedlichen Funktionsschichten belegt sein. Bevorzugt ist die wenigstens eine Funktionsschicht F_{VA} der Vorderfläche V_{DA} des Dünnstglases der Komponente A und die wenigstens eine Funktionsschicht F_{RC} der Rückfläche R_{DC} des Dünnstglases der Komponente C sowie bei jeweiligem Vorliegen mehrerer Funktionsschichten deren jeweilige Reihenfolge ausgehend von der jeweiligen Oberfläche des Dünnstglases identisch. Alternativ kann die Vorderfläche V_{DA} des Dünnstglases der Komponente A und/oder die Rückfläche R_{DC} des Dünnstglases der Komponente C mit wenigstens einer Entspiegelungsschicht versehen sein, wobei die Entspiegelungsschichten identisch oder verschieden voneinander aufgebaut sein kann.

Alternativ zu der Verwendung eines Brillenglas-Halbfabrikats oder Brillenglas-Fertigfabrikats als Komponente B kann die Komponente B des Brillenglases mit Hilfe eines Abgießverfahrens hergestellt werden. Hierzu wird das Dünnstglas der Komponente A, optional nach einer Umformung des Dünnstglases, an einer Vorderflächenformschale und/oder einer Rückflächenformschale einer Gießform angebracht. Die jeweils eingesetzte Formschale weist vorzugsweise einen identischen Krümmungsradius wie das in der Formschale angebrachte Dünnstglas der Komponente A auf. Als Gießform wird bei dem Abgießverfahren zur Herstellung der Komponente B bevorzugt die in DE 10 2013 222 232 A1 beschriebene Gießform, insbesondere die in DE 10 2013 222 232 A1, Figur 16, offenbarte Gießform eingesetzt. Bei dem Abgießverfahren bestimmt die Rückfläche R_{DA} des Dünnstglases der Komponente A die Oberflächentopographie der Vorderfläche V_{B} der Komponente B. Die Formschale wird bevorzugt an die Oberflächentopographie der Vorderfläche V_{DA} des Dünnstglases der Komponente A angepasst, so dass durch Komponente A die optische wirksame Vorderfläche eines Brillenglases umfassend wenigstens die Komponenten A, B und C festgelegt ist. Aufgrund der geringen mittleren Dicke des Dünnstglases der Komponente A sind die Oberflächentopographien der Vorderfläche V_{DA} und der Rückfläche R_{DA} vorzugsweise identisch. Die Fixierung des Dünnstglases an der Formschale erfolgt bevorzugt mittels Unterdruck. Hierfür sind beispielsweise in der Formschale entsprechende Vakuumkanäle und Vakuumanschlüsse vorzusehen, über welche der Unterdruck mittels Ring- und Verbindungskanälen aufgebaut und durch ein Ventil gehalten wird. Alternativ kann die Formschale mittels Sinterverfahren aus z.B. Edelstahl oder Keramik ausgeführt sein, wobei die Porosität dieser Materialien zur vollflächig Anlegung eines Vakuums ausgenutzt werden kann. Wird diese Ausführungsform der Formschale bevorzugt, so sind alle der Atmosphäre zugewandten Oberflächen vorher mit beispielsweise einem Lack zu versiegeln. Das Dünnstglas der Komponente A weist vorzugsweise den gleichen Durchmesser wie die Formschale auf. Der Durchmesser liegt hierbei bevorzugt in einem Bereich von 40 mm bis 150 mm, besonders bevorzugt in einem Bereich von 55 mm bis 135 mm und ganz besonders bevorzugt in einem Bereich von 70 mm bis 100 mm. Die mittels Vakuum fixierte Kombination aus Formschale und Dünnstglas der Komponente A wird vorzugsweise in einen Step-Dichtring oder einen Membrandichtring eingesetzt. Die Gießform kann beispielsweise die nachstehenden Formschalen-Bestandteile, jeweils gesehen von der Vorderfläche zur Rückfläche des resultierenden Brillenglases, aufweisen:
1. Vakuum-Formschale / Dünnstglas der Komponente A / Dichtring / konventionelle Formschale;
2. Vakuum-Formschale / Dünnstglas der Komponente A / Dichtring - Dünnstglas der Komponente C / Vakuum-Formschale;
3. konventionelle Formschale / Dichtring / Dünnstglas der Komponente A / Vakuum-Formschale.

Bevorzugt umfasst die Gießform die Bestandteile gemäß der vorstehend zuerst aufgeführten Variante. Im Abgießverfahren wird das zur Herstellung der Komponente B benötigte Monomergemisch direkt auf die gegebenenfalls mit wenigstens einer Funktionsschicht F_{RA} versehene Rückfläche R_{DA} gegeben. Bevorzugt wird diesem Monomergemisch kein oder nur wenig Trennmittel, wie beispielsweise organische Phosphonate oder Phosphorsäureester, zugefügt, so dass eine mechanisch unlösbare Verbindung zwischen der Rückfläche R_{DA} des Dünnstglases der Komponente A und der Vorderfläche V_{B} der Komponente B resultiert. Um nun zu verhindern, dass auch zwischen der Rückfläche R_{B} Komponente B und der weiteren Formschale ebenfalls eine mechanisch untrennbare Verbindung resultiert, wird die weitere Formschale vorzugsweise vor dem Zusammenfügen zu einer Gießform mit einer Schutzbeschichtung, beispielsweise einer Schutzfolie oder einem Schutzlack (zum Beispiel Optiklack Illmar P4, Optiklack M-Lack 10, Schutzlack PBJ 2002, Schutzlack TLS blau/ 2002, Firma Pieplow & Brand), auf der der abzugießenden Komponente B zugewandten Seite versehen. Diese Schutzschicht kann gegebenenfalls in einem nachgelagerten Verfahrensschritt, beispielsweise beim Fräsen, Drehen und/oder Polieren der Rückfläche R_{B} der Komponente B von dieser entfernt werden. Ebenso ist es auch bei Verwendung eines Membrandichtringes nicht notwendig, dass sich das nach dem Abgießverfahren resultierende Brillenglas umfassend die Komponenten A und B von diesem ablöst, da der Membrandichtring in einem nachfolgenden Rx Fertigungsschritt abgearbeitet werden kann. Das vorstehend beschriebene Abgießverfahren eignet sich prinzipiell für alle Monomermischungen, aus welchen unter anderem ein Polyallyldiglycolcarbonat, Polyurethan (z.B. Trivex), Polyharnstoff (z.B. RAVolution), Polythiourethan (z.B. MR-7/ MR-8/ MR-10) oder Polyepisulfid (z.B. MR174) hergestellt werden kann.
Im Fall von thermoplastischen Polymeren, die per Spritzguss verarbeitet werden, muss das Abgießverfahren zur Herstellung der Komponente B angepasst werden. Hierbei wird bevorzugt die Spitzgussform mit einem zusätzlichen Vakuumanschluss auf der Fläche, an der das Dünnstglas der Komponente A aufgebracht werden soll, ausgestattet. Vor dem Schließen der Spritzgussform wird das Dünnstglas mit Vakuum fixiert. Diese Anpassung des Abießverfahrens kommt insbesondere für Systeme in Frage, die auf Polymethylmethacrylate, Polycarbonate oder Cyclo-Olefin-Copolymere beruhen.

Bei einer weiteren Ausführungsform der Erfindung kann die Komponente B eines Brillenglases umfassend wenigstens die Komponenten A, B und C mittels eines Druckverfahrens, insbesondere 3D-Druckverfahrens, hergestellt werden. Bei dieser Ausführungsform kann die gegebenenfalls mit wenigstens einer Funktionsschicht F_{RA} beschichtete Rückfläche R_{DA} des Dünnstglases der Komponente A als zu bedruckendes Substrat dienen. Sofern Komponente C ein Dünnstglas umfasst, kann alternativ auch dessen gegebenenfalls mit wenigstens einer Funktionsschicht Fvc belegte Vorderfläche V_{DC} als zu bedruckendes Substrat herangezogen werden. Bevorzugt erfolgt der Aufbau der Komponente B eines Brillenglases mittels eines Druckverfahrens, insbesondere 3D-Druckverfahrens, durch Bedrucken der gegebenenfalls mit wenigstens einer Funktionsschicht F_{RA} beschichteten Rückfläche R_{DA} des Dünnstglases der Komponente A. Die Oberflächentopographie derjenigen Fläche der Komponente B, welche nicht durch das Dünnstglas vorbestimmt ist, sondern die dieser Fläche gegenüber liegt, kann mittels eines

Druckverfahrens, insbesondere 3D-Druckverfahrens, gezielt aufgebaut werden. Beim 3D-Druckverfahren handelt es sich um ein additives Herstellungsverfahren, bei welchem die gewünschte Oberflächentopographie einer der Flächen der Komponente B ausschließlich durch Materialauftrag hergestellt wird. Die dreidimensionale Form der zu druckenden Komponente B des Brillenglases, welche auch individuell angepasste Aspekte, wie beispielsweise den Durchmesser, den Krümmungsradius, oder individuelle Rezeptwerte, wie beispielsweise eine Progressionsfläche mit vorgegebenem Progressionswert und Verlauf des Progressionskanals berücksichtigen kann, wird zunächst digital in zweidimensionale, horizontale Lagen geschnitten. Selbstverständlich ist hierbei auch der Einfluss des Dünnstglases der Komponente A sowie, sofern Komponente C ein Dünnstglas umfasst, auch der Einfluss des Dünnstglases der Komponente C zu berücksichtigen. Weiterhin ist zu berücksichtigen, dass gegebenenfalls vorhandene unerwünschte Fehlstellen der zu bedruckenden Oberfläche des Dünnstglases vorzugsweise zunächst mit wenigstens einer gedruckten Lage ausgeglichen werden. Die Information über die einzelnen zweidimensionalen, übereinander zu druckenden Lagen, wird dem Drucker, insbesondere 3D-Drucker, zur Verfügung gestellt und die Komponente B des Brillenglases hiermit aus der Summe der einzelnen zweidimensionalen Lagen aufgebaut. Eine zu druckende Lage umfasst die nebeneinander Anordnung von Volumenelementen - d.h. die nebeneinander Anordung von Drucktinte, vorzugsweise 3D-Drucktinte, nach Ausgabe aus einem Druckkopf, vorzugsweise aus einem für den 3D-Druck geeigneten Druckkopf - in einer Fläche, wobei die Abmessungen der Volumenelemente unter anderem abhängig von dem Durchmesser der Druckkopfdüsen sind. Das kleinste mögliche Volumenelement entspricht dem Volumen eines Tropfens Drucktinte, vorzugsweise 3D-Drucktinte. Es können mehrere Lagen von nebeneinander angeordneten Volumenelementen übereinander angeordnet, d.h. übereinander gedruckt, werden. Die flächenmäßige Ausdehnung und die Anzahl der übereinander zu druckenden Lagen hängt von den gewünschten Abmessungen der zu druckenden Komponente B des Brillenglases ab. Die Aushärtung der einzelnen Lagen kann lagenweise, vorzugsweise mittels UV-Licht, bis zur vollständigen Abreaktion der strahlungshärtbaren Komponente erfolgen. Alternativ kann nach dem Drucken jeder Lage eine nicht komplette Aushärtung, und nach dem Drucken aller Lagen eine endgültige Aushärtung, jeweils vorzugsweise mittels UV-Licht, erfolgen.

Der Drucker, insbesondere 3D-Drucker, umfasst wenigstens einen Druckkopf, welcher nach dem, aus dem Tintenstrahldruck bekannten Drop-on-demand Verfahren Volumenelemente über ein piezoelektrisches Element erzeugt und ein Volumenelement immer nur genau an der Stelle platziert, wo dieses auch benötigt wird. Der wenigstens eine Druckkopf kann sich über das Dünnstglas der Komponente A oder der Komponente C bewegen und/oder das Dünnstglas der Komponente A oder der Komponente C kann sich unter dem wenigstens einen Druckkopf bewegen. Vorzugsweise wird als 3D-Druckverfahren das Multi-Jet-Modeling bzw. Polyjet Verfahren eingesetzt. Als Druckkopf kann beispielsweise der Druckkopf Xaar 1001 (Fa. Xaar), einer der Druckköpfe Spectra S-Class, Spectra SE3, Spectra SX3, Spectra Q-class (Fa. Spectra), der Druckkopf KM512 (Fa. Konica Minolta) und/oder der Druckkopf 256Jet S4 (Fa. Trident) zum Einsatz kommen. Die Auflösung des Druckkopfs beträgt bevorzugt mindestens 300 x 300 dpi, weiter bevorzugt mindestens 600 x 600 dpi und besonders bevorzugt mindestens 1200 x 1200 dpi. Bevorzugt ist an wenigstens einer Seite des eingesetzten Druckkopfs wenigstens eine UV-Lichtquelle, besonders bevorzugt ist an wenigstens zwei Seiten des eingesetzten Druckkopfs wenigstens eine UV-Lichtquelle angebracht. Alternativ können mehrere Druckköpfe parallel in einem 3D-Drucker verbaut und selektiv angesteuert werden. Die UV-Lichtquelle kann dann aus mehreren ebenfalls parallel geschalteten UV-Lichtquellen oder aus wenigen, großen UV-Lichtquellen bestehen.

Die mittels eines Druckverfahrens, insbesondere 3D-Druckverfahrens, hergestellte Komponente B des Brillenglases kann wenigstens einen weiteren mechanischen Bearbeitungsschritt, wie beispielsweise Polieren, erfordern. Vorzugsweise benötigt die mittels eines Druckverfahrens, insbesondere 3D-Druckverfahrens, hergestellte Komponente B des Brillenglases keinen weiteren mechanischen Bearbeitungsschritt wie beispielsweise Fräsen und/oder Schleifen und/oder Drehen und/oder Polieren.

Für den lagenweisen Aufbau der Komponente B des Brillenglases wird bevorzugt eine im 3D-Druckverfahren einsetzbare Drucktinte eingesetzt. "Lagenweiser Aufbau" umfasst eine aufeinanderfolgende Ablagerung der Drucktinte, vorzugsweise 3D-Drucktinte. Die aufeinanderfolgende Ablagerung kann hierbei sowohl nebeneinander in einer Fläche als auch übereinander in der Höhe erfolgen. Erfolgt beispielsweise eine erste Ablagerung der Drucktinte, vorzugsweise 3D-Drucktinte, in einer Fläche auf dem Dünnstglas der Komponente A oder C, kann eine weitere Lage über die komplette Fläche der ersten Ablagerung oder einen Teil der Fläche der ersten Ablagerung gedruckt werden. Vorzugsweise erfolgt die aufeinanderfolgende Ablagerung der Drucktinte, vorzugsweise 3D-Drucktinte, zunächst nebeneinander in einer Fläche, bevor dann eine weitere aufeinanderfolgende Ablagerung der Drucktinte, vorzugswiese 3D-Drucktinte, in der darüber liegenden Lage erfolgt.

Die Drucktinte, insbesondere 3D-Drucktinte, umfasst bevorzugt wenigstens eine strahlungshärtbare Komponente, optional wenigstens ein Farbmittel, optional wenigstens einen UV-Initiator, optional wenigstens ein Lösungsmittel und optional wenigstens ein Additiv.

Die strahlungshärtbare Komponente der Drucktinte, insbesondere 3D-Drucktinte, vorzugsweise UV-härtbare Komponente, umfasst bevorzugt (Meth)acrylatmonomere, Epoxymonomere, Vinyl- und Allylmonomere, besonders bevorzugt (Meth)acrylatmonomere. Bei den (Meth)acrylatmonomeren kann es sich bevorzugt um monofunktionale, difunktionale, trifunktionale und/oder tetrafunktionale (Meth)acrylatmonomere handeln. Bei den Epoxymonomeren kann es sich bevorzugt um monofunktionale, difunktionale, trifunktionale und/oder tetrafunktionale Epoxymonomere handeln. Bei den Vinyl- und Allylmonomere kann es sich bevorzugt um monofunktionale, difunktionale, trifunktionale und/oder tetrafunktionale Vinyl- und Allylmonomere handeln.

Bei einer Ausführungsform weisen die als strahlungshärtbare Komponente, vorzugsweise UV-härtbare Komponente, einsetzbaren monofunktionalen (Meth)acrylatmonomere, Epoxymonomere, Vinyl- und Allylmonomere bevorzugt eine Viskosität aus einem Bereich von 0,5 mPa·s bis 30,0 mPa·s, besonders bevorzugt aus einem Bereich von 1,0 mPa·s bis 25,0 mPa·s und ganz besonders bevorzugt aus einem Bereich von 1,5 mPa·s bis 20,0 mPa·s auf.

Bei einer Ausführungsform weisen die als strahlungshärtbare Komponente, vorzugsweise UV-härtbare Komponente, einsetzbaren difunktionalen (Meth)acrylatmonomere, Epoxymonomere, Vinyl- und Allylmonomere bevorzugt eine Viskosität aus einem Bereich von 1,5 mPa·s bis 17,0 mPa·s, besonders bevorzugt aus einem Bereich von 2,5 mPa·s bis 14,0 mPa·s und ganz besonders bevorzugt aus einem Bereich von 3,0 mPa·s bis 11,0 mPa·s auf.

Bei einer Ausführungsform weisen die als strahlungshärtbare Komponente, vorzugsweise UV-härtbare Komponente, einsetzbaren trifuntionktionellen (Meth)acrylatmonomere, Epoxymonomere, Vinyl- und Allylmonomere bevorzugt eine Viskosität aus einem Bereich von 20,0 mPa·s bis 110,0 mPa·s, besonders bevorzugt aus einem Bereich von 22,0 mPa·s bis 90,0 mPa·s und ganz besonders bevorzugt aus einem Bereich von 24,0 mPa·s bis 83,0 mPa·s auf.

Bei einer Ausführungsform weisen die als strahlungshärtbare Komponente, vorzugsweise UV-härtbare Komponente, einsetzbaren tetrafunktionalen (Meth)acrylatmonomere, Epoxymonomere, Vinyl- und Allylmonomere bevorzugt eine Viskosität aus einem Bereich von 60,0 mPa·s bis 600,0 mPa·s, besonders bevorzugt aus einem Bereich von 70,0 mPa·s bis 460,0 mPa·s und ganz besonders bevorzugt aus einem Bereich von 80,0 mPa·s bis 270,0 mPa·s auf.

Die Viskosität der (Meth)acrylatmonomere, Epoxymonomere, Vinyl- und Allylmonomere wird jeweils vorzugsweise mit einem Rheometer C-VOR 150 der Fa. Malvern mit der Vorgabe einer Winkelgeschwindigkeit von 5,2 rad/sec bei 25°C gemessen.

Die jeweiligen (Meth)acrylatmonomere, Epoxymonomere, Vinyl- und Allylmonomere können jeweils beispielsweise durch Zugabe wenigstens eines Lösungsmittels auf die gewünschte Viskosität eingestellt werden.

Die Viskosität der zum Aufbau der Komponente B des Brillenglases einsetzbaren Drucktinte, vorzugsweise 3D-Drucktinte, kann beispielsweise durch Mischung verschiedener (Meth)acrylatmonomere, Epoxymonomere, Vinyl- und/oder Allylmonomere, beispielsweise durch Mischung monofunktionaler (Meth)acrylatmonomere, Epoxymonomere, Vinyl- und/oder Allylmonomere und difunktionaler (Meth)acrylatmonomere, Epoxymonomere, Vinyl- und/oder Allylmonomere und/oder trifunktionaler (Meth)acrylatmonomere, Epoxymonomere, Vinyl- und/oder Allylmonomere, eingestellt werden. Alternativ oder zusätzlich zur Mischung verschiedener (Meth)acrylatmonomere, Epoxymonomere, Vinyl- und/oder Allylmonomere kann die Viskosität durch Zugabe wenigstens eines Lösungsmittels eingestellt werden.
Als monofunktionale (Meth)acrylatmonomere können beispielsweise Acrylsäure (CAS Nr. 79-10-7), Methacrylsäure (CAS Nr. 79-41-4), Methylacrylat (CAS Nr. 96-33-3), Methylmethacrylat (CAS Nr. 80-62-6), Ethylacrylat (CAS Nr. 140-88-5), Ethylmethacrylat (CAS Nr. 97-63-2), Ethyl-2-ethylacrylat (CAS Nr. 3070-65-3), (2,2-dimethyl-1,3-dioxolan-4-yl)methylmethacrylat (CAS Nr. 7098-80-8), 2-Phenoxyethylacrylat (CAS Nr. 48145-04-6), Isobornylacrylat (CAS Nr. 5888-33-5), 2-(2-Methoxyethoxy)ethylmethacrylat (CAS Nr. 45103-58-0), 4-Acryloylmorpholin (CAS Nr. 5117-12-4), Dodecylacrylat (CAS Nr. 2156-97-0), Isodecylacrylat (CAS Nr. 1330-61-6), Decylacrylat (CAS Nr. 2156-96-9), n-Octylacrylat (CAS Nr. 2499-59-4), Isooctylacrylat (CAS Nr. 29590-42-9), Octadecylacrylat (CAS Nr. 4813-57-4), Tetrahydrofurfurylacrylat (CAS Nr. 2399-48-6), 2-(2-Ethoxyethoxy)ethylacrylat (CAS Nr. 7328-17-8), 4-tert-Butylcyclohexylacrylat (CAS Nr. 84100-23-2), Methoxypoly(ethylenglycol)monoacrylat (CAS Nr. 32171-39-4), Phenoxypolyethylenglycolacrylat (CAS Nr. 56641-05-5), Mono-2-(acryloyloxy)ethylsuccinat (CAS Nr. 50940-49-3), Allylmethacrylat (CAS Nr. 96-05-9) oder Mischungen davon eingesetzt werden.

Bevorzugt werden als monofunktionale (Meth)acrylatmonomere Acrylsäure, Methacrylsäure, Methylacrylat, Methylmethacrylat, Ethylacrylat, Ethylmethacrylat, 2-Phenoxyethylacrylat, Dodecylacrylat oder Mischungen davon, besonders bevorzugt werden Methacrylsäure, Methylmethacrylat, Ethylmethacrylat oder Mischungen davon eingesetzt.

Als difunktionale (Meth)acrylatmonomere können beispielsweise Ethylenglykoldiacrylat (CAS Nr. 2274-11-5), Diethylenglykoldiacrylat (CAS Nr. 2274-11-5), Triethylenglykoldiacrylat (CAS Nr. 1680-21-3), Tetraethylenglykoldiacrylat (CAS Nr. 17831-71-9), Ethylenglykoldimethacrylat (CAS Nr. 97-90-5), Diethylenglykoldimethacrylat (CAS Nr. 2358-84-1), Triethylenglykoldimethacrylat (CAS Nr. 109-16-0), Tetraethylenglycoldimethacrylat (CAS Nr. 109-17-1), Polyethylenglykol 200 dimethacrylat (CAS Nr. 25852-47-2), Dipropylenglykoldiacrylat (CAS Nr. 57472-68-1), Tripropylenglykoldiacrylat (CAS Nr. 42978-66-5), 1,3-Butandioldiacrylat (CAS Nr. 19485-03-1), 1,4-Butandioldiacrylat (CAS Nr. 1070-70-8), 1,6-Hexandioldiacrylat (CAS Nr. 13048-33-4), Neopentylglycoldiacrylat (CAS Nr. 2223-82-7), 1,3-Butandioldimethacrylat (CAS Nr. 1189-08-8), 1,4-Butandioldimethacrylat (CAS Nr. 2082-81-7), 1,6-Hexandioldimethacrylat (CAS Nr. 6606-59-3) oder Mischungen davon eingesetzt werden.

Bevorzugt werden als difunktionale (Meth)acrylatmonomere Polyethylenglykol 200 dimethacrylat, Ethylenglykoldimethacrylat, Diethylenglykoldimethacrylat, 1,4-Butandioldimethacrylat oder Mischungen davon, besonders bevorzugt werden Ethylenglykoldimethacrylat, Diethylenglykoldimethacrylat oder Mischungen davon eingesetzt.

Als trifunktionale (Meth)acrylatmonomere können beispielsweise Trimethylolpropantrimethacrylat (CAS Nr. 3290-92-4), Trimethylolpropantriacrylat (CAS Nr. 15625-89-5), Pentaerythritoltriacrylat (CAS Nr. 3524-68-3), Pentaerythritolpropoxylattriacrylat (CAS Nr. 145611-81-0), Trimethylolpropanpropoxylattriacrylat (CAS Nr. 53879-54-2), Trimethylolpropanethoxylattriacrylat (CAS Nr. 28961-43-5) oder Mischungen davon eingesetzt werden.

Bevorzugt werden als trifunktionale (Meth)acrylatmonomere Trimethylolpropantrimethacrylat, Pentaerythritoltriacrylat oder Mischungen davon, besonders bevorzugt wird Trimethylolpropantrimethacrylat eingesetzt.

Als tetrafunktionale (Meth)acrylatmonomere können beispielsweise Di(trimethylolpropan)tetraacrylat (CAS Nr. 94108-97-1), Pentaerythritoltetraacrylat (CAS Nr. 4986-89-4), Pentaerythritoltetramethacrylat (CAS Nr. 3253-41-6) oder Mischungen davon eingesetzt werden.

Bevorzugt werden als tetrafunktionale (Meth)acrylatmonomere Di(trimethylolpropan)tetraacrylat, Pentaerythritoltetramethacrylat oder Mischungen davon, besonders bevorzugt Di(trimethylolpropan)tetraacrylat eingesetzt.

Als monofunktionale Epoxymonomere können beispielsweise Ethylglycidylether (CAS Nr. 4016-11-9), n-Butylglycidylether (CAS Nr. 2426-08-6), 2-Ethylhexylglycidylether (CAS Nr. 2461-15-6), C8-C10-Glycidylether (CAS Nr. 68609-96-1), C12-C14-Glycidylether (CAS Nr. 68609-97-2), Cresylglycidylether (CAS Nr. 2210-79-9), p-tert-Butylphenylglycidylether (CAS Nr. 3101-60-8), Nonylphenylglycidylether (CAS Nr. 147094-54-0), Benzylglycidylether (CAS Nr. 2930-05-4), Phenylglycidylether (CAS Nr. 122-60-1), Bisphenol A-(2,3-dihydroxypropyl)glycidylether (CAS Nr. 76002-91-0) oder Mischungen davon zum Einsatz kommen.

Bevorzugt kommen als monofunktionale Epoxymonomere Ethylglycidylether, n-Butylglycidylether, 2-Ethylhexylglycidylether oder Mischungen hiervon, besonders bevorzugt Ethylglycidylether, n-Butylglycidylether oder Mischungen hiervon zum Einsatz.

Als difunktionale Epoxymonomere können beispielsweise Diglycidylether (CAS Nr. 2238-07-5), Ethylenglycoldiglycidylether (CAS Nr. 2224-15-9), Diethylenglykoldiglycidylether (CAS Nr. 4206-61-5), Propylenglykoldiglycidylether (CAS Nr. 16096-30-3), Dipropylenglycoldiglycidylether (CAS Nr. 41638-13-5), 1,4-Butandioldiglycidylether (CAS Nr. 2425-79-8), 1,4-Cyclohexandimethanoldiglycidylether (CAS Nr. 14228-73-0), Neopentylglycoldiglycidylether (CAS Nr. 17557-23-2), Polypropylenglycol(400)diglycidylether (CAS Nr. 26142-30-3), 1,6-Hexandioldiglycidylether (CAS Nr. 16096-31-4), Bisphenol A-diglycidylether (CAS Nr. 1675-54-3), Bisphenol-A-propoxylat-diglycidylether (CAS Nr. 106100-55-4), Polyethylenglykoldiglycidylether (CAS Nr. 72207-80-8), Glyceroldiglycidylether (CAS Nr. 27043-36-3), Resorcinoldiglycidylether (CAS Nr. 101-90-6) oder Mischungen davon in der zum Aufbau der Komponente B des Brillenglases einsetzbaren Drucktinte, vorzugsweise 3D-Drucktinte, verwendet werden.

Bevorzugt kommen als difunktionale Epoxymonomere Diglycidylether, Ethylenglycoldiglycidylether, Diethylenglykoldiglycidylether, 1,4-Butandioldiglycidylether, Polyethylenglykoldiglycidylether, Polypropylenglycol(400)diglycidylether oder Mischungen hiervon, besonders bevorzugt Ethylenglycoldiglycidylether, Diethylenglykoldiglycidylether, 1,4-Butandioldiglycidylether, Polyethylenglykoldiglycidylether oder Mischungen hiervon zum Einsatz.

Als trifunktionale Epoxymonomere können beispielsweise Trimethylolethantriglycidylether (CAS Nr. 68460-21-9), Trimethylolpropantriglycidylether (CAS Nr. 30499-70-8), Triphenylolmethantriglycidylether (CAS Nr. 66072-38-6), Tris(2,3-epoxypropyl)isocyanurat (CAS Nr. 2451-62-9), Tris(4-hydroxyphenyl)methantriglycidylether (CAS Nr. 66072-38-6), 1,1,1-Tris(4-hydroxyphenyl)ethantriglycidylether (CAS Nr. 87093-13-8), Glyceroltriglycidylether (CAS Nr. 13236-02-7), Glycerolpropoxylattriglycidylether (CAS Nr. 37237-76-6), N,N-Diglycidyl-4-glycidyloxyanilin (CAS Nr. 5026-74-4) oder Mischungen davon eingesetzt werden.

Bevorzugt kommen als trifunktionale Epoxymonomere Trimethylolpropantriglycidylether, Tris(2,3-epoxypropyl)isocyanurat, Glyceroltriglycidylether, Glycerolpropoxylattriglycidylether oder Mischungen hiervon, besonders bevorzugt Tris(2,3-epoxypropyl)isocyanurat, Glyceroltriglycidylether oder Mischungen hiervon zum Einsatz.

Als tetrafunktionale Epoxymonomere können beispielsweise Pentaerythritoltetraglycidylether, (CAS Nr. 3126-63-4), Dipentaerythritoltetraglycidylether, Tetraglycidylbenzylethan, Sorbitoltetraglycidylether, Tetraglycidyldiaminophenylmethan, Tetraglycidylbisaminomethylcyclohexan oder Mischungen davon zum Einsatz kommen.

Bevorzugt werden als tetrafunktionale Epoxymonomere Pentaerythritoltetraglycidylether, (CAS Nr. 3126-63-4), Dipentaerythritoltetraglycidylether, Sorbitoltetraglycidylether oder Mischungen davon, besonders bevorzugt Pentaerythritoltetraglycidylether, (CAS Nr. 3126-63-4), Dipentaerythritoltetraglycidylether oder Mischungen davon eingesetzt.

Umfasst die strahlungshärtbare Komponente der zum Aufbau der Komponente B einsetzbaren Drucktinte, vorzugsweise 3D-Drucktinte, monofunktionale Vinylmonomere so können diese beispielweise Ethylenglycolvinylether (CAS Nr. 764-48-7), Di(ethylenglycol)vinylether (CAS Nr. 929-37-3), 1-Vinylcyclohexanol (CAS Nr. 1940-19-8), Vinylacetat (CAS Nr. 108-05-4), Vinylchlorid (CAS Nr. 75-01-4), Ethylvinylketon (CAS Nr. 1629-58-9), Butylvinylether (CAS Nr. 111-34-2), 1,4-Butandiolvinylether (CAS Nr. 17832-28-9), Vinylacrylat (CAS Nr. 2177-18-6), Vinylmethacrylat (CAS Nr. 4245-37-8), Isobutylvinylether (CAS Nr. 109-53-5), Vinylpivalat (CAS Nr. 3377-92-2), Vinylbenzoat (CAS Nr. 769-78-8), Vinylvalerat (CAS Nr. 5873-43-8), 2-Ethylhexylvinylether (CAS Nr. 103-44-6), Phenylvinylether (CAS Nr. 766-94-9), tert-Butylvinylether (CAS Nr. 926-02-3), Cyclohexylvinylether (CAS Nr. 2182-55-0), Dodecylvinylether (CAS Nr. 765-14-0), Ethylvinylether (CAS Nr. 109-92-2), Propylvinylether (CAS Nr. 764-47-6), 1,4-Cyclohexandimethanolvinylether (CAS Nr. 114651-37-5) oder Mischungen hiervon umfassen.

Bevorzugt werden als monofunktionale Vinylmonomere Ethylenglycolvinylether, Di(ethylenglycol)vinylether, Ethylvinylketon, Vinylacetat, Phenylvinylether, Cyclohexylvinylether oder Mischungen hiervon, besonders bevorzugt Ethylvinylketon, Vinylacetat, Ethylenglycolvinylether oder Mischungen hiervon eingesetzt.

Als difunktionale Vinylmonomere können beispielsweise Di(ethylenglycol)divinylether (CAS Nr. 764-99-8), Tri(ethylenglycol)divinylether (CAS Nr. 765-12-8), Tetra(ethylenglycol)divinylether (CAS Nr. 83416-06-2), Poly(ethylenglycol)divinylether (CAS Nr. 50856-26-3), Tri(ethylenglycol)divinylether (CAS Nr. 765-12-8), Divinylbenzol (CAS Nr. 1321-74-0), 1,4-Butandioldivinylether (CAS Nr. 3891-33-6), 1,6-Hexandioldivinylether (CAS Nr. 19763-13-4), 1,4-Cyclohexandimethanoldivinylether (CAS Nr. 17351-75-6), 1,4-Pentadien-3-ol (CAS Nr. 922-65-6) oder Mischungen hiervon zum Einsatz kommen.
Bevorzugt werden als difunktionale Vinylmonomere Di(ethylenglycol)divinylether, 1,4-Cyclohexandimethanoldivinylether, Poly(ethylenglycol)divinylether, Divinylbenzol oder Mischungen hiervon, besonders bevorzugt 1,4-Cyclohexandimethanoldivinylether, Divinylbenzol, Di(ethylenglycol)divinylether oder Mischungen hiervon als strahlungshärtbare Komponente in der zum Aufbau der Komponente B des Brillenglases verwendbaren Drucktinte, vorzugsweise 3D-Drucktinte, eingesetzt.

Als trifunktionale bzw. tetrafunktionale Vinylmonomere können beispielsweise 1,3,5-Trivinylbenzol, 1,2,4-Trivinylcyclohexan (CAS Nr. 2855-27-8), 1,3,5-Trivinyl-1,3,5-triazinan-2,4,6-trion, 1,3,5-Trivinyl-1,3,5-trimethylcylcotrisiloxan (CAS Nr. 3901-77-7), 2,4,6-Trimethyl-2,4,6-trivinylcyclotrisilazan (CAS Nr. 5505-72-6), 2,4,6-Trivinylcyclotriboroxanpyridin-Komplex (CAS Nr. 442850-89-7), Tetravinylsilan (CAS Nr. 1112-55-6), 2,4,6,8-Tetramethyl-2,4,6,8-tetravinylcyclotetrasiloxan (CAS Nr. 2554-06-5) oder Mischungen davon eingesetzt werden.

Bevorzugt werden als trifunktionale bzw. tetrafunktionale Vinylmonomere 1,3,5-Trivinylbenzol, 1,2,4-Trivinylcyclohexan, Tetravinylsilan oder Mischungen hiervon, besonders bevorzugt 1,3,5-Trivinylbenzol, 1,2,4-Trivinylcyclohexan oder Mischungen hiervon eingesetzt.

Weiterhin kann die zum Aufbau der Komponente B des Brillenglases einsetzbare Drucktinte, vorzugsweise 3D-Drucktinte, monofunktionale Allylmonomere, wie beispielsweise Allylacetat (CAS Nr. 591-87-7), Allylacetoacetat (CAS Nr. 1118-84-9), Allylalkohol (CAS Nr. 107-18-6), Allylbenzylether (CAS Nr. 14593-43-2), Allylbutylether (CAS Nr. 3739-64-8), Allylbutyrat (CAS Nr. 2051-78-7), Allylethylether (CAS Nr. 557-31-3), Ethylenglycolallylether (CAS Nr. 111-45-5), Allylphenylether (CAS Nr. 1746-13-0), Trimethylolpropanallylether (CAS Nr. 682-11-1), 2-Allyloxyethanol (CAS Nr. 111-45-5), 3-Allyloxy-1,2-propandiol (CAS Nr. 123-34-2) oder Mischungen hiervon umfassen.

Bevorzugt werden als monofunktionale Allylmonomere Allylacetat, Allylalkohol, Ethylenglycolallylether, Allyloxyethanol oder Mischungen hiervon, besonders bevorzugt Allylacetat, Allylalkohol, Ethylenglycolallylether oder Mischungen hiervon umfassen.

Als difunktionale Allylmonomere können beispielsweise Allylether (CAS Nr. 557-40-4), 2,2'-Diallylbisphenol A (CAS Nr. 1745-89-7), 2,2'-Diallylbisphenol A diacetatether (CAS Nr. 1071466-61-9), Trimethylolpropandiallylether (CAS Nr. 682-09-7), Diallylcarbonat (CAS Nr. 15022-08-9), Diallylmaleat (CAS Nr. 999-21-3), Diallylsuccinat (CAS Nr. 925-16-6), Diallylphthalat (CAS Nr. 131-17-9), Di(ethylenglycol)bis(allylcarbonat) (CAS Nr. 142-22-3) oder Mischungen davon eingesetzt werden.

Bevorzugt werden als difunktionale Allylmonomere Allylether, 2,2'-Diallylbisphenol A, Diallylcarbonat, Diallylsuccinat, Di(ethylenglycol)bis(allylcarbonat), Diallylmaleat oder Mischungen davon, besonders bevorzugt Allylether, 2,2'-Diallylbisphenol A, Diallylcarbonat, Diethylenglykoldiallylcarbonat oder Mischungen davon eingesetzt.

Als trifunktionale bzw. tetrafunktionale Allylmonomere können beispielsweise 2,4,6-Triallyloxy-1,3,5-triazin (CAS Nr. 101-37-1), 1,3,5-Triallyl-1,3,5-triazin-2,4,6(1H,3H,5H)-trion (CAS Nr. 1025-15-6), 3-(N,N',N'-Triallylhydrazin)propionsäure, Pentaerythritolallylether (CAS Nr. 91648-24-7), 1,1,2,2-Tetraallyloxyethan (CAS Nr. 16646-44-9), Tetraallylpyromellitat (CAS Nr. 13360-98-0) oder Mischungen davon eingesetzt werden.

Bevorzugt werden als trifunktionale bzw. tetrafunktionale Allylmonomere 2,4,6-Triallyloxy-1,3,5-triazin, Pentaerythritolallylether, 1,3,5-Triallyl-1,3,5-triazin-2,4,6(1H,3H,5H)-trion oder Mischungen davon, besonders bevorzugt 2,4,6-Triallyloxy-1,3,5-triazin, Pentaerythritolallylether oder Mischungen davon eingesetzt.

Die Auswahl an zu verwendenden strahlungshärtenden Komponenten erfolgt vorzugsweise so, dass ausreichend vernetzbare, aber dennoch schnell aushärtende Monomermischungen erhalten werden können.

Der Gesamtanteil an wenigstens einer strahlungshärtbaren Komponente in der zum Aufbau der Komponente B des Brillenglases verwendbaren Drucktinte, vorzugsweise 3D-Drucktinte, liegt bevorzugt in einem Bereich von 11,0 Gew.-% bis 99,5 Gew.-%, weiter bevorzugt in einem Bereich von 17 Gew.-% bis 99 Gew.-%, besonders bevorzugt in einem Bereich von 31 Gew.-% bis 98,5 Gew.-% und ganz besonders bevorzugt in einem Bereich von 40 Gew.-% bis 98 Gew.-%, jeweils bezogen auf das Gesamtgewicht der Drucktinte, vorzugsweise 3D-Drucktinte. Vorstehend aufgeführte Bereiche gelten sowohl für die Verwendung von ausschließlich monofunktionalen, ausschließlich difunktionalen, ausschließlich trifunktionalen, ausschließlich tetrafunktionalen strahlungshärtbaren Komponenten als auch für die Verwendung von Mischungen strahlungshärtbarer Komponenten ausgewählt aus der Gruppe bestehend aus monofunktionalen, difunktionalen, trifunktionalen und tetrafunktionalen strahlungshärtbaren Komponenten. Vorstehend aufgeführte Bereiche gelten weiterhin sowohl für die Verwendung von ausschließlich (Meth)acrylatmonomeren, Epoxymonomeren, Vinyl- oder Allylmonomeren als auch für die Verwendung von Mischungen hiervon. Beispielsweise kann wenigstens ein monofunktionales (Meth)acrylatmonomer mit wenigstens einem trifunktionalen Epoxymonomer in Mischung vorliegen.

Der Gesamtanteil an wenigstens einer Art an monofunktionalem (Meth)acrylatmonomer Epoxymonomer, Vinyl- oder Allylmonomer liegt in der zum Aufbau der Komponente B des Brillenglases einsetzbaren Drucktinte, vorzugsweise 3D-Drucktinte, bevorzugt in einem Bereich von 0,0 Gew.-% bis 60,0 Gew.-%, weiter bevorzugt in einem Bereich von 0,3 Gew.-% bis 51,0 Gew.-%, besonders bevorzugt in einem Bereich von 1,2 Gew.-% bis 44,0 Gew.-% und ganz besonders bevorzugt in einem Bereich von 1,8 Gew.-% bis 35,0 Gew.-%, jeweils bezogen auf das Gesamtgewicht der Drucktinte, vorzugsweise 3D-Drucktinte. Vorstehend genannte Bereiche gelten sowohl für die Verwendung einer Art an monofunktionalem (Meth)acrylatmonomer, Epoxymonomer, Vinyl- oder Allylmonomer als auch für die Verwendung einer Mischung voneinander verschiedener monofunktionaler (Meth)acrylatmonomere, Epoxymonomere, Vinyl- oder Allylmonomere. Beispielsweise kann wenigstens eine Art monofunktionales (Meth)acrylatmonomer mit wenigstens einer Art monofunktionalem Allylmonomer oder wenigstens eine Art monofunktionales (Meth)acrylatmonomer mit wenigstens einer hiervon verschiedenen Art an monofunktionalem (Meth)acrylatmonomer jeweils in Mischung vorliegen.

Bei einer bevorzugten Ausführungsform umfasst die zum Aufbau der Komponente B des Brillenglases einsetzbare Drucktinte, vorzugsweise 3D-Drucktinte, kein monofunktionales (Meth)acrylatmonomer, Epoxymonomer, Vinyl- oder Allylmonomer.

Der Gesamtanteil an wenigstens einer Art an difunktionalem (Meth)acrylatmonomer, Epoxymonomer, Vinyl- oder Allylmonomer liegt in der zum Aufbau der Komponente B des Brillenglases einsetzbaren Drucktinte, vorzugsweise 3D-Drucktinte, bevorzugt in einem Bereich von 32,0 Gew.-% bis 99,0 Gew.-%, weiter bevorzugt in einem Bereich von 39,0 Gew.-% bis 97,0 Gew.-%, besonders bevorzugt in einem Bereich von 47,0 Gew.-% bis 95,0 Gew.-% und ganz besonders bevorzugt in einem Bereich von 56,0 Gew.-% bis 93,0 Gew.-%, jeweils bezogen auf das Gesamtgewicht der Drucktinte, vorzugsweise 3D-Drucktinte. Vorstehend genannte Bereiche gelten sowohl für die Verwendung einer Art an difunktionalem (Meth)acrylatmonomer, Epoxymonomer, Vinyl- oder Allylmonomer als auch für die Verwendung einer Mischung voneinander verschiedener difunktionaler (Meth)acrylatmonomere, Epoxymonomere, Vinyl- oder Allylmonomere. Beispielsweise kann wenigstens eine Art an difunktionalem (Meth)acrylatmonomer mit wenigstens einer Art an difunktionalem Epoxymonomer in Mischung vorliegen oder es kann sich um eine Mischung aus zwei voneinander verschiedenen Arten monofunktionaler (Meth)acrylatmonomere handeln.

Der Gesamtanteil an wenigstens einer Art an trifunktionalem (Meth)acrylatmonomer, Epoxymonomer, Vinyl- oder Allylmonomer liegt in der zum Aufbau der Komponente B des Brillenglases einsetzbaren Drucktinte, vorzugsweise 3D-Drucktinte, bevorzugt in einem Bereich von 1,0 Gew.-% bis 51,0 Gew.-%, weiter bevorzugt in einem Bereich von 2,0 Gew.-% bis 43,0 Gew.-%, besonders bevorzugt in einem Bereich von 3,0 Gew.-% bis 36,0 Gew.-% und ganz besonders bevorzugt in einem Bereich von 4,0 Gew.-% bis 31,0 Gew.-%, jeweils bezogen auf das Gesamtgewicht der Drucktinte, vorzugsweise 3D-Drucktinte. Vorstehend genannte Bereiche gelten sowohl für die Verwendung einer Art an trifunktionalem (Meth)acrylatmonomer, Epoxymonomer, Vinyl- oder Allylmonomer als auch für die Verwendung einer Mischung voneinander verschiedener trifunktionaler (Meth)acrylatmonomere, Epoxymonomere, Vinyl- oder Allylmonomere. Beispielsweise kann wenigstens eine Art an trifunktionalem (Meth)acrylatmonomer mit wenigstens einer Art an trifunktionalem Vinylmonomer oder wenigstens eine Art an trifunktionalem (Meth)acrylatmonomer mit wenigstens einer davon verschiedenen Art an trifunktionalem (Meth)acrylatmonomer jeweils in Mischung vorliegen.

Der Gesamtanteil an wenigstens einer Art an tetrafunktionalem (Meth)acrylatmonomer, Epoxymonomer, Vinyl- oder Allylmonomer liegt in der zum Aufbau der Komponente B des Brillenglases einsetzbaren Drucktinte, vorzugsweise 3D-Drucktinte, bevorzugt in einem Bereich von 0 Gew.-% bis 16 Gew.-%, weiter bevorzugt in einem Bereich von 0 bis 13 Gew.-%, besonders bevorzugt in einem Bereich von 0,1 Gew.-% bis 9 Gew.-% und ganz besonders bevorzugt in einem Bereich von 0,4 Gew-% bis 4 Gew.-%, jeweils bezogen auf das Gesamtgewicht der Drucktinte, vorzugsweise 3D-Drucktinte. Vorstehend genannte Bereiche gelten sowohl für die Verwendung einer Art an tetrafunktionalem (Meth)acrylatmonomer, Epoxymonomer, Vinyl- oder Allylmonomer als auch für die Verwendung einer Mischung voneinander verschiedener tetrafunktionaler (Meth)acrylatmonomere, Epoxymonomere, Vinyl- oder Allylmonomere. Beispielsweise kann wenigstens eine Art an tetrafunktionalem (Meth)acrylatmonomer mit wenigstens einer weiteren, hiervon verschiedenen Art an tetrafunktionalem (Meth)acrylatmonomer in Mischung vorliegen oder es kann sich um eine Mischung an wenigstens einer Art an tetrafunktionalem (Meth)acrylatmonomer mit wenigstens einer Art an tetrafunktionalem Allylmonomer handeln.

Bei einer bevorzugten Ausführungsform umfasst die zum Aufbau der Komponente B des Brillenglases einsetzbare Drucktinte, vorzugsweise 3D-Drucktinte, wenigstens eine monofunktionale strahlungshärtbare Komponente und wenigstens eine difunktionale strahlungshärtbare Komponente bevorzugt im Gewichtsverhältnis 1 : 1, besonders bevorzugt im Gewichtsverhältnis 1 : 5 und ganz besonders bevorzugt im Gewichtsverhältnis 1 : 10.

Bei einer weiteren Ausführungsform umfasst die zum Aufbau der Komponente B des Brillenglases einsetzbare Drucktinte, vorzugsweise 3D-Drucktinte, wenigstens eine monofunktionale strahlungshärtbare Komponente und wenigstens eine trifunktionale strahlungshärtbare Komponente bevorzugt im Gewichtsverhältnis 1 : 5, besonders bevorzugt im Gewichtsverhältnis 1 : 3 und ganz besonders bevorzugt im Gewichtsverhältnis 1 : 1.

Bei einer weiteren Ausführungsform umfasst die zum Aufbau der Komponente B des Brillenglases einsetzbare Drucktinte, vorzugsweise 3D-Drucktinte, wenigstens eine difunktionale strahlungshärtbare Komponente und wenigstens eine trifunktionale strahlungshärtbare Komponente im Gewichtsverhältnis 1 : 1, besonders bevorzugt im Gewichtsverhältnis 5 : 1 und ganz besonders bevorzugt im Gewichtsverhältnis 8 : 1.

Bei einer weiteren Ausführungsform umfasst die zum Aufbau der Komponente B des Brillenglases einsetzbare Drucktinte, vorzugsweise 3D-Drucktinte, wenigstens eine difunktionale strahlungshärtbare Komponente und wenigstens eine tetrafunktionale strahlungshärtbare Komponente im Gewichtsverhältnis 5 : 1, besonders bevorzugt im Gewichtsverhältnis 10 : 1 und ganz besonders bevorzugt im Gewichtsverhältnis 20 : 1.

Bei einer weiteren Ausführungsform umfasst die zum Aufbau der Komponente B des Brillenglases einsetzbare Drucktinte, vorzugsweise 3D-Drucktinte, wenigstens eine monofunktionale strahlungshärtbare Komponente und wenigstens eine difunktionale strahlungshärtbare Komponente und wenigstens eine trifunktionale strahlungshärtbare Komponente im Gewichtsverhältnis 1 : 5 : 1, besonders bevorzugt im Gewichtsverhältnis 2 : 13 : 0,5 und ganz besonders bevorzugt im Gewichtsverhältnis 2: 18 : 0,3.

Bei einer besonders bevorzugten Ausführungsform umfasst die zum Aufbau der Komponente B des Brillenglases einsetzbare Drucktinte, vorzugsweise 3D-Drucktinte, als strahlungshärtbare Komponente wenigstens eine Art an difunktionalem (Meth)acrylatmonomer und wenigstens eine Art an trifunktionalem (Meth)acrylatmonomer, wobei die Viskosität der Drucktinte, vorzugsweise 3D-Drucktinte bei ≤ 50 mPa·s, bevorzugt in einem Bereich von 5 mPa·s bis 33 mPa·s, weiter bevorzugt in einem Bereich von 7 mPa·s bis 27 mPa·s, besonders bevorzugt in einem Bereich von 9 mPa·s bis 23 mPa·s und ganz besonders bevorzugt in einem Bereich von 11 mPa·s bis 21 mPa·s liegt.

Bei einer weiteren bevorzugten Ausführungsform umfasst die zum Aufbau der Komponente B des Brillenglases einsetzbare Drucktinte, vorzugsweise 3D-Drucktinte, als strahlungshärtbare Komponente wenigstens eine Art an difunktionalem Epoxymonomer und wenigstens eine Art an trifunktionalem Epoxymonomer, wobei die Viskosität der Drucktinte, vorzugsweise 3D-Drucktinte bei ≤ 53 mPa·s, bevorzugt in einem Bereich von 4 mPa·s bis 31 mPa·s, weiter bevorzugt in einem Bereich von 6 mPa·s bis 28 mPa·s, besonders bevorzugt in einem

Bereich von 9 mPa·s bis 22 mPa·s und ganz besonders bevorzugt in einem Bereich von 10 mPa·s bis 20 mPa·s liegt.

Bei einer Ausführungsform umfasst die zum Aufbau der Komponente B des Brillenglases einsetzbare Drucktinte, vorzugsweise 3D-Drucktinte, wenigstens einen UV-Initiator. Die Drucktinte, vorzugsweise 3D-Drucktinte, kann beispielsweise Benzophenon (CAS Nr. 119-61-9), 2-Methylbenzophenon (CAS Nr. 131-58-8), 4-Methylbenzophenon (CAS Nr. 134-84-9), 4,4'-Bis(dimethylamino)benzophenon (CAS Nr. 90-94-8), Benzoin (CAS Nr. 119-53-9), Benzoinmethylether (CAS Nr. 3524-62-7), Benzoinisopropylether (CAS Nr. 6652-28-4), 2,2-Dimethoxy-1,2-diphenylethan-1-on (CAS Nr. 24650-42-8), Phenylbis(2,4,6-trimethylbenzoyl)phosphinoxid (CAS Nr. 162881-26-7), 2,4,6-Trimethylbenzoylphenylphosphinsäureethylester (CAS Nr. 84434-11-7), 2-Methyl-1-[4-(methylthio)phenyl]-2-(4-morpholinyl)-1-propanon (CAS Nr. 71868-10-5), 2-Hydroxy-2-methyl-1-phenyl-1-propanon (CAS Nr. 7473-98-5), 2-(Dimethylamino)-1-(4-(4-morpholinyl)phenyl)-2-(phenylmethyl)-1-butanon (CAS Nr. 119313-12-1), Diphenyl(2,4,6-trimethylbenzoyl)phosphinoxid (CAS Nr. 75980-60-8), Triarylsulfoniumhexafluorophosphat-Salze (CAS Nr. 109037-77-6), Triarylsulfoniumhexafluoroantimonat-Salze (CAS Nr. 109037-75-4) oder Mischungen hiervon als UV-Initiator umfassen. Bevorzugt umfasst die Drucktinte, vorzugsweise 3D-Drucktinte, Benzophenon, 2,2-Dimethoxy-1,2-diphenylethan-1-on, Phenylbis(2,4,6-trimethylbenzoyl)phosphinoxid, Diphenyl(2,4,6-trimethylbenzoyl)phosphinoxid, Triarylsulfoniumhexafluorophosphat-Salze oder Mischungen hiervon, besonders bevorzugt 2,2-Dimethoxy-1,2-diphenylethan-1-on, Phenylbis(2,4,6-trimethylbenzoyl)phosphinoxid, Diphenyl(2,4,6-trimethylbenzoyl)phosphinoxid oder Mischungen hiervon als UV-Initiator.
Die zum Aufbau der Komponente B des Brillenglases einsetzbare Drucktinte, vorzugsweise 3D-Drucktinte, umfasst den wenigstens einen UV-Initiator in einem Gesamtanteil aus einem Bereich von bevorzugt 0,01 Gew.-% bis 3,7 Gew.-%, besonders bevorzugt aus einem Bereich von 0,1 Gew.-% bis 2,1 Gew.-% und ganz besonders bevorzugt aus einem Bereich von 0,3 Gew.-% bis 1,7 Gew.-%, jeweils bezogen auf das Gesamtgewicht der Drucktinte, vorzugsweise 3D-Drucktinte.

Bei einer Ausführungsform kann der wenigstens eine UV-Initiator zusammen mit einem Co-Initiator eingesetzt werden. Co-Initiatoren werden vorzugsweise immer dann zugesetzt, wenn der UV-Initiator ein zweites Molekül zur Bildung eines im UV-Bereich aktiven Radikals benötigt. Beispielsweise benötigt Benzophenon ein zweites Molekül, wie beispielsweise ein Amin, z.B. Triethylamin, Methyldiethanolamin oder Triethanolamin, um nach Absorption von UV-Licht ein Radikal zu erzeugen.

Das optional wenigstens eine Lösungsmittel der zum Aufbau der Komponente B des Brillenglases einsetzbaren Drucktinte, vorzugsweise 3D-Drucktinte, kann aus der Gruppe bestehend aus Alkoholen, Ketonen, Estern, Ethern, Thioethern, Amiden, Kohlenwasserstoffen, Aminen und Mischungen hiervon, ausgewählt werden. Vorzugsweise wird das optional wenigstens eine Lösungsmittel aus der Gruppe, bestehend aus Alkoholen, Ketonen, Estern und Mischungen hiervon, ausgewählt. Ein Lösungsmittel kann im Sinne dieser Erfindung einerseits eine Art von Lösungsmittel, andererseits ein Lösungsmittelgemisch sein.

Beispiele für als Lösungsmittel einsetzbare Alkohole sind Methanol, Ethanol, Propanol, Isopropanol, Butanol, Pentanol, Hexanol oder Mischungen hiervon.

Beispiele für als Ketone einsetzbare Lösungsmittel sind Aceton, Methylethylketon, Cyclohexanon, Diisobutylketon, Methylpropylketon, Diacetonalkohol oder Mischungen hiervon.

Beispiele für Ester als einsetzbare Lösungsmittel sind Methylacetat, Ethylacetat, 1-Methoxy-2-propylacetat, n-Propylacetat, i-Propylacetat, Ethoxypropylacetat, Butylacetat, Methylpropionat, Ethylpropionat, Glykoletheracetate, Butylglykolacetat, Propylenglykoldiacetat, Ethyllactat oder Mischungen hiervon.

Beispiele für Ether als einsetzbare Lösungsmittel sind Diethylether, Dipropylether, Tetrahydrofuran, Ethylenglykolethylether, Ethylenglycolmethylether, Triethylenglykolbutylether, Tetraethylenglykolmethylether, Tetraethylenglykolbutylether, Dipropylenglykoldimethylether, Propylenglykolbutylether, 1-Methoxy-2-propanol, 3-Methoxy-3-methyl-1-butanol oder Mischungen hiervon.

Beispiele für Amide als einsetzbare Lösungsmittel sind Dimethylacetamid, Dimethylformamid, Formamid, N-Methylformamid, N-Methylpyrrolidon und 2-Pyrrolidon.
Beispiele für Kohlenwasserstoffe als einsetzbare Lösungsmittel sind Terpene, wie Pinen, Limonen oder Terpinolen, aliphatische Kohlenwasserstoffe, wie Hexan, Heptan, Octan oder Testbenzin, aromatische Kohlenwasserstoffe, wie Toluol oder Xylol.

Bei einer Ausführungsform wird das optional wenigstens eine Lösungsmittel der zum Aufbau der Komponente B des Brillenglases einsetzbaren Drucktinte, insbesondere 3D-Drucktinte, aus der Gruppe, bestehend aus Isopropanol, Ethanol, Butanol, Diisobutylketon, Butylglykol, Butylglykolacetat, Propylenglykoldiacetat, Dipropylenglykoldimethylether, Ethyllactat, Ethoxypropylacetat und Mischungen hiervon, ausgewählt.

Bei einer Ausführungsform weist das optional wenigstens eine Lösungsmittel einen Flammpunkt von mindestens 61 °C auf.

Bei einer bevorzugten Ausführungsform liegt der Anteil des optional vorhandenen, wenigstens einen Lösungsmittel in der zum Aufbau der Komponente B des Brillenglases einsetzbaren Drucktinte, vorzugsweise 3D-Drucktinte, in einem Bereich von 0 Gew.-% bis 10 Gew.-%, bevorzugt in einem Bereich von 0 Gew.-% bis 7,7 Gew.-%, besonders bevorzugt in einem Bereich von 0,1 Gew.-% bis 6,3 Gew.-% und ganz besonders bevorzugt in einem Bereich von 0,1 Gew.-% bis 5,2 Gew.-%, jeweils bezogen auf das Gesamtgewicht der Drucktinte, vorzugsweise 3D-Drucktinte. Bei einer besonders bevorzugten Ausführungsform umfasst die zum Aufbau der Komponente B des Brillenglases einsetzbare Drucktinte, vorzugsweise 3D-Drucktinte, kein Lösungsmittel.

Die zum Aufbau der Komponente B des Brillenglases einsetzbare Drucktinte, vorzugsweise 3D-Drucktinte, weist bevorzugt eine Oberflächenspannung aus einem Bereich von 10 mN/m bis 80 mN/m, besonders bevorzugt aus einem Bereich von 15 mN/m bis 40 mN/m und ganz bevorzugt aus einem Bereich von 18 mN/m bis 35 mN/m auf. Liegt die Oberflächenspannung unter 10 mN/m, werden die Tropfen am Druckkopf zu groß für die gewünschte Anwendung. Liegt die Oberflächenspannung über 80 mN/m, bilden sich keine definierten Tropfen der Drucktinte am Druckkopf. Die Oberflächenspannung wird vorzugsweise bei einer Temperatur von 25°C mit dem Gerät DSA 100 der Firma Krüss und der Pendant-Drop-Methode bestimmt.

Die Viskosität der zum Aufbau der Komponente B des Brillenglases einsetzbaren Drucktinte, vorzugsweise 3D-Drucktinte, liegt bevorzugt in einem Bereich von 4 mPa·s bis 56 mPa·s, weiter bevorzugt in einem Bereich von 7 mPa·s bis 45 mPa·s, besonders bevorzugt in einem Bereich von 9 mPa·s bis 34 mPa·s, und ganz besonders bevorzugt in einem Bereich von 10 mPa·s bis 22 mPa·s. Die Viskosität wird vorzugsweise mit einem Rheometer C-VOR 150 der Fa. Malvern mit der Vorgabe einer Winkelgeschwindigkeit von 5,2 rad/sec bei 25°C gemessen.

Bei einer Ausführungsform der Erfindung kann die zum Aufbau der Komponente B des Brillenglases einsetzbare Drucktinte, vorzugsweise 3D-Drucktinte, wenigstens ein Farbmittel umfassen. Als Farbmittel können im umgebenden Medium lösliche oder dispergierbare, bunte oder unbunte Farbstoffe zum Einsatz kommen. In Abhängigkeit vom zu erzielenden Effekt und/oder von dem zu erzielenden optischen Eindruck können als Farbmittel alternativ oder zusätzlich zu den Farbstoffen auch im umgebenden Medium unlösliche Pigmente eingesetzt werden. Als Pigmente werden vorzugsweise Effektpigmente, wie Metalleffektpigmente oder Perlglanzpigmente, organische und/oder anorganische Pigmente, verwendet. Der Gesamtanteil an Farbmittel liegt in der zum Aufbau der Komponente B des Brillenglases einsetzbaren Drucktinte, vorzugsweise 3D-Drucktinte, bevorzugt in einem Bereich von 0,0 Gew.-% bis 66,0 Gew.-%, weiter bevorzugt in einem Bereich von 0,01 Gew.-% bis 53,1 Gew.-%, besonders bevorzugt in einem Bereich von 0,1 Gew.-% bis 42,3 Gew.-% und ganz besonders bevorzugt in einem Bereich von 0,11 Gew.-% bis 27,7 Gew.-%, jeweils bezogen auf das Gesamtgewicht der Drucktinte, vorzugsweise 3D-Drucktinte. Der Gesamtanteil an Farbmittel umfasst den Anteil aller in der Drucktinte, vorzugsweise 3D-Drucktinte, vorliegenden Farbmittel, unabhängig davon, ob es sich um Farbstoffe, Pigmente, Mischungen davon, Mischungen unterschiedlicher Farbstoffe, Mischungen unterschiedlicher Pigmente etc. handelt.

Die zum Aufbau der Komponente B des Brillenglases einsetzbaren Drucktinte, vorzugsweise 3D-Drucktinte, wird vorzugsweise durch Mischen aller Komponenten unter Rühren hergestellt, wobei das wenigstens eine Farbmittel, sofern vorhanden, vorgelegt und zunächst mit einer geringen Menge an strahlungshärtbarer Komponente und/oder Lösungsmitel gelöst oder dispergiert wird und anschließend die restlichen Komponenten zugefügt werden.

Die zum Aufbau der Komponente B des Brillenglases einsetzbare Drucktinte, vorzugsweise 3D-Drucktinte, kann weiterhin optional wenigstens ein Additiv umfassen. Der Drucktinte, vorzugsweise 3D-Drucktinte, können beispielsweise Dispergiermittel, Antiabsetzmittel, Netzmittel, einschließlich Antikrater- oder Verlaufsadditiven, Biozide, UV-Absorber oder Mischungen hiervon zugesetzt werden.

Dispergiermittel helfen eine homogene Verteilung aller festen Bestandteile in der Drucktinte, vorzugsweise 3D-Drucktinte, zu erreichen. Insbesondere wird eine mögliche Agglomeration der Pigmente vermieden. Als Dispergiermittel können beispielsweise Solsperse 20000, Solsperse 32500, jeweils Fa. Avecia K.K., Disperbyk-102, Disperbyk-106, Disperbyk-111, Disperbyk-161, Disperbyk-162, Disperbyk-163, Disperbyk-164, Disperbyk-166, Disperbyk-180, Disperbyk-190, Disperbyk-191 oder Disperbyk-192, jeweils Fa. Byk-Chemie GmbH, Verwendung finden.

Antiabsetzmittel sollen das Absetzen, insbesondere von Pigmenten in der Drucktinte, vorzugsweise 3D-Drucktinte, verhindern. Beispiele für einsetzbare Antiabsetzmittel sind Byk-405 (Fa. Byk-Chemie GmbH) in Verbindung mit pyrogenem Siliziumdioxid, modifizierte Harnstoffe wie Byk-410, Byk-411 oder Wachse wie Ceramat 250, Cerafakl03, Cerafak 106 oder Ceratix 8461, jeweils Fa. Byk-Chemie GmbH.

Netzmittel sind wichtig für die Funktion des Druckkopfs, da auch interne Strukturen, wie beispielsweise Kanäle, Filter, Düsenvorkammern etc. benetzt werden. Beispiele geeigneter Netzmittel umfassen Fettsäurealkylester, Acetylenderivate, fluorierte Ester oder fluorierte Polymere.

Biozide können Drucktinten, vorzugsweise 3D-Drucktinten, zugesetzt werden, um ein Wachstum von Mikroorganismen zu verhindern. Als Biozid können beispielsweise Polyhexamethylenbiguanide, Isothiazolone, Isothiazolinone, wie z.B. 5-Chloro-2-methyl-4-isothiazolin-3-on, 2-Methyl-4-isothiazolin-3-on oder Mischungen hiervon verwendet werden.

Die Auswahl des geeigneten UV-Absorbers, der kompatibel mit den weiteren Komponenten der Drucktinte, insbesondere 3D-Drucktinte, und dem 3D-Druckverfahren sein muss, sowie die Optimierung der Konzentration zur Erzielung einer gewünschten UV-Absorptionseigenschaft kann z.B. mit Hilfe von Simulationsprogrammen unter Berücksichtigung geeigneter Werkstoffdatenbanken bestimmt werden.

Der DE 69534779 T2 entnimmt man eine Auswahl geeigneter UV-Absorber für Brillengläser, welche auch in der zum Aufbau der Komponente B des Brillenglases einsetzbaren Drucktinte, vorzugsweise 3D-Drucktinte, eingesetzt werden können. Demzufolge kann der UV-Absorber beispielsweise 2(2'-Hydroxy-5'-methyl-phenyl)benzotriazol, 2-Hydroxy-4-n-acetoxybenzophenon, 2(2'Hydroxy-5-5-octylphenyl)benzotriazol, 2(2'-Hydroxy-3',6'(1,1-dimethylbenzylphenyl)benzotriazol, 2(2'-Hydroxy-3',5'-di-t-amylphenyl)benzotriazol, bis[2-Hydroxy-5-methyl-3-(benzotriazol-2-yl)phenyl]-methan, bis[2-Hydroxy-5-t-octyl-3(benzotriazol-2-yl)phenyl]-methan, 2-Hydroxy-4-(2-acrylocyloxy-ethoxybenzophenon, 2-Hydroxy-4-(2-hydroxy-3-methacryloxy)propoxybenzophenon, 2,2'-Dihydroxy-4-methoxybenzophenon, 2,4-Dihydroxybenzophenon, 2,2'-Dihydroxy 4,4-dimethoxybenzophenon, 2,2',4,4' Tetrahydroxybenzophenon, Ethyl-2-Cyano-3,3-diphenylacrylat, 2-Ethexyl-2-Cyano-3,3-Diphenylacrylat, 2',2',4-Trihydroxybenzophenon, 2-Hydroxy-4-acryloyloxyethoxybenzophenon (Polymer), 2-Hydroxy-4-acryloyloxyethoxybenzophenon, 4-Hydroxy-4-methoxybenzophenon, 2-Hydroxy-4-n-octoxybenzophenon oder Mischungen davon umfassen.

Bevorzugt umfasst die zum Aufbau der Komponente B des Brillenglases einsetzbare Drucktinte, vorzugsweise 3D-Drucktinte, 2(2'Hydroxy-5-5-octylphenyl)benzotriazol, 2(2'-Hydroxy-5'-methylphenyl)benzotriazol, 2(2'Hydroxy-5-5-octylphenyl)benzotriazol, 2-Hydroxy-4-(2-hydroxy-3-methacryloxy)propoxybenzophenon oder Mischungen davon, besonders bevorzugt 2(2'Hydroxy-5-5-octylphenyl)benzotriazol, 2(2'Hydroxy-5-5-octylphenyl)benzotriazol oder Mischungen davon als UV-Absorber.

Der Gesamtanteil an wenigstens einem UV-Absorber liegt in der zum Aufbau der Komponente B des Brillenglases einsetzbaren Drucktinte, vorzugsweise UV-Drucktinte, bevorzugt in einem Bereich von 0,01 Gew.-% bis 5,1 Gew.-%, besonders bevorzugt in einem Bereich von 0,07 Gew.-% bis 3,9 Gew.-%, und besonders bevorzugt in einem Bereich von 0,09 Gew.-% bis 3,1 Gew.-%, jeweils bezogen auf das Gesamtgewicht der Drucktinte, vorzugsweise 3D-Drucktinte. Vorstehend genannte Bereiche beziehen sich sowohl auf die Verwendung eines UV-Absorbers als auch auf die Verwendung einer Mischung von UV-Absorbern.

Der Gesamtanteil an wenigstens einem Additiv liegt in der zum Aufbau der Komponente B des Brillenglases einsetzbaren Drucktinte, vorzugsweise 3D-Drucktinte, bevorzugt in einem Bereich von 0,0 Gew.-% bis 10,0 Gew.-%, besonders bevorzugt in einem Bereich von 0,01 Gew.-% bis 5,0 Gew.-%, und ganz besonders bevorzugt in einem Bereich von 0,02 Gew.-% bis 3,0 Gew.-%, jeweils bezogen auf das Gesamtgewicht der Drucktinte, vorzugsweise 3D-Drucktinte. Die genannten Bereiche gelten für die Verwendung einer Art an Additiv, einer Mischung aus voneinander verschiedenen Additivarten sowie einer Mischung aus voneinander verschiedenen Additiven einer Additivart.

Es versteht sich von selbst, dass die einzelnen Komponenten der zum Aufbau der Komponente B des Brillenglases einsetzbaren Drucktinte, vorzugsweise 3D-Drucktinte, so auszuwählen sind, dass sich deren Anteile nicht auf über 100 Gew.-% addieren.

Das Verfahren zur Herstellung eines Brillenglases umfassend wenigstens die Komponenten A, B und C umfasst die folgenden Schritte:
a) Bereitstellen und optional Fixieren des Dünnstglas der Komponente A und/oder C,
b) Bereitstellen eines dreidimensionalen Modells der Komponente B,
c) Digitales Zerschneiden des dreidimensionalen Modells aus Schritt b) in einzelne zweidimensionale Lagen,
d) Bereitstellen wenigstens einer Drucktinte, vorzugsweise 3D-Drucktinte, wobei die Drucktinte wenigstens eine strahlungshärtbare Komponente umfasst,
e) Aufbau der Komponente B aus der Summe der einzelnen zweidimensionalen Lagen aus Schritt c) mittels eines Druckvorgangs auf einem der Dünnstgläser der Komponenten A und/oder C,
f) Aushärtung der Komponente B, vorzugsweise mittels UV-Licht, wobei die Aushärtung nach Aufbringung einzelner Volumenelemente oder nach Aufbringung einer Lage an Volumenelementen jeweils vollständig oder partiell erfolgen kann, und die partielle Aushärtung nach Abschluss des Druckprozesses vervollständigt werden kann,
g) optional Fräsen und/oder Schleifen und/oder Drehen und/oder Polieren der in Schritt f) erhaltenen Oberfläche der Komponente B, welche nicht an eines der Dünnstgläser der Komponente A oder C angrenzt,
h)
   h1) für den Fall, dass in Schritt a) das Dünnstglas der Komponente A bereitgestellt wurde: Verbinden der Rückfläche R_{B} der Komponente B des in Schritt f) erhaltenen Brillenglases umfassend die Komponenten A und B, mit der Vorderfläche V_{DC} eines optional mit wenigstens einer Funktionsschicht Fvc belegten Dünnstglases der Komponente C oder Beschichten der Rückfläche R_{B} der Komponente B mit wenigstens einer Funktionsschicht F_{C};
   h2) für den Fall dass in Schritt a) das Dünnstglas der Komponente C bereitgestellt wurde: Verbinden der Vorderfläche V_{B} der Komponente B des in Schritt f) erhaltenen Brillenglases umfassend die Komponenten B und C mit der Rückfläche R_{DA} eines optional mit wenigstens einer Funktionsschicht F_{RA} belegten Dünnstglases der Komponente A,
   i) optional Beschichten der Vorderfläche V_{DA} des Dünnstglases der Komponente A mit wenigstens einer Funktionsschicht F_{VA} und optional Beschichten der Rückfläche R_{DC} des Dünnstglases der Komponente C mit wenigstens einer Funktionsschicht F_{RC}.
   j) optional Formranden des in Schritt h) oder i) erhaltenen Brillenglases umfassend die Komponenten A, B und C.

Das Verbinden in Schritt h) erfolgt bevorzugt stoffschlüssig und/oder formschlüssig mittels eines Klebemittels, eines Bonding-Verfahrens oder durch Ansprengen, wie vorstehend in Zusammenhang mit der Herstellung des erfindungsgemäßen Brillenglases ausgehend von einem Brillenglas-Halbfabrikat oder Brillenglas-Fertigfabrikat beschrieben.

Das Drucken, vorzugsweise 3D-Drucken, der Komponente B des Brillenglases beginnt mit der Bereitstellung eines dreidimensionalen Modells, vorzugsweise CAD-Modells. Dieses dreidimensionale Modell definiert die Oberflächentopographie der nicht durch das Dünnstglas der Komponente A oder C vorgegebenen Oberfläche der Komponente B sowie in Kombination der Komponenten A, B und C das Volumen des Brillenglases.

Bei einer Ausführungsform der Erfindung umfasst das erfindungsgemäße Brillenglas wenigstens eine der Komponenten A, B oder C mehrfach. Bei dieser Ausführungsform kann das erfindungsgemäße Brillenglas ausgehend von der objektseitigen Vorderfläche zur augenseitigen Rückfläche des erfindungsgemäßen Brillenglases beispielsweise die Komponenten A, B, A', B', C umfassen.

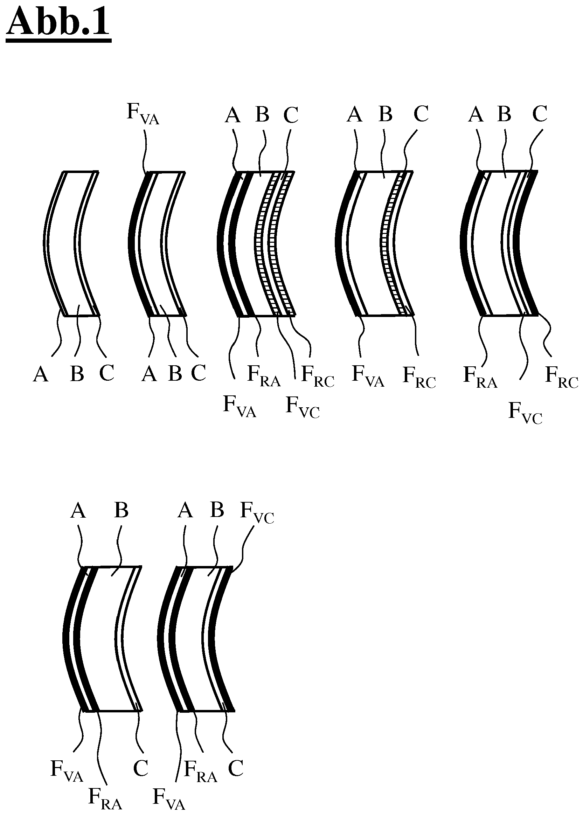

Abbildung 1 zeigt mögliche Ausführungsformen von Beschichtungen des erfindungsgemäßen Brillenglases.

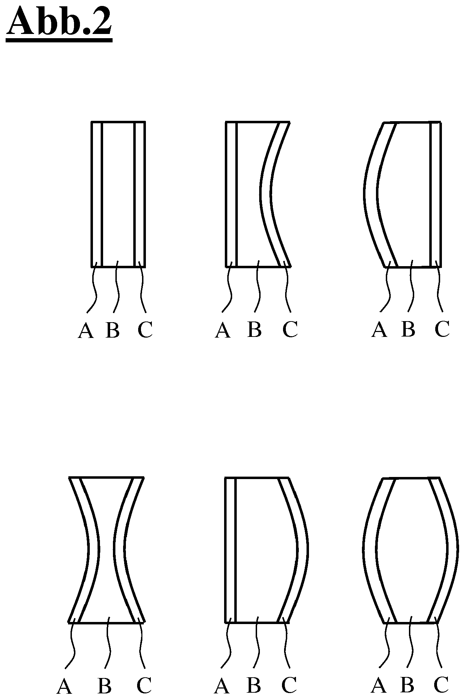

Abbildung 2 zeigt mögliche Oberflächentopographien des erfindungsgemäßen Brillenglases.

Im Folgenden wird die Erfindung durch einige Beispiele näher erläutert, welche die Erfindung jedoch nicht beschränken.

### I Herstellung der erfindungsgemäßen Brillengläser

### Ia Herstellung der erfindungsgemäßen Brillengläser unter Verwendung eines Brillenglas-Halbfabrikats oder eines Brillenglas-Fertigfabrikats als Komponente B

### Vergleichsbeispiel 1:

Ein Brillenglas-Halbfabrikat basierend auf Polythiourethan (MR 8, Firma Mitsui Chemicals, Inc) mit einem Vorderflächen-Krümmungsradius von 122mm, welches auf der Vorderfläche V_{B} mit einer photochromen Schicht (PhotoFusion, Firma ZEISS) belegt wurde, wurde mittels abrasiver Bearbeitung auf der Rückfläche R_{B} des Brillenglas-Halbfabrikats auf eine optische Stärke von 0dpt eingestellt. Auf die photochrome Schicht wurden mittig 300µL des Klebemittels gemäß Beispiel 13 der WO 2015/121341 A1 aufgebracht und anschließend das mittels einer Keramikform umgeformte Dünnstglas (Dünnstglas vor Umformung: D 263® T eco, Firma Schott AG) mit einem Krümmungsradius von 120mm auf die photochrome Schicht manuell aufgedrückt, so dass sich der Klebstoff gleichmäßig zwischen der Rückfläche R_{DA} des Dünnstglases und der photochromen Schicht verteilte. Zum Aushärten des Klebemittels wurde das die Komponenten A und B umfassende Brillenglas bei 25°C für 24 Stunden gelagert.

### Beispiel 1:

Das Brillenglas aus Vergleichsbeispiel 1 wurde auf der Rückfläche R_{B} über eine Schleuderbeschichtung die Hartlackschicht gemäß Beispiel 2 der EP 2 578 649 A1 aufgebracht, die bei 40°C für eine Stunde angetrocknet wurde. Im Anschluss wurde die Vorderfläche des Dünnstglas und die außenliegende Hartlackschicht jeweils mit einer Entspiegelungsschicht (DuraVision Platinum, Firma ZEISS) sowie anschließend mit der Clean-Coat-Schicht (AFP 3000+, Firma Cotec GmbH), jeweils mittels eines PVD-Verfahrens, bedampft.

### Vergleichsbeispiel 2:

Auf die konkave Rückfläche R_{DA} eines mittels einer Keramikform umgeformten Dünnstglases (Dünnstglas vor Umformung: AF 32® eco, Firma Schott AG) mit einer Dicke von 100µm und einem Krümmungsradius von 120mm wurde mit einem PVD-Verfahren ein Metallspiegel aus SiO₂-Cr-SiO₂ in einer Gesamtschichtdicke von 65 nm aufgedampft. Das so erhaltene verspiegelte Dünnstglas wurde mittels 300µL des Klebemittels gemäß Beispiel 12 der WO 2015/121341 A1, welches mittig auf dem Metallspiegel aufgebracht wurde, mit der kovexen Vorderfläche V_{B} des Brillenglas-Fertigfabrikats basierend auf Polyallyldiglycolcarbonat (CR 39, PPG Industries, Inc.) mit -2.00dpt durch manuelles Andrücken verbunden und 24 Stunden bei 25°C gelagert.

### Beispiel 2:

Das Brillenglas aus Vergleichsbeispiel 2 wurde auf der Rückfläche des Brillenglas-Fertigfabrikats R_{B} über eine Schleuderbeschichtung mit der Hartlackschicht gemäß Beispiel 3 der EP 2 578 649 A1 belegt, und bei 40°C für eine Stunde angetrocknet. Anschließend wurde die Vorderfläche des Dünnstglases und die Hartlackschicht jeweils mit der Entspiegelungsschicht (DuraVision Platinum, Firma ZEISS) sowie der Clean-Coat-Schicht (Optron Surfclear 100, Firma Canon), jeweils mittels eines PVD-Verfahrens, bedampft.

### Vergleichsbeispiel 3:

Ein Brillenglas-Fertigfabrikat basierend auf Polyallyldiglycolcarbonat (RAV7NT, Firma Acomon AG) mit einem Vorderflächen-Krümmungsradius von 121mm mit -2.00dpt wurde auf der Vorderfläche V_{B} mit 300µL des Klebemittels gemäß Beispiel 7 der WO 2015/121341 A1 ausgestattet und ein mittels einer Keramikform umgeformtes Dünnstglas (Dünnstglas vor Umformung: AF 32® eco, Firma Schott AG) mit einem Krümmungsradius von 120mm manuell aufgedrückt, so dass sich das Klebemittel gleichmäßig zwischen der Rückfläche des Dünnstglas und der Vorderfläche des Brillenglas-Fertigfabrikats gleichmäßig verteilte. Anschließend wurde das die Komponenten A und B umfassende Brillenglas bei 25°C für 24 Stunden gelagert.

### Beispiel 3:

Das Brillenglas aus Vergleichsbeispiel 3 wurde auf der Rückfläche des Brillenglas-Fertigfabrikats über eine Schleuderbeschichtung eine Hartlackschicht gemäß Beispiel 2 der EP 2 578 649 A1 aufgebracht, die bei 40°C für eine Stunde angetrocknet wurde. Auf die Vorderfläche des Dünnstglases und die außenliegende Hartlackschicht wurde jeweils die Entspiegelungsschicht (DuraVision Platinum, Firma ZEISS) sowie die Clean-Coat-Schicht (Satin 380, Firma Satisloh), jeweils mittels eines PVD-Verfahrens aufgedampft.

### Beispiel 4:

Ein Brillenglas-Fertigfabrikat basierend auf Polyallyldiglycolcarbonat (CR 39, Firma PPG Industries, Inc.) mit einem Vorderflächen-Krümmungsradius von 121mm und -2.00dpt wird auf der Vorderfläche V_{B} mit 300µL des Klebemittels gemäß Beispiel 1 der DE 10 2014 202 609A1 ausgestattet und auf die Rückfläche R_{DA} eines mittels einer Keramikform umgeformten Dünnstglases (Dünnstglas vor Umformung: AF 32® eco, Firma Schott AG) mit einem Radius von 120mm aufgedrückt, so dass sich das Klebemittel gleichmäßig zwischen der Rückfläche des Dünnstglases R_{DA} und der Vorderfläche des Brillenglas-Fertigfabrikats V_{B} verteilte. Das so erhaltene Brillenglas umfassend die Komponenten A und B wurde bei 25°C für 24 Stunden gelagert. Danach wurde auf der Rückfläche des Brillenglas-Fertigfabrikats R_{B} über eine Schleuderbeschichtung die Hartlackschicht gemäß Beispiel 2 der EP 2 578 649 A1 aufgebracht, die bei 60°C für 15 Minuten ausgehärtet wurde.

### Beispiel 5:

Das Brillenglas aus Vergleichsbeispiel 2 wurde auf der Rückfläche des Brillenglas-Fertigfabrikats über eine Schleuderbeschichtung eine Hartlackschicht gemäß Beispiel 2 der EP 2 578 649 A1 aufgebracht, die bei 45°C für eine Stunde angetrocknet wurde. Auf die Vorderfläche des Dünnstglases und die außenliegende Hartlackschicht wurde jeweils die Entspiegelungsschicht (DuraVision Platinum, Firma ZEISS) sowie die Clean-Coat-Schicht (EverClean IV, Umicore AG & Co. KG), jeweils mittels eines PVD-Verfahrens aufgedampft.

### Vergleichsbeispiel 4:

Ein Brillenglas-Halbfabrikat basierend auf Polyallyldiglycolcarbonat (CR 39, Firma PPG Industries, Inc.) wurde mittels abrasiver Bearbeitung auf der Rückfläche R_{B} des Brillenglas-Halbfabrikats auf einen Krümmungsradius von 120mm eingestellt. Auf die Rückfläche wurden mittig 300µL des Klebemittels gemäß Beispiel 2 der WO 2015/121341 A1 aufgebracht und anschließend das mittels einer Keramikform umgeformte Dünnstglas (Dünnstglas vor Umformung: D 263® T eco, Firma Schott AG) mit einem Krümmungsradius von 120mm manuell aufgedrückt, so dass sich der Klebstoff gleichmäßig zwischen der konvexen Vorderfläche V_{DC} des Dünnstglases und der konkave Rückfläche R_{B} verteilte. Zum Aushärten des Klebemittels wurde das die Komponenten B und C umfassende Brillenglas bei 25°C für 24 Stunden gelagert. Das Brillenglas wurde auf der Vorderfläche V_{B} über eine Schleuderbeschichtung die Hartlackschicht gemäß Beispiel 2 der EP 2 578 649 A1 aufgebracht, die bei 40°C für 15 Minuten angetrocknet wurde. Im Anschluss wurde die Vorderfläche des Dünnstglas und die außenliegende Hartlackschicht jeweils mit einer Entspiegelungsschicht (DuraVision Platinum, Firma ZEISS) sowie anschließend mit der Clean-Coat-Schicht (AFP 3000+, Firma Cotec GmbH), jeweils mittels eines PVD-Verfahrens, bedampft.

### Beispiel 6:

Auf das Brillenglas, wie aus Vergleichsbeispiel 4 ohne Vorderflächenbeschichtung, wurde auf der Vorderfläche des Brillenglas-Fertigfabrikats 300µL des Klebemittels gemäß Beispiel 4 der WO 2015/121341 A1 aufgebracht und anschließend das mittels einer Keramikform umgeformte Dünnstglas (Dünnstglas vor Umformung: D 263® T eco, Firma Schott AG) mit einem Krümmungsradius von 120mm manuell aufgedrückt, so dass sich der Klebstoff gleichmäßig zwischen der Rückfläche R_{DA} des Dünnstglases und der Vorderfläche V_{B} verteilte. Zum Aushärten des Klebemittels wurde das die Komponenten A, B und C umfassende Brillenglas bei 25°C für 24 Stunden gelagert. Auf die beiden Außenflächen wurde jeweils die Entspiegelungsschicht (DuraVision Platinum, Firma ZEISS) sowie die Clean-Coat-Schicht (EverClean IV, Umicore AG & Co. KG), jeweils mittels eines PVD-Verfahrens aufgedampft.

### Vergleichsbeispiel 5:

Ein Brillenglas-Fertigfabrikat basierend auf Polyallyldiglycolcarbonat (CR 39, Firma PPG Industries, Inc.) mit einem Vorderflächen-Krümmungsradius von 121mm und -2.00dpt.

### Vergleichsbeispiel 6:

Ein Brillenglas-Halbfabrikat basierend auf Polyallyldiglycolcarbonat (CR 39, Firma PPG Industries, Inc.) wurde mittels abrasiver Bearbeitung auf der Rückfläche R_{B} des Brillenglas-Halbfabrikats auf einen Krümmungsradius von 120mm eingestellt. Auf die Rückfläche wurden mittig 300µL des Klebemittels gemäß Beispiel 2 der WO 2015/121341 A1 aufgebracht und anschließend das mittels einer Keramikform umgeformte Dünnstglas (Dünnstglas vor Umformung: D 263® T eco, Firma Schott AG) mit einem Krümmungsradius von 120mm manuell aufgedrückt, so dass sich der Klebstoff gleichmäßig zwischen der Vorderfläche V_{DC} des Dünnstglases und der Rückfläche R_{B} verteilte. Zum Aushärten des Klebemittels wurde das die Komponenten B und C umfassende Brillenglas bei 25°C für 24 Stunden gelagert.

### Beispiel 7:

Ein Brillenglas-Fertigfabrikat basierend auf Polyallyldiglycolcarbonat (RAV700, Firma Acomon AG) mit einer physischen planen Geometrie und einer Mittendicke von 2mm wurde auf der Vorderfläche V_{B} mit 300µL des Klebemittels gemäß Beispiel 11 der WO 2015/121341 A1 ausgestattet und ein rundes sowie planes Dünnstglas (AF 32® eco, Firma Schott AG) manuell aufgedrückt, so dass sich das Klebemittel gleichmäßig zwischen der Rückfläche des Dünnstglas und der Vorderfläche des Brillenglas-Fertigfabrikats gleichmäßig verteilte. Anschließend wurde das die Komponenten A und B umfassende Brillenglas bei 25°C für 24 Stunden gelagert. Das Glas wurde auf der Rückfläche R_{B} über eine Schleuderbeschichtung eine Hartlackschicht gemäß Beispiel 2 der EP 2 578 649 A1 aufgebracht, die bei 40°C für 30 Minuten angetrocknet wurde. Auf die Vorderfläche des Dünnstglases und die außenliegende Hartlackschicht wurde jeweils die Entspiegelungsschicht (DuraVision Platinum, Firma ZEISS) sowie die Clean-Coat-Schicht (Satin 380, Firma Satisloh), jeweils mittels eines PVD-Verfahrens aufgedampft.

### Beispiel 8:

Ein Brillenglas-Fertigfabrikat basierend auf Polyallyldiglycolcarbonat (CR 39, Firma PPG Industries, Inc.) mit einem Vorderflächen-Krümmungsradius von 121mm und -2.00dpt wird auf der Vorderfläche V_{B} mit 300µL des Klebemittels gemäß Beispiel 12 der WO 2015/121341 A1 ausgestattet und auf die Rückfläche R_{DA} eines mittels einer Keramikform umgeformten Dünnstglases (Dünnstglas vor Umformung: AF 32® eco, Firma Schott AG) mit einem Radius von 120mm aufgedrückt, so dass sich das Klebemittel gleichmäßig zwischen der Rückfläche des Dünnstglases R_{DA} und der Vorderfläche des Brillenglas-Fertigfabrikats V_{B} verteilte. Das so erhaltene Brillenglas umfassend die Komponenten A und B wurde bei 25°C für 24 Stunden gelagert. Danach wurde auf der Rückfläche des Brillenglas-Fertigfabrikats R_{B} über eine Schleuderbeschichtung die Hartlackschicht gemäß Beispiel 2 der EP 2 578 649 A1 aufgebracht, die bei 40°C für 15 Minuten ausgehärtet wurde. Anschließend wurde die Vorderfläche des Dünnstglases und die Hartlackschicht jeweils mit der Entspiegelungsschicht (DuraVision Platinum, Firma ZEISS) sowie der Clean-Coat-Schicht (Optron Surfclear 100, Firma Canon), jeweils mittels eines PVD-Verfahrens, bedampft.

### Vergleichsbeispiel 7:

Ein Brillenglas-Fertigfabrikat basierend auf Polyallyldiglycolcarbonat (RAV7NT, Firma Acomon AG) mit einer physischen planen Geometrie und einer Mittendicke von 2mm wurde auf der Vorderfläche V_{B} mit 300µL des Klebemittels gemäß Beispiel 11 der WO 2015/121341 A1 ausgestattet und ein rundes sowie planes Dünnstglas (D 263® T eco, Firma Schott AG) manuell aufgedrückt, so dass sich das Klebemittel gleichmäßig zwischen der Rückfläche des Dünnstglas und der Vorderfläche des Brillenglas-Fertigfabrikats gleichmäßig verteilte. Anschließend wurde das die Komponenten A und B umfassende Brillenglas bei 25°C für 24 Stunden gelagert.

### Beispiel 9:

Das Brillenglas aus Vergleichsbeispiel 7 wurde auf der Rückfläche des Brillenglas-Fertigfabrikats über eine Schleuderbeschichtung eine Hartlackschicht gemäß Beispiel 2 der EP 2 578 649 A1 aufgebracht, die bei 40°C für eine Stunde angetrocknet wurde. Auf die Vorderfläche des Dünnstglases und die außenliegende Hartlackschicht wurde jeweils die Entspiegelungsschicht (DuraVision Platinum, Firma ZEISS) sowie die Clean-Coat-Schicht (EverClean IV, Umicore AG & Co. KG), jeweils mittels eines PVD-Verfahrens aufgedampft.

### Beispiel 10:

Das Brillenglas aus Vergleichsbeispiel 7 wurde auf der Rückfläche mit 300µL des Klebemittels gemäß Beispiel 8 der WO 2015/121341 A1 ausgestattet und ein rundes sowie planes Dünnstglas (D 263® T eco, Firma Schott AG) manuell aufgedrückt, so dass sich das Klebemittel gleichmäßig zwischen der Rückfläche des Dünnstglas und der Vorderfläche des Brillenglas-Fertigfabrikats gleichmäßig verteilte. Anschließend wurde das die Komponenten A, B und C umfassende Brillenglas bei 25°C für 24 Stunden gelagert. Auf beide Seiten des Glases wurde die Entspiegelungsschicht (DuraVision Platinum, Firma ZEISS) sowie die Clean-Coat-Schicht (Optron OR-210 D, Canon AG), jeweils mittels eines PVD-Verfahrens aufgedampft.

### Vergleichsbeispiel 8:

Ein Brillenglas-Fertigfabrikat basierend auf Polythiourethan (MR 8, Firma Mitsui Chemicals, Inc) mit einer physischen planen Geometrie und einer Mittendicke von 2mm wurde auf der Vorderfläche V_{B} mit 300µL des Klebemittels gemäß Beispiel 5 der WO 2015/121341 A1 ausgestattet und ein rundes sowie planes Dünnstglas (D 263® T eco, Firma Schott AG) manuell aufgedrückt, so dass sich das Klebemittel gleichmäßig zwischen der Rückfläche des Dünnstglas und der Vorderfläche des Brillenglas-Fertigfabrikats gleichmäßig verteilte. Anschließend wurde das die Komponenten A und B umfassende Brillenglas bei 25°C für 24 Stunden gelagert.

### Beispiel 11:

Das Brillenglas aus Vergleichsbeispiel 8 wurde auf der Rückfläche mit 300µL des Klebemittels gemäß Beispiel 12 der WO 2015/121341 A1 ausgestattet und ein rundes sowie planes Dünnstglas (D 263® T eco, Firma Schott AG) manuell aufgedrückt, so dass sich das Klebemittel gleichmäßig zwischen der Rückfläche des Dünnstglas und der Vorderfläche des Brillenglas-Fertigfabrikats gleichmäßig verteilte. Anschließend wurde das die Komponenten A, B und C umfassende Brillenglas bei 25°C für 24 Stunden gelagert. Auf die Vorderfläche sowie die Rückfläche des Brillenglases wurde jeweils die Entspiegelungsschicht (DuraVision Platinum, Firma ZEISS) sowie die Clean-Coat-Schicht (Optron OR-210 D, Canon AG), jeweils mittels eines PVD-Verfahrens aufgedampft.

### Vergleichsbeispiel 9:

Ein Brillenglas-Fertigfabrikat basierend auf Polyallyldiglycolcarbonat (RAV700, Firma Acomon AG) mit einem Vorderflächen-Krümmungsradius von 121mm und -2.00dpt das mit einem handelsüblichen Hartlack ähnlich Beispiel 3 der EP 2 578 649 A1 und einer Verspiegelung ausgestattet wurde. Die Verspiegelung wurde mit einem PVD-Verfahren aus SiO₂-Cr-SiO₂ in einer Gesamtschichtdicke von 65 nm aufgedampft.

### Vergleichsbeispiel 10:

Ein Brillenglas-Halbfabrikat basierend auf Polythiourethan (MR 8, Firma Mitsui Chemicals, Inc) mit einem Vorderflächen-Krümmungsradius von 122mm, welches auf der Vorderfläche V_{B} mit einer photochromen Schicht (PhotoFusion, Firma ZEISS) belegt wurde, wurde mittels abrasiver Bearbeitung auf der Rückfläche R_{B} des Brillenglas-Halbfabrikats auf eine optische Stärke von 0dpt eingestellt.

### Vergleichsbeispiel 11:

Ein Brillenglas-Fertigfabrikat basierend auf Polyallyldiglycolcarbonat (RAV700, Firma Acomon AG) mit einem Vorderflächen-Krümmungsradius von 121mm und -2.00dpt das mit einem Hartlack gemäß Beispiel 3 der EP 2 578 649 A1 über ein Tauchbeschichtungsverfahren ausgestattet wurde. Über die Hartbeschichtung wurde via PVD-Verfahren eine Entspiegelungsschicht (LotuTec, Firma ZEISS) sowie die Clean-Coat-Schicht (Duralon 300, Cotec GmbH) aufgebracht.

### Beispiel Glas 12:

Ein Brillenglas-Fertigfabrikat basierend auf Kronglas (UV-W76, D0391, Firma Schott AG) mit einem Vorderflächen-Krümmungsradius von 120mm und -2.00dpt wurde auf der Vorderfläche V_{B} mit 200µL des Klebemittels gemäß Beispiel 4 der WO 2015/121341 A1 ausgestattet. Ein mittels einer Keramikform umgeformtes Dünnstglas (Dünnstglas vor Umformung: AF 32® eco, Firma Schott AG) mit einem Radius von 120mm wurde auf das Brillenglas-Fertigfabrikat aufgedrückt, so dass sich das Klebemittel gleichmäßig zwischen der Rückfläche des Dünnstglases R_{DA} und der Vorderfläche des Brillenglas-Fertigfabrikats V_{B} verteilte. Das so erhaltene Brillenglas umfassend die Komponenten A und B wurde bei 80°C für 4 Stunden gelagert. Danach wurde auf die Vorderfläche des Dünnstglases und die Rückfläche des Kronglases die Entspiegelungsschicht (LotuTec, Firma ZEISS) sowie die Clean-Coat-Schicht (Optron Surfclear 100, Firma Canon), jeweils mittels eines PVD-Verfahrens, aufgedampft.

### Beispiel Glas 13:

Ein Brillenglas-Fertigfabrikat basierend auf Kronglas (UV-W76, D0391, Firma Schott AG) mit einem Vorderflächen-Krümmungsradius von 120mm und -2.00dpt wurde auf der Vorderfläche V_{B} mit einer UV-härtenden photochromen Schicht (PhotoFusion, Firma ZEISS) ausgestattet. Auf die Oberfläche der phototropen Beschichtung wurden 300µL des Klebemittels gemäß Beispiel 4 der WO 2015/121341 A1 aufgebracht. Ein mittels einer Keramikform umgeformtes Dünnstglas (Dünnstglas vor Umformung: D 263® T eco, Firma Schott AG) mit einem Radius von 120mm wurde auf das Brillenglas-Fertigfabrikat aufgedrückt, so dass sich das Klebemittel gleichmäßig zwischen der Rückfläche des Dünnstglases R_{DA} und der auf der Vorderfläche des Brillenglas-Fertigfabrikats V_{B} befindlichen photochromen Schicht verteilte. Die Klebeschicht im so erhaltenen Brillenglas umfassend die Komponenten A und B wurde bei 70°C für 3,5 Stunden ausgehärtet. Danach wurde auf die Vorderfläche des Dünnstglases und die Rückfläche des Kronglases die Entspiegelungsschicht (LotuTec, Firma ZEISS) sowie die Clean-Coat-Schicht (AFP 3000+, Firma Cotec GmbH), jeweils mittels eines PVD-Verfahrens, aufgedampft.

### Beispiel Glas 14:

Ein Brillenglas-Fertigfabrikat basierend auf Kronglas (UV-W76, D0391, Firma Schott AG) mit einem Vorderflächen-Krümmungsradius von 90mm und 0.00dpt wurde auf der Vorderfläche V_{B} ein polarisierender Film aufgeklebt. Dazu wurden 300µL des Klebemittels gemäß Beispiel 6 der WO 2015/121341 A1 aufgebracht und der vorgeformte polarisierende Film (TAC-PVA-TAC) mit einem Krümmungsradius von 90mm aufgedrückt, so dass sich der Klebstoff gleichmäßig verteilt. Dieses Vorfabrikat wurde bei 50°C für 15 Minuten vorgehärtet. Auf die Oberfläche des polarisierenden Films wurden 300µL des Klebemittels gemäß Beispiel 6 der WO 2015/121341 A1 aufgebracht. Ein mittels einer Keramikform umgeformtes Dünnstglas (Dünnstglas vor Umformung: D 263® T eco, Firma Schott AG) mit einem Radius von 90mm wurde auf das Brillenglas-Fertigfabrikat aufgedrückt, so dass sich das Klebemittel gleichmäßig zwischen der Rückfläche des Dünnstglases R_{DA} und der auf der Vorderfläche des Brillenglas-Fertigfabrikats V_{B} befindlichen polarisierenden Film verteilte. Die Klebeschicht im so erhaltenen Brillenglas umfassend die Komponenten A und B wurde bei 50°C für 2,0 Stunden ausgehärtet. Danach wurde auf die Vorderfläche des Dünnstglases und die Rückfläche des Kronglases die Entspiegelungsschicht (LotuTec, Firma ZEISS) sowie die Clean-Coat-Schicht (Optron OR-210 D, Canon AG), jeweils mittels eines PVD-Verfahrens, aufgedampft.

### II Charakterisierung der erfindungsgemäßen Brillengläser sowie der Brillengläser der Vergleichsbeispiele

### IIa Bestimmung der photochromen Eigenschaften

Die Bestimmung der photochromen Eigenschaften erfolgte an den Brillengläsern des Vergleichsbeispiels 1 und des Vergleichsbeispiels 10:

| Transmission | Vergleichsbeispiel 1 | Vergleichsbeispiel 10 |
|---|---|---|
| Initial [%] | 82,0 | 85,4 |
| Dunkel (15min beleuchtet) [%] | 10,5 | 7,8 |
| Nach 30 dunkler Lagerung [%] | 79,5 | 84,2 |
| Photochromes Verhältnis [%] | 7,8 | 10,9 |

Die Transmissionsmessungen erfolgten nach DIN 1836.

| Zeit | Vergleichsbeispiel 1 | Vergleichsbeispiel 10 |
|---|---|---|
| Eindunklung bis ¼ der initialen Transmission [sec] | 48 | 33 |
| Aufhellung bis ¾ der initialen Transmission [sec] | 180 | 126 |

Die Unterschiede in den Messwerten der Brillengläser der Vergleichsbeispiele 1 und 10 gehen auf die erhöhte Reflektivität des Brillenglases aus Vergleichsbeispiel 1 zurück, bei dem an dem Dünnstglas zusätzliche Reflektionen auftreten, die die effektive Beleuchtungsdichte an der photochromen Schicht reduzieren.

### IIb Bestimmung der Wasseraufnahmefähigkeit des Brillenglases

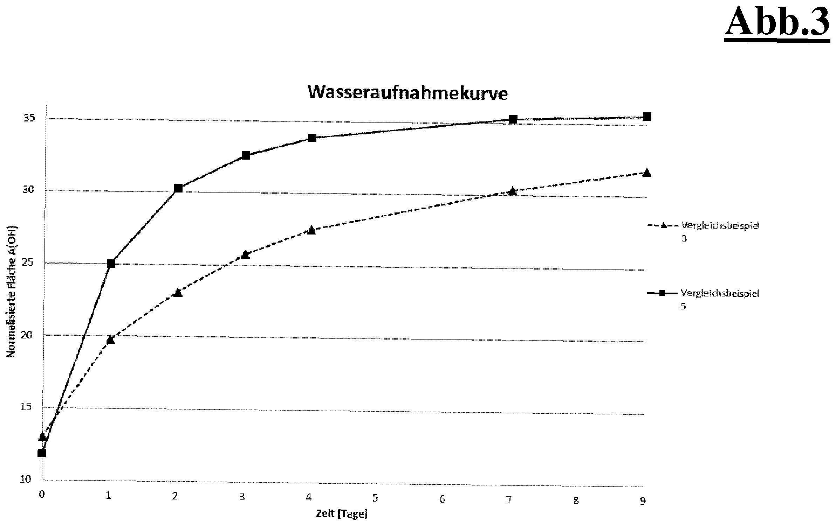

Das Brillenglas aus Vergleichsbeispiel 3 wurde bei 40°C und 95% relativer Luftfeuchte gelagert, um die Wasseraufnahme im Vergleich zu unverändertem und unbeschichtetem Ausgangsmaterial aus Vergleichsbeispiel 5 zu prüfen. Es wurde regelmäßig über 9 Tage nach dem in DE 1 9519 975 C1 offenbarten Verfahren der Wassergehalt vermessen und die sich ergebende Wasseraufnahmekurve dokumentiert. Der Verlauf der Kurve (gestrichelte Linie in Abbildung 3) ergibt eine ca. halbierte Geschwindigkeit der Wasseraufnahme.

Die Wasserbarriere berechnet sich als WB = 1-(Wasseraufnahme Tag 1 des Vergleichsbeispiels 3/Wasseraufnahme Tag 1 des Vergleichsbeispiels 5) = 0,49. Die Probe nimmt innerhalb von 24 Stunden nur 49% der maximal möglichen Wassermenge auf.

### IIc Bestimmung der Transmission

Die Transmission der Brillengläser wurde mit dem Messgerät Perkin Elmer Lambda 950 zwischen 280 und 780nm gemessen.

| | Untergrenze UV Strahlung (max. 2% Transmission) | Lichttransmissionsgrad [%], D65,2° |
|---|---|---|
| Vergleichsbeispiel 2 | 360nm | 33,1 |
| Vergleichsbeispiel 4 | 365nm | 98,3 |
| Vergleichsbeispiel 5 | 350nm | 91,5 |
| Vergleichsbeispiel 6 | 360nm | 91,8 |
| Beispiel 7 | 360nm | 98,8 |
| Beispiel 8 | 360nm | 98,2 |
| Vergleichsbeispiel 7 | 355nm | 92,0 |
| Vergleichsbeispiel 8 | 375nm | 90,8 |

Die Transmission und die Untergrenze UV Strahlung, die durch das Brillenglas hindurchgelassen wird, entspricht dem Wert eines Standardglases (Vergleichsbeispiel 5) ohne Dünnstglas. Ein mit einer Antireflexbeschichtung (Vergleichsbeispiel 4, Beispiele 7 und 8) veredeltes Brillenglas mit Dünnstglas erreicht die üblicherweise gewünschte Transmission von >98%. Das Vergleichsbeispiel 4 mit Verspiegelung erreicht eine übliche Transmission von 33,1%.

### IIc Kratztest

Mit konventionellen Kratztechniken (Diamant mit Gewicht) für Brillengläser kann das Dünnstglas nicht durchdrungen werden und damit sind Funktionsschichten zwischen A und B, bzw. B und C wenn C ein Dünnstglas ist, vor Umwelteinflüssen geschützt. Dazu wurde Vergleichsbeispiel 3 mit einem Diamant mit ansteigenden Gewichten gekratzt. Ab 150g waren vereinzelte Spuren sichtbar, ab 200g entstand eine durchgehende Kratzspur jeweils ohne Ausbrüche oder Ausmuschelungen. Vergleichsbeispiel 11 zeigte Ausmuschelungen bereits bei 150g.

### IId Bayer Test

Das Brillenglas aus Vergleichsbeispiel 3 wurde parallel mit dem Brillenglas aus Vergleichsbeispiel 9 in einer Metallpfanne in einem Abstand von 10 cm fixiert und zusammen mit 500 ± 5 g Alundum von Norton (Saint Gobain) mit 300 Zyklen geschüttelt. Danach wurden die Positionen der beiden Brillengläser in der Metallpfanne ausgetauscht und weitere 300 Zyklen geschüttelt. Vor und nach dieser Behandlung wurde das Streulicht vermessen.

| | Ausgangszustand | Endzustand |
|---|---|---|
| | % Streulicht | % Streulicht |
| Vergleichsbeispiel 3 | 14,7 | 14,5 |
| Vergleichsbeispiel 9 | 0,44 | 1,79 |

Das Streulicht des Vergleichsbeispiel 9 nahm während des Bayer-Tests deutlich zu während das Vergleichsbeispiel 3 nur im Rahmen der Messungenauigkeit schwankte. Der gegenüber der Einwirkung von Kratzern empfindliche Spiegel wird damit im Vergleichsbeispiel 3 sehr viel besser gegenüber Umwelteinflüssen geschützt.

## Patentansprüche

1. Brillenglas umfassend, ausgehend von der objektseitigen Vorderfläche des Brillenglases zur gegenüberliegenden Rückfläche des Brillenglases, wenigstens
a) eine Komponente A umfassend ein Dünnstglas,
b) eine Komponente B umfassend wenigstens ein polymeres Material und/oder wenigstens ein mineralisches Glas,
c) eine Komponente C umfassend wenigstens eine Funktionsschicht F_{C} und/oder ein Dünnstglas,
**dadurch gekennzeichnet, dass**
das Dünnstglas der Komponente A und das Dünnstglas der Komponente C jeweils eine Glaskomposition ausgewählt aus der Gruppe bestehend aus Borosilikatglas, Aluminium-Borosilikatglas und alkalifreiem Borosilikatglas umfasst, wobei die Glaskomposition des Dünnstglases der Komponente A und des Dünnstglases der Komponente C gleich oder verschieden voneinander ist,
das Dünnstglas der Komponente A und das Dünnstglas der Komponente C jeweils eine mittlere Dicke aus einem Bereich von 13 µm bis 760 µm aufweist, wobei die mittlere Dicke des Dünnstglases der Komponente A und des Dünnstglases der Komponente C gleich oder verschieden voneinander ist,
die Rückfläche R_{DA} des Dünnstglases der Komponente A wenigstens eine Funktionsschicht F_{RA} und/oder die Vorderfläche V_{B} der Komponente B wenigstens eine Funktionsschicht F_{VB} umfasst, Komponente B ein Brillenglas-Fertigfabrikat umfasst, die Oberflächentopographie der Komponenten A, B und C jeweils plan, sphärisch, asphärisch, torisch oder atorisch ist, die Oberflächentopographie der jeweiligen Vorderfläche und der jeweiligen Rückfläche der Komponenten A und C gleich ist, die Oberflächentopographie der Komponente A gleich oder verschieden zu der Oberflächentopographie der Komponente C ist, die Oberflächentopographie der Komponenten A gleich zu der Oberflächentopographie der Vorderfläche der Komponente B und die Oberflächentopographie der Komponente C gleich zu der Oberflächentopographie der Rückfläche der Komponente B ist und
das Brillenglas wenigstens eine dioptrische Wirkung und die Komponente B eine berechnete ortsabhängige Brechungsindexverteilung aufweist.

2. Brillenglas nach Anspruch 1, wobei die relative Standardabweichung der Dickenverteilung des Dünnstglases der Komponente A bzw. C jeweils 0,1% bis 100% beträgt.

3. Brillenglas nach einem der vorstehenden Ansprüche, wobei das Dünnstglas der Komponente A bzw. der Komponente C jeweils keine Farbmittel umfasst oder jeweils keine photochromen Eigenschaften aufweist.

4. Brillenglas nach einem der vorstehenden Ansprüche, wobei das Dünnstglas der Komponente A auf der Vorderfläche V_{DA} wenigstens eine Funktionsschicht F_{VA} und/oder das Dünnstglas der Komponente C auf der Rückfläche R_{DC} wenigstens eine Funktionsschicht F_{RC} umfasst.

5. Brillenglas nach Anspruch 4, wobei die wenigstens eine Funktionsschicht F_{VA} und/oder die wenigstens eine Funktionsschicht F_{RC} jeweils aus der Gruppe bestehend aus wenigstens einer Entspiegelungsschicht, wenigstens einer elektrisch leitfähigen oder halbleitenden Schicht, wenigstens einer Antibeschlagsschicht und wenigstens einer Clean-Coat-Schicht ausgewählt ist.

6. Brillenglas nach einem der vorstehenden Ansprüche, wobei die wenigstens eine Funktionsschicht F_{RA} aus der Gruppe bestehend aus wenigstens einer farbgebenden Schicht, wenigstens einer photochromen Schicht, wenigstens einer polarisierenden Schicht und wenigstens einer Verspiegelungsschicht ausgewählt ist.

7. Brillenglas nach der Anspruch 6, wobei ausgehend von der objektseitigen Vorderfläche zur gegenüberliegenden augenseitigen Rückfläche eine der nachstehenden Kombinationen der Funktionsschicht F_{RA} in der angegebenen Reihenfolge zwischen den Komponenten A und B vorliegen:
Komponente A / photochrome Schicht / polarisierende Schicht / farbgebende Schicht / Komponente B,
Komponente A / photochrome Schicht / farbgebende Schicht / polarisierende Schicht / Komponente B,
Komponente A / photochrome Schicht / polarisierende Schicht / Verspiegelungsschicht / Komponente B,
Komponente A / photochrome Schicht / Verspiegelungsschicht / polarisierende Schicht / Komponente B,
Komponente A / photochrome Schicht / Verspiegelungsschicht / Komponente B,
Komponente A / Verspiegelungsschicht / polarisierende Schicht / farbgebende Schicht / Komponente B,
Komponente A / polarisierende Schicht / farbgebende Schicht / Komponente B,
Komponente A / Verspiegelungsschicht / polarisierende Schicht / Komponente B oder
Komponente A / Verspiegelungsschicht / farbgebende Schicht / Komponente B.

8. Brillenglas nach einem der vorstehenden Ansprüche, wobei die wenigstens eine Funktionsschicht F_{C} aus der Gruppe bestehend aus wenigstens einer Hartlackschicht, wenigstens einer Entspiegelungsschicht, wenigstens einer Antibeschlagsschicht, wenigstens einer Clean-Coat-Schicht und wenigstens einer elektrisch leitfähigen oder halbleitenden Schicht, ausgewählt ist.

9. Brillenglas nach einem der vorstehenden Ansprüche, wobei die Rückfläche des Dünnstglases R_{DA} der Komponente A eine Verspiegelungsschicht als Funktionsschicht F_{RA} und die Vorderfläche des Dünnstglases V_{DA} der Komponente A keine Entspiegelungsschicht oder
wobei die Vorderfläche des Dünnstglases V_{DA} der Komponente A eine Entspiegelungsschicht als Funktionsschicht F_{VA} und die Rückfläche des Dünnstglases R_{DA} der Komponente A eine photochrome Schicht als Funktionsschicht F_{RA} umfasst.

10. Brillenglas nach einem der vorstehenden Ansprüche, wobei das Dünnstglas der Komponente C auf der Vorderfläche V_{DC} eine farbgebende Schicht als Funktionsschicht F_{VC} umfasst.

11. Brillenglas nach einem der vorstehenden Ansprüche, wobei die Krümmungsradien des Komponenten A, B und C weniger als 1 mm voneinander abweichen.

12. Verfahren zur Herstellung eines Brillenglases umfassend, ausgehend von der objektseitigen Vorderfläche des Brillenglases zur gegenüberliegenden Rückfläche des Brillenglases, wenigstens die Komponenten A, B und C, wobei die Komponente A ein Dünnstglas, die Komponente B ein polymeres Material und/oder wenigstens ein mineralisches Glas, die Komponente C wenigstens eine Funktionsschicht F_{C} und/oder ein Dünnstglas umfasst und das Verfahren die folgenden Schritte umfasst:
i. Bereitstellen eines optional umgeformten Dünnstglases der Komponente A und optional Bereitstellen eines optional umgeformten Dünnstglases der Komponente C,
ii. Beschichten der Rückfläche R_{DA} des Dünnstglases der Komponente A mit wenigstens einer Funktionsschicht F_{RA},
iii. optional Beschichten der Vorderfläche V_{DC} des Dünnstglases der Komponente C mit wenigstens einer Funktionsschicht F_{VC},
iv. Bereitstellen eines Brillenglas-Fertigfabrikats der Komponente B umfassend ein polymeres Material oder ein mineralisches Glas, welche eine berechnete ortsabhängige Brechungsindexverteilung aufweist und wobei optional die Vorderfläche V_{B} des Brillenglas-Fertigfabrikats mit wenigstens einer Funktionsschicht F_{VB} und optional die Rückfläche R_{B} des Brillenglas-Fertigfabrikats mit wenigstens einer Funktionsschicht F_{RB} beschichtet ist,
v. Verbinden der beschichteten Rückfläche R_{DA} der Komponente A mit der optional beschichteten Vorderfläche V_{B} der Komponente B und a) Verbinden der optional beschichteten Rückfläche R_{B} mit der optional beschichteten Vorderfläche V_{DC} des Dünnstglases der Komponente C oder b) Beschichten der Rückfläche R_{B} der Komponente B mit wenigstens einer Funktionsschicht F_{C},
vi. optional Beschichten der Vorderfläche V_{DA} des Dünnstglases der Komponente A mit wenigstens einer Funktionsschicht F_{VA} und optional Beschichten der Rückfläche R_{DC} des Dünnstglases der Komponente C mit wenigstens einer Funktionsschicht F_{RC},
vii. Formranden des in Schritt v. bzw. vi. erhaltenen Brillenglases umfassend die Komponenten A, B und C.

13. Verfahren nach Anspruch 12, bei dem das Verbinden der zu verbindenden Komponenten A, B und C mittels eines Klebemittels, mittels eines Bonding-Verfahrens oder mittels Ansprengen erfolgt.

14. Verfahren nach einem der Ansprüche 12 bis 13, wobei die zu verbindenden Komponenten A, B und C mittels eines Klebemittels basierend auf der aminkatalysierten Thiolhärtung von Epoxidharzen bei einer Temperatur aus einem Bereich von 20°C bis 80°C miteinander verbunden werden.

15. Verwendung eines auf der Vorderfläche und/oder auf der Rückfläche mit wenigstens einer Funktionsschicht beschichteten Dünnstglases mit einer mittleren Dicke aus einem Bereich von 13 µm bis 760 µm und einer Glaskomposition ausgewählt aus der Gruppe bestehend aus Borosilikatglas, Aluminium-Borosilikatglas und alkalifreiem Borosilikatglas, zur Herstellung eines Brillenglases nach Anspruch 1.

## Claims

1. Spectacle lens comprising, proceeding from the front face on the object side of the spectacle lens to the opposite reverse face of the spectacle lens, at least
a) a component A comprising an ultrathin lens,
b) a component B comprising at least one polymeric material and/or at least one mineral glass,
c) a component C comprising at least one functional layer F_{C} and/or an ultrathin lens,
**characterized in that**
the ultrathin lens of component A and the ultrathin lens of component C each comprise a glass composition selected from the group consisting of borosilicate glass, aluminoborosilicate glass and alkali-free borosilicate glass, where the glass composition of the ultrathin lens of component A and of the ultrathin lens of component C is the same or different,
the ultrathin lens of component A and the ultrathin lens of component C each have an average thickness from a range from 13 µm to 760 pm, where the average thickness of the ultrathin lens of component A and of the ultrathin lens of component C is the same or different,
the reverse face R_{DA} of the ultra-thin lens of component A comprises at least one functional layer F_{RA} and/or the front face V_{B} of component B comprises at least one functional layer F_{VB}, component B comprises a finished spectacle lens, the surface topography of components A, B and C is in each case planar, spherical, aspherical, toric or atoric, the surface topography of the respective front face and the respective reverse face of components A and C is the same, the surface topography of component A is the same as or different than the surface topography of component C, the surface topography of component A is the same as the surface topography of the front face of component B, and the surface topography of component C is the same as the surface topography of the reverse face of component B and
the spectacle lens has at least one dioptric power and component B has a calculated location-dependent refractive index distribution.

2. Spectacle lens according to Claim 1, wherein the relative standard deviation of the thickness distribution of the ultrathin lens of component A or C is in each case 0.1% to 100%.

3. Spectacle lens according to any of the preceding claims, wherein the ultrathin lens of component A or of component C in each case does not comprise any colorants or in each case does not have photochromic properties.

4. Spectacle lens according to any of the preceding claims, wherein the ultrathin lens of component A comprises at least one functional layer F_{VA} on the front face V_{DA} and/or the ultrathin lens of component C comprises at least one functional layer F_{RC} on the reverse face R_{DC}.

5. Spectacle lens according to Claim 4, wherein the at least one functional layer F_{VA} and/or the at least one functional layer F_{RC} is in each case selected from the group consisting of at least one antireflection layer, at least one electrically conductive or semiconductive layer, at least one antifog layer and at least one clean-coat layer.

6. Spectacle lens according to any of the preceding claims, wherein the at least one functional layer F_{RA} is selected from the group consisting of at least one coloring layer, at least one photochromic layer, at least one polarizing layer and at least one reflection layer.

7. Spectacle lens according to Claim 6, wherein, proceeding from the front face on the object side to the opposite eye-side reverse face, one of the following combinations of the functional layer F_{RA} is present in the sequence specified between components A and B:
component A / photochromic layer / polarizing layer / coloring layer / component B,
component A / photochromic layer / coloring layer / polarizing layer / component B,
component A / photochromic layer / polarizing layer / reflection layer / component B,
component A / photochromic layer / reflection layer / polarizing layer / component B,
component A / photochromic layer / reflection layer / component B,
component A / reflection layer / polarizing layer / coloring layer / component B,
component A / polarizing layer / coloring layer / component B,
component A / reflection layer / polarizing layer / component B or
component A / reflection layer / coloring layer / component B.

8. Spectacle lens according to any of the preceding claims, wherein the at least one functional layer F_{C} is selected from the group consisting of at least one hard lacquer layer, at least one antireflection layer, at least one antifog layer, at least one clean-coat layer and at least one electrically conductive or semiconductive layer.

9. Spectacle lens according to any of the preceding claims, wherein the reverse face of the ultrathin lens R_{DA} of component A comprises a reflection layer as functional layer F_{RA} and the front face of the ultrathin lens V_{DA} of component A does not comprise an antireflection layer or
wherein the front face of the ultrathin lens V_{DA} of component A comprises an antireflection layer as functional layer F_{VA} and the reverse face of the ultrathin lens R_{DA} of component A comprises a photochromic layer as functional layer F_{RA}.

10. Spectacle lens according to any of the preceding claims, wherein the ultrathin lens of component C comprises a coloring layer as functional layer F_{VC} on the front face V_{DC}.

11. Spectacle lens according to any of the preceding claims, wherein the radii of curvature of components A, B and C differ from one another by less than 1 mm.

12. Process for producing a spectacle lens comprising, proceeding from the front face on the object side of the spectacle lens to the opposite reverse face of the spectacle lens, at least components A, B and C, where component A comprises an ultrathin lens, component B comprises a polymeric material and/or at least one mineral glass, component C comprises at least one functional layer F_{C} and/or an ultrathin lens, and the process comprises the following steps:
i. providing an optionally formed ultrathin lens of component A and optionally providing an optionally formed ultrathin lens of component C,
ii. coating the reverse face R_{DA} of the ultrathin lens of component A with at least one functional layer F_{RA},
iii. optionally coating the front face V_{DC} of the ultrathin lens of component C with at least one functional layer F_{VC},
iv. providing a finished spectacle lens of component B comprising a polymeric material or a mineral glass which has a calculated location-dependent refractive index distribution and where optionally the front face V_{B} of the finished spectacle lens has been coated with at least one functional layer F_{VB} and optionally the reverse face R_{B} of the finished spectacle lens has been coated with at least one functional layer F_{RB},
v. bonding the coated reverse face R_{DA} of component A to the optionally coated front face V_{B} of component B and a) bonding the optionally coated reverse face R_{B} to the optionally coated front face V_{DC} of the ultrathin lens of component C or b) coating the reverse face R_{B} of component B with at least one functional layer F_{C},
vi. optionally coating the front face V_{DA} of the ultrathin lens of component A with at least one functional layer F_{VA} and optionally coating the reverse face R_{DC} of the ultrathin lens of component C with at least one functional layer F_{RC},
vii. edging the spectacle lens obtained in step v. or vi. comprising components A, B and C.

13. Process according to Claim 12, in which components A, B and C to be bonded are bonded by means of an adhesive, by means of a bonding method or by means of contact bonding.

14. Process according to either of Claims 12 and 13, wherein components A, B and C to be bonded are bonded to one another by means of an adhesive based on the amine-catalyzed thiol hardening of epoxy resins at a temperature from a range from 20°C to 80°C.

15. Use of an ultrathin lens coated with at least one functional layer on the front face and/or on the reverse face and having an average thickness from a range from 13 µm to 760 µm and a glass composition selected from the group consisting of borosilicate glass, aluminoborosilicate glass and alkali-free borosilicate glass for production of a spectacle lens according to Claim 1.

## Revendications

1. Verre de lunettes comprenant, de la surface avant côté objet du verre de lunettes à la surface arrière opposée du verre de lunettes, au moins
a) un composant A comprenant un verre ultramince,
b) un composant B comprenant au moins un matériau polymère et/ou au moins un verre minéral,
c) un composant C comprenant au moins une couche fonctionnelle F_{C} et/ou un verre ultramince,
**caractérisé en ce que**
le verre ultramince du composant A et le verre ultramince du composant C comprennent à chaque fois une composition de verre choisie dans le groupe constitué par le verre en borosilicate, le verre en aluminoborosilicate et le verre en borosilicate sans alcalin, la composition de verre du verre ultramince du composant A et la composition de verre du verre ultramince du composant C étant identiques ou différentes l'une de l'autre,
le verre ultramince du composant A et le verre ultramince du composant C présente à chaque fois une épaisseur moyenne dans la plage de 13 µm jusqu'à 760 pm, l'épaisseur moyenne du verre ultramince du composant A et l'épaisseur moyenne du verre ultramince du composant C étant identiques ou différentes l'une de l'autre,
la face arrière R_{DA} du verre ultramince du composant A comprend au moins une couche fonctionnelle F_{RA} et/ou la surface avant V_{B} du composant B comprend au moins une couche fonctionnelle F_{VB}, le composant B comprend un produit fini de verre de lunettes, la topographie superficielle des composants A, B et C est à chaque fois plane, sphérique, asphérique, torique ou atorique, la topographie superficielle de la surface avant respective et de la surface arrière respective des composants A et C est identique, la topographie superficielle du composant A est identique ou différente de la topographie superficielle du composant C, la topographie superficielle du composant A est identique à la topographie superficielle de la surface avant du composant B et la topographie superficielle du composant C est identique à la topographie superficielle de la surface arrière du composant B et
le verre de lunettes présente au moins un effet dioptrique et le composant B présente une distribution d'indice de réfraction calculée dépendante de la position.

2. Verre de lunettes selon la revendication 1, l'écart-type relatif de la distribution d'épaisseur du verre ultramince du composant A ou, selon le cas, du composant C étant à chaque fois de 0,1% jusqu'à 100%.

3. Verre de lunettes selon l'une quelconque des revendications précédentes, le verre ultramince du composant A ou, selon le cas, du composant C, à chaque fois ne comprenant pas de colorant ou à chaque fois ne présentant pas de propriétés photochromes.

4. Verre de lunettes selon l'une quelconque des revendications précédentes, le verre ultramince du composant A comprenant au moins une couche fonctionnelle F_{VA} sur la surface avant V_{DA} et/ou le verre ultramince du composant C comprenant au moins une couche fonctionnelle F_{RC} sur la surface arrière R_{DC}.

5. Verre de lunettes selon la revendication 4, ladite au moins une couche fonctionnelle F_{VA} et/ou ladite au moins une couche fonctionnelle F_{RC} étant choisie à chaque fois dans le groupe constitué par au moins une couche antireflet, au moins une couche électriquement conductrice ou semi-conductrice, au moins une couche antibuée et au moins une couche de type Clean-Coat.

6. Verre de lunettes selon l'une quelconque des revendications précédentes, ladite au moins une couche fonctionnelle F_{RA} étant choisie dans le groupe constitué par au moins une couche colorante, au moins une couche photochrome, au moins une couche polarisante et au moins une couche réfléchissante.

7. Verre de lunettes selon la revendication 6, une des combinaisons suivantes de la couche fonctionnelle F_{RA} étant disposée selon la séquence donnée entre les composants A et B, de la surface avant côté objet à la surface arrière opposée côté oeil :
composant A/couche photochrome/couche polarisante/couche colorante/composant B,
composant A/couche photochrome/couche colorante/couche polarisante/composant B,
composant A/couche photochrome/couche polarisante/couche réfléchissante/composant B,
composant A/couche photochrome/couche réfléchissante/couche polarisante/composant B,
composant A/couche photochrome/couche réfléchissante/composant B,
composant A/couche réfléchissante/couche polarisante/couche colorante/composant B,
composant A/couche polarisante/couche colorante/composant B,
composant A/couche réfléchissante/couche polarisante/composant B ou
composant A/couche réfléchissante/couche colorante/composant B.

8. Verre de lunettes selon l'une quelconque des revendications précédentes, ladite au moins une couche fonctionnelle F_{C} étant choisie dans le groupe constitué par au moins une couche de laque dure, au moins une couche antireflet, au moins une couche antibuée, au moins une couche de type Clean-Coat et au moins une couche électriquement conductrice ou semi-conductrice.

9. Verre de lunettes selon l'une quelconque des revendications précédentes, la surface arrière du verre ultramince R_{DA} du composant A comprenant une couche réfléchissante en tant que couche fonctionnelle F_{RA} et la couche avant du verre ultramince V_{DA} du composant A ne comprenant pas de couche antireflet ou alors la surface avant du verre ultramince V_{DA} du composant A comprenant une couche antireflet en tant que couche fonctionnelle F_{VA} et la surface arrière du verre ultramince R_{DA} du composant A comprenant une couche photochrome en tant que couche fonctionnelle F_{RA}.

10. Verre de lunettes selon l'une quelconque des revendications précédentes, le verre ultramince du composant C comprenant sur la surface avant V_{DC} une couche colorante en tant que couche fonctionnelle F_{VC}.

11. Verre de lunettes selon l'une quelconque des revendications précédentes, les rayons de courbure des composants A, B et C différant les uns des autres de moins de 1 mm.

12. Procédé pour la fabrication d'un verre de lunettes comprenant, de la surface avant côté objet du verre de lunettes à la surface arrière opposée du verre de lunettes, au moins les composants A, B et C, le composant A comprenant un verre ultramince, le composant B comprenant un matériau polymère et/ou au moins un verre minéral, le composant C comprenant au moins une couche fonctionnelle F_{C} et/ou un verre ultramince et le procédé comprenant les étapes suivantes :
i. mise à disposition d'un verre ultramince éventuellement façonné du composant A et éventuellement mise à disposition d'un verre ultramince éventuellement façonné du composant C,
ii. revêtement de la surface arrière R_{DA} du verre ultramince du composant A par au moins une couche fonctionnelle F_{RA},
iii. éventuellement, revêtement de la surface avant V_{DC} du verre ultramince du composant C par au moins une couche fonctionnelle F_{VC},
iv. mise à disposition d'un produit fini de verre de lunettes du composant B comprenant un matériau polymère ou un verre minéral, qui présente une distribution d'indice de réfraction calculée dépendante de la position et éventuellement la surface avant V_{B} du produit fini de verre de lunettes étant revêtue par au moins une couche fonctionnelle F_{VB} et éventuellement la surface arrière R_{B} du produit fini de verre de lunettes étant revêtue par au moins une couche fonctionnelle F_{RB},
v. assemblage de la surface arrière revêtue R_{DA} du composant A avec la surface avant éventuellement revêtue V_{B} du composant B et a) assemblage de la surface arrière éventuellement revêtue R_{B} avec la surface avant éventuellement revêtue V_{DC} du verre ultramince du composant C ou b) revêtement de la surface arrière R_{B} du composant B par au moins une couche fonctionnelle F_{C},
vi. éventuellement, revêtement de la surface avant V_{DA} du verre ultramince du composant A par au moins une couche fonctionnelle F_{VA} et éventuellement, revêtement de la surface arrière R_{DC} du verre ultramince du composant C par au moins une couche fonctionnelle F_{RC},
vii. façonnage du verre de lunettes obtenu dans l'étape v. ou, selon le cas, dans l'étape vi., comprenant les composants A, B et C.

13. Procédé selon la revendication 12, dans lequel l'assemblage des composants A, B et C à assembler est réalisé à l'aide d'une colle, à l'aide d'un procédé de liaison ou à l'aide d'un accolement.

14. Procédé selon l'une quelconque des revendications 12 à 13, les composants à assembler A, B et C étant assemblés ensemble à l'aide d'une colle basée sur le durcissement de résines époxy au moyen de thiols avec catalyse par une amine à une température dans la plage de 20°C jusqu'à 80°C.

15. Utilisation d'un verre ultramince, revêtu sur la surface avant et/ou sur la surface arrière par au moins une couche fonctionnelle, présentant une épaisseur moyenne dans la plage de 13 µm jusqu'à 760 µm et présentant une composition de verre choisie dans le groupe constitué par le verre en borosilicate, le verre en aluminoborosilicate et le verre en borosilicate sans alcalin, pour la fabrication d'un verre de lunettes selon la revendication 1.
